(19) Europäisches Patentamt

European Patent Office

Office européen des brevets

(11) EP 0 669 758 B1

(12) EUROPEAN PATENT SPECIFICATION

(45) Date of publication and mention
of the grant of the patent:
**08.03.2000 Bulletin 2000/10**

(51) Int Cl.⁷: **H04N 5/262**, G06T 15/00

(21) Application number: **94925627.5**

(22) Date of filing: **05.09.1994**

(86) International application number:
**PCT/JP94/01462**

(87) International publication number:
**WO 95/07590 (16.03.1995 Gazette 1995/12)**

(54) **TIME-VARYING IMAGE PROCESSOR AND DISPLAY DEVICE**

VERARBEITUNGS-UND ANZEIGEVORRICHTUNG FÜR ZEITLICH VARIABLE BILDER

PROCESSEUR D'IMAGES VARIANT DANS LE TEMPS ET DISPOSITIF D'AFFICHAGE

(84) Designated Contracting States:
**DE FR GB IT**

(30) Priority: **06.09.1993 JP 22136393**
**09.12.1993 JP 30947393**
**24.12.1993 JP 32872193**

(43) Date of publication of application:
**30.08.1995 Bulletin 1995/35**

(73) Proprietor: **KABUSHIKI KAISHA OH-YOH**
**KEISOKU KENKYUSHO**
**Ohta-ku, Tokyo 145 (JP)**

(72) Inventors:
• **NAKAMURA, Toru**
**Tochigi 329-27 (JP)**
• **KUWASHIMA, Shigesumi**
**Tokyo 152 (JP)**

(74) Representative: **Skone James, Robert Edmund**
**GILL JENNINGS & EVERY**
**Broadgate House**
**7 Eldon Street**
**London EC2M 7LH (GB)**

(56) References cited:
**EP-A- 0 252 215**      **EP-A- 0 447 712**
**EP-A- 0 583 060**      **JP-A- 2 153 406**
**JP-A- 3 282 710**      **JP-A- 5 165 921**
**JP-A- 5 183 808**      **JP-A- 6 105 231**
**JP-A- 61 196 680**      **JP-A- 62 110 106**
**US-A- 4 965 753**

• **IEEE/AIAA 7TH DIGITAL AVIONICS SYSTEMS
CONFERENCE, 13 October 1986 - 16 October
1986 FORT WORTH, TEXAS, US, pages 346-350,
SCOTT S. FISHER 'Virtual interface
environment'**
• **ACM TRANSACTIONS ON INFORMATION
SYSTEMS, vol. 11, no. 3, July 1993 pages
197-218, G. W. FITZMAURICE ET AL. 'Virtual
reality for palmtop computers'**

**Description**

This invention relates to a device used for editing captured images of moving objects. This is used, for example, for broadcasting or motion-analysis of captured images of athletes or players which are then transformed into an arbitrary time base or an arbitrary spatial location. By using these edited images, it is possible to compare competitions from different occasions. It is also possible to transform the images captured from the location where the capturing devices are set out, to alternative spatial locations. Furthermore the device allows a moving observer to view an image with a projector, etc.

In the description, the term moving images refers not only to real time captured images but also to sequences of images which are played back in a time interval which is different from that of the actual movement. For example, in capture-by-frame images the image is first recorded by capturing the targeted object which is moving slowly in a certain time interval. The images are then played back in a time interval that is different from the capturing time interval. These capture-by-frame images can be treated equivalently to the moving images captured in real-time, by editing images in the time interval different from the capturing time interval. Also, the term moving images includes the images which are captured while changing the spatial location of one still image.

When analysing athletes by using a VTR, in order to compare athlete A and athlete B, sometimes multiple images are displayed on a screen simultaneously. In this case, when using a conventional VTR, images are controlled in frame units such as time-code. Then by adjusting the beginning time and synchronizing them and playing back the image on multiple VTRs, it has been possible to display these images on the same display and compare the motion of multiple athletes.

In sports like field and track or swimming, the athletes move around in a wide area. Accordingly, the relative position of individual athletes is often lost when an image of an individual athlete is captured and enlarged. In order to view multiple athletes, it is therefore necessary to capture the complete area of movement. This results in a smaller view of the individual athletes which is not suitable for motion analysis.

However, capturing a wide range so that certain marks are always in sight still results in problems when comparing the positions of two athletes using multiple images. This arises because the relation of positions depends on the viewing position. Furthermore, if a zoom lens is used, it has not been possible to obtain the data of angle of view and therefore determine the relative distance of multiple athletes through the images.

Moreover, sometimes it is necessary to compare the multiple images of the same athletes captured at a different time by displaying them on the same screen. But in such a case, it has been difficult to compose and view the images taken on different occasions.

When training for sports, it is possible to see multiple athletes and compare them by editing the images. When comparing with a rival or with an athlete who has a record, however, the athlete can not compete while comparing. Accordingly, he does not feel that he is actually competing with a rival because the athlete against which the comparison is made is not actually competing next to the him.

Also, when adjusting a pace in the competition, the subject athlete must decide the pace by himself whilst capturing an image.

Similarly, when generating an image using special effects in TV programs or movies, the actor must play his role in an empty studio while imagining the image added after editing.

In the case described above, the athlete or the actor, who is the targeted object can recognize the virtual objects that are added after edition by getting them into the image by using virtual reality techniques. This requires the actor to be equipped with special devices such as goggles to display the image.

The objective of the present invention is to solve these problems and to offer an image processing device for processing moving images that enables images representing the movement of multiple moving objects to be edited in a different space-time compared to images projected to an arbitrary space-time.

Another objective of the present invention is to provide moving images processing devices that can compare the images of athletes on separate courses by displaying them on the same screen and placing them in parallel. Alternatively images of the same athlete captured at different occasions can be displayed on the same screen by placing the images in parallel for example.

Another objective of the present invention is to provide a processing device that can generate the realistic moving image by utilising three-dimensional background data. The image of the moving object and the background image are controlled depending on the parameters of the virtual camera based on the above three-dimensional data.

Also, another objective of the present invention is, when capturing a game where players can overlap, to transform the image to the image captured from an arbitrary spatial location or from an arbitrary time base.

Also, another objective of the present invention is, when composing an image in the three-dimensional space captured with multiple capturing means, to provide a moving images processing device that can output the natural edited image by transforming the image that is most suitable for the virtual camera's location, etc.

Moreover, another objective of the present invention is to provide a moving images processing device that can transform the image of multiple moving objects captured with multiple capturing means, to an image where the positional relation of multiple moving objects are adjusted to the positional relation seen from the virtual camera.

Moreover, another objective of the present invention is to provide an image display device that enables the subject observer to operate while recognizing the virtual object that is added after editing, without being equipped with such special devices.

Moreover, another objective of the present invention is to provide an image display device that enables to display a moving image which actually represents other people and is visible for the observer, and enables the observer to compete together while viewing the image of others, and enables to give presence to the observer.

Moreover, another objective of the present invention is to provide an image display device that enables the observer to get into the virtual image and to play roles and perform naturally by displaying the image that can be seen from the observer's three-dimensional location.

EP-A-0503060 discloses a method and system for creating an illusion of three-dimensionality. The method and system generate a plurality of two-dimensional images of a virtual scene which are displayed on a display surface. The images generate the appearance of distortion-free natural 3D to an observer whose eye point moves between different positions relative to the display. At each of the plurality of eye point positions, an image of the scene is presented in correct 3-dimensional perspective for that position and with motion parallax to allow the observer, by moving relative to the display, to see behind and around displayed objects.

IEEE/IAA Seventh Digital Avionics Systems Conference Digest 1986, Pg. 346-350 describes a head mounted wide angle stereoscopic display system for providing a virtual interface environment. The system is controlled by operator position, voice and gesture and provides a multisensory interactive display environment in which a user can virtually explore a 360° synthesized or remotely sensed environment.

US-A-4965753 describes a three-dimensional image processing system which reconstructs real time display images from scene photographs. The system permits real time projection of multiple digitised photographic databases into the eye space of an unconstrained observer. From the photographic databases, the system forms a composite output image as well as line of sight range overlay which permits easy expansion into a multi-channel architecture and to provide line of sight and range envelopes around the observer system.

EP-A-0252215 describes a method for simultaneous presentation of at least two events such as ski runs, bob runs, skating or jumping events. The direct presentation is accompanied by the live results of a further prestored result of the same kind through electronic switching procedures for timewise and/or spacial parallel display. The arrangement used can comprise a two lever display derived through video cameras for location. These can have camera leads associated with the central control as well as a monitor.

EP-A-0447712 describes a motion analysing/advising system which picks up motions of a subject, analyses them and manages address data at points of the image picked up according to predetermined trigger conditions. The result is displayed in graphic images or stored images in comparison with reference images. An evaluation of such comparison is then output to enable measurement under flexible trigger conditions. The motions of the subject are analysed on the basis of quantative data in a manner easily understandable by the viewers.

According to a first aspect of the present invention, we provide a device for processing moving images comprising:

a capturing means which captures two-dimensional images of one or more moving objects, which generates three-dimensional real-world spatial data of said moving objects, and which outputs the captured two-dimensional images together with the three-dimensional spatial data; and,
an image edit means which processes the captured two-dimensional images using said three-dimensional spatial data, characterized in that said image edit means comprises:
primary transform means which generate a respective transformed image for each captured two-dimensional image, the transformed image having the appearance of the respective captured two-dimensional image when projected from said capturing means on to a virtual projection plane defined in the space where said objects are moving and defined in accordance with the three-dimensional spatial data; and,
secondary transform means which generate a further transformed image from each transformed image, the further transformed image having the appearance of a virtual image of the one or more moving objects that would have been captured by a virtual capturing means located in a spatial location or a time base different from that of the capturing means.

It is a technique which transforms the image of the captured moving objects to the image captured with a virtual capturing means which is in the arbitrary space or on arbitrary time (virtual camera), and measure the three-dimensional data of the moving targeted objects and transform the image of the captured moving objects to the image equivalent to the image captured with a virtual camera which is in the arbitrary space-time by projecting the image of the captured moving objects based on the above three-dimensional data. This image transformation can be achieved by solving the matrix which is obtained by the relationship of the capturing means and the transformation means and the three-dimensional location of the virtual camera.

A second aspect of the present invention is, relating to the moving image display device of moving objects moving in the three-dimensional space, wherein the moving image processing device may provide capturing means to capture one or more moving objects and output them with the three-dimensional spatial data of said moving objects, and the image edit means to process the above output images using said three-dimensional spatial data, wherein said image edit means provides image transformation means to project the image of moving objects captured based on said three-dimensional spatial data, on one virtual projection plane (also designated as transformation plane in the following) in the space where said moving objects are moving, and transform the projected image to the image equivalent to the image captured with the virtual capturing means that exists in the different spatial location or in the different time base from that of said capturing means, wherein the image transformation means include a calculation means to transform the above image in one image unit, and for said transformation plane, a means to use the transformation plane in the different spatial location as said moving objects move.

Also, multiple capturing means may be provided, as well as a means to define either a plane or a curved surface in the three-dimensional space where the angles of view of said multiple capturing means are crossing, for said transformation plane.

Also, the transformation plane may be a flat plane and can be a plane perpendicular to the optical axis of one of the cameras of capturing means or to the optical axis of the camera of the above virtual capturing means.

Also, the transformation plane may be a flat plane and can be a plane crossing the optical axis of one of the cameras of capturing means and the camera of the above virtual capturing means, with the angle made by the optical axes of the above two cameras within a fixed range.

Also, the transformation plane can be a flat plane which passes on the captured moving objects.

Also, the transformation plane can be a curved surface and can include a means to transform the image of moving object projected on the curved surface to the image on a flat plane.

Moreover, the transformation plane can be a prespecified solid surface in the three-dimensional space where the captured moving objects are moving.

In the present invention's aspect, in order to get the image of the virtual camera apart from the camera that captured the targeted object which is a moving object, a plane moving in the three-dimensional space may be used for transforming the image. The transformation plane is moving in the three-dimensional space based on the movement of the targeted objects, the capturing camera, or the virtual camera. Also, in such a case, multiple transformation planes are used if necessary. Because of this, the space-time map on which the capturing camera's image is projected is expanded to three dimensions, and multiple image transformation planes exist in the three-dimensional space, and the image projected on them is transformed to the virtual camera's image. In such a case, the image is transformed to that of the virtual camera in one image (one field, or one frame) unit, and is edited as the moving image, because moving objects are moving in the three-dimensional space.

The three-dimensional positional data of the targeted object which is moving in the three-dimensional space is obtained by using one or more tracking heads. Each tracking head can be obtained precisely of its location, the direction, the posture, and the angle of view.

In the image captured with a camera, the specified point can be obtained with the image processing device. Because the parameters such as the angle of view, the location of projection center, and the direction of capture element are known, if the same point on the targeted object, which is the observing target, is captured with one or more camera heads, it is possible to calculate the location of the point in the three-dimensional space. The image is edited based on the three-dimensional data and the image.

In the edit operation, the image seen from the viewpoint that is different from the camera used in capturing (the virtual camera's image) can be obtained. To get the virtual camera's image, it is necessary to transform the captured image with coordinates transformation using three-dimensional data. This transformation of image is equivalent to projecting the captured image on a plane in the space (transformation plane) and capturing the image with the virtual camera. The present invention makes it possible to transform the image of the targeted object which is moving in the three-dimensional space without using constraint planes by finishing the transformation within the period of one field and by using multiple transformation planes and by moving the transformation plane based on the three-dimensional data (using different transformation plane sequentially).

When transforming the image of moving object moving in the three-dimensional space to the virtual camera's image as described above, consider how to select the transformation plane. Generally, when capturing with multiple capturing cameras, theoretically, it is possible to use any plane or any curved surface in the three-dimensional space, on which the field of view of the multiple capturing camera are crossing, for the transformation plane. However, from the point of view of image processing, it depends on the characteristics of the moving object, and the plane which passes the representative point of the moving object of the observing target should be used. Also, by using a plane which is perpendicular to the optical axis of one of the capturing cameras or the virtual camera as the transformation plane, calculation is simplified because the number of parameters for image transformation is decreased. However, depending on the location of one of the capturing cameras and the virtual camera, if the image only from the one capturing camera is considered, and if the optical axis of the capturing camera and the optical axis of the virtual camera cross vertically, it is impossible to use the plane which is perpendicular to the optical axis of the capturing camera as the transformation plane. In such a case, the transformation plane of which angle is about half the angle made by the optical axis of the capturing camera and the optical axis of the virtual camera, should be used.

A third aspect of the present invention is to compose the image, which is equivalent to the image captured with the virtual capturing means, with the background image based on the three-dimensional spatial data, wherein the image editing means may include the image transformation means to project the image of moving objects captured based on said three-dimensional spatial data and transform the projected image to the image equivalent to the image captured with a virtual capturing means that exists in the different spatial location or in the different time base from that of said capturing means, and the background-image memorizing means to memorize the background image of the three-dimensional data apart from said moving objects, and the background-image composition means to generate the background image which depends on spatial or time base parameters of the camera of said virtual capturing means based on said background image,
wherein said image transformation means include the calculation means to perform said image transformation in one image unit, and for said transformation plane, the means to use the transformation plane in the different spatial location as said moving objects move.

Here, the background image memorizing means may include a means to memorize the tracks of the moving objects as the background image, and the background-image composition means include a means which can compose this memorized tracks with moving image of other moving objects as the background image of other moving objects.

Because the background image of the moving object is also in the three-dimensional space, the background image has also three-dimensional data. Thus, the background image is memorized after composing with the solid model as the three-dimensional spatial data, and is composed with the image of the moving object after transforming it based on the virtual camera's parameters such as the location and the angle of view. In such a case, in the image capturing such as the Alpine events, the track of the first athlete is memorized as the background image and is composed with the next athlete's image as the background image. Also, by memorizing the image of the targeted moving object at a certain occasion, it is possible to compose it as the background image of the moving object which is moving in the different occasion.

A fourth aspect of the present invention is, relating to the moving images processing device in the case where multiple moving objects are captured with multiple capturing means, wherein the image editing may provide the image transformation means to project the image of moving objects captured based on the three-dimensional spatial data on one transformation plane in the space where said moving objects are moving, and transform the projected image to the image equivalent to the image captured with a virtual capturing means that exists in the different spatial location or in the different time base from that of said capturing means, wherein this image transformation means include the calculation means to transform said image in one image unit, and for said transformation plane, the means to use the transformation plane in the different spatial location as said moving objects move, and said capturing means include the means to capture one of the multiple moving objects with each capturing means, and said image editing means include the means to compose the images of captured multiple moving objects based on the positional relations seen from the location of the virtual camera of said virtual capturing means.

Here, the means to compose based on the positional relation can provide a table that specifies the positional relation for said virtual capturing means of multiple targeted objects in one image unit, and the means to output the image in the front and mask the image in the back by referring to the table.

Also, the image editing means may include the means which can extract the targeted moving object from the background in the image captured with the capturing means.

Also, when the image of multiple targeted objects captured with multiple capturing cameras is transformed to the image of one virtual camera, the positional relation of the targeted objects changes as they move. In such a case, by obtaining the positional relation of the targeted objects from the virtual camera's location at every field beforehand, it is possible to transform it to the image that reflects the positional relation of the targeted objects when transforming to the virtual camera's image. In other words, the part of the image which is hiding behind is masked, and front part of the image is outputted. So the image seen from the virtual camera is edited so that it matches the positional relation of the targeted objects.

The fifth aspect of the present invention is, relating to the moving images processing device which switch the images from multiple capturing means and transform them to the image equivalent to the image captured with the virtual capturing means, wherein the image editing may provide the image transformation means to project the image of moving objects captured based on the three-dimensional spatial data on one transformation plane in the space where said moving objects are moving, and transform the projected image to the image equivalent to the image captured with a virtual capturing means that exists in the different spatial location or in the different time base from that of said capturing means, wherein this image transformation means may include the calculation means to transform said image in one image unit, and for said transformation plane, the means to use the transformation plane in the different spatial location as said moving objects move, and said multiple capturing means provide the means to capture the same moving object, and said image transformation means include the means to select the image suitable for the condition of the camera of said virtual capturing means and transform it while switching the image outputted with multiple capturing means depending on the condition of capturing.

Here, it is desirable to select the image of the capturing means which has the most similar condition of the capturing condition of the camera of the virtual capturing means.

Also, it is possible to include the means to switch the output image of the multiple capturing means depending on the angle which is made by the moving object and the camera of the virtual capturing means.

Also, if the moving object, which is the target for capturing, is in a certain spatial region, it is possible to use at least one image of the capturing means which is capturing the spatial region where the moving object exist even if one of said capturing means is capturing the spatial region, and is at a location distant from the virtual camera.

Also, it is desirable to set hysteresis for switching images.

The sixth aspect of the present invention is, relating to the moving image processing device which switches the images from multiple capturing means and transforms them to the image equivalent to the image captured with a virtual capturing means, wherein multiple intermediate images of the capturing means may be generated while switching the image, and the image transformation means may include means to assume the averaged image of the multiple images outputted by said multiple capturing means as the image on the transformation plane, and transform it to the image captured with the camera of the virtual capturing means.

When the image of targeted objects captured with multiple capturing cameras is transformed to the image of the virtual camera, it is transformed by using the image of capturing camera that is most suitable for image transformation, depending on the location of the targeted object or the location of the virtual camera. Or it is transformed to the image of the virtual camera by using the averaged image of multiple capturing cameras. When switching the images of this multiple capturing cameras, it is necessary to have hysterisis on switching to decrease the number of switching in the intermediate location or to make the switching seem natural. Or in the intermediate location, the intermediate image of multiple capturing cameras is generated, and the image from multiple capturing cameras is transformed.

Furthermore, the curved surface can be used as the transformation plane in some sports events. For example, in such as track events or speed skating, when the plane that is vertical to the ground is used as the transformation plane, the transformation plane is sometimes a curved surface. However, the curved surface is defined beforehand, therefore it is possible to project on such a curved surface and to capture with the virtual camera. In such a case, by using the image that has the figure of curved surface extended to the direction of a straight line, it is possible to transform the image of the events accompanying curved surface to the image of the events of one-dimensional direction.

In the seventh aspect of the present invention, in the moving images processing device which provide the capturing means to capture one or more moving objects and output them with the three-dimensional spatial data of said moving objects and the image editing means to process the output image of the above capturing means based on said three-dimensional spatial data, the moving image processing device is provided wherein said image editing means may provide the image transformation means to project the image of the moving objects captured based on the three-dimensional spatial data and transform the projected image to the image equivalent to the image captured with the virtual capturing means which exists in the different spatial location or in the different time-base from said capturing means, and the above image transformation means can include the calculation means to conduct said image transformation in one image unit and the image which use one flat plane where said moving objects are moving as said transformation plane.

The moving image processing device in the seventh aspect is a technique which relates to the case when the moving object is moving on one two-dimensional flat plane (constraint plane), and assuming the invention of the second point of view as the general example, it can be considered as the process for the image of the moving object which has one restricted moving flat plane.

Said moving image editing means may provide a means of generating space-time map images that generates space-time map images which are made by projecting the images of captured moving objects to a space-time map that corresponds to the space-time in which said moving objects are moving, based on said three-dimensional spatial data and time data of said images, and a means of image transforming that transforms the space-time map images of said moving objects to the images captured on a different occasion or from a different spatial location.

Furthermore, it may provide an image recording means to record images of moving objects captured by the capturing means providing three-dimensional spatial data of the moving objects and time data on said image, and the moving image editing means can include a means of editing by processing the images of the moving objects which records this image recording means or the images of said capturing means.

Also, in the space-time mapping images of multiple moving objects on the same space-time map, it can include a means of transforming moving objects on the separated spatial location to the captured images after moving its spatial location on the space-time map.

Also, it can include a means of transforming the space-time map images of multiple or the same moving objects captured at the different time, by matching the time base and positioning them on the space-time map so that they are on the different spatial location.

Also, it is desirable to include a means of capturing or composing the background image of the moving object separately from the captured moving object itself, and composing this background image with the transformed image of the space-time map image of said moving object.

Also, it is possible to display the movement status with the known pace distribution, in the background image.

Also, it is possible to include a means of composing the image of virtual moving objects that have distinct moving characteristics, separately from the captured moving objects with the image of the moving object that is transformed by said image transformation.

Also, the image transformation means may include a means of transforming images of moving objects on the space-time map to the images captured by moving a camera toward one direction smoothly.

Furthermore, it may provide an image recording means to record images of moving objects captured by the capturing means providing three-dimensional spatial data of the moving objects and time data on said image, and the image editing means can include a means of editing by processing the images of the moving objects which records this image recording means or the images of said capturing means.

The image transformation means can include a means of, for the images recorded in the above image recording means, projecting the images which were read at the different time interval from the real time interval or the images with reversed read-out sequence to the transformation plane, and transforming the projected image to the image captured at the different time interval or from the different spatial location comparing when it was projected.

Also, the image transformation means can include a means of transforming one image of the moving object projected on the transformation plane to the images captured by moving the spatial location relative to said moving objects.

The image transformation means described above should provide memory on which the images of the captured moving object are written in one image unit, and the means to transform the images by reading the image data in the memory by using a read-address which is calculated by using the coordinate location of the capturing means and the coordinate location of the transformation plane and the coordinate location of the virtual capturing means.

The capturing means to capture moving objects gives us the captured images as well as the three-dimensional spatial data of the moving objects. Both three-dimensional spatial location data of the moving objects and the time data as well as the image are memorized.

The images are edited by editing the images captured by the capturing means or the images recorded inside the recording means, based on the three-dimensional data of the moving objects to be edited and the time data of said images. In this image editing process, first the moving objects are projected to the space-time map which consists of three axes of a three-dimensional space and time base, based on the three-dimensional data and the time data. For example, when the athletes are moving on the same plane, this can be recognized as the image projected from the position of the camera that captured the images of the individual athletes to a common plane.

Next, the images projected on this space-time map are transformed as if they were captured from the arbitrary space-time location. This is equivalent to the process of composing one united image by capturing the images that captured each athlete and projected them to the same plane, with the virtual camera which is in another spatial location.

In this way, it is possible to generate edited images that are targeting the moving object itself by processing the image projected (expanded) on the space-time map with its time base or spatial location changed, and it is possible to compare the athletes in a distant position by displaying them on the adjacent course and to compare the athletes captured at the different time by displaying these images in parallel in real-time.

The eighth aspect of the present invention is relating to an image display device that displays the image seen from a moving observer, wherein the device may provide a measurement means to measure the observer's three-dimensional data, an image generation means to generate the image equivalent to the image that is seen from the observer's viewpoint based on the three-dimensional data of the measured observer, and an image transformation means to transform the generated image to the image seen from said observer's viewpoint when displaying with said image display means that is in the different location from said observer.

The ninth aspect of the present invention is, using the image that is actually captured, relating to the image display device that displays it for an observer, in an image display device which provides a capturing means to capture one or more moving objects and outputs them with their three-dimensional data, an image transformation means to transform these moving objects' image to the image equivalent to the image capturing the image projected on a transformation plane in the space where said moving objects are moving with a virtual capturing means that exists in the different spatial location or in the different time base from said capturing means, and an image display means to display the transformed image of the moving objects,
characterized in that said image display means is the image display means to display the image of said moving objects for a moving observer, and it provides a measurement means to measure the three-dimensional data of said observer, and said image transformation means may include a first transformation means to transform the image equivalent to the image seen from said observer who sees the image of said moving objects displayed for the observer based on the three-dimensional data of the observer measured with said measurement means, and a second transformation means to transform the image of the transformed image equivalent to the image seen from said observer who sees the image projected with the projecting means that is in the different location from the observer.

Furthermore, the measurement means to measure the three-dimensional data of the observer can be the device that captures an observer and measures the three-dimensional data of the observer.

Also, the image display means can be composed with one or more projectors provided with a universal head and a screen to which the projectors project. Also, the image display means can be one or more display devices. Also, multiple projectors can be switched based on the observer's location.

Also, the image display means may include a movable screen and provides the measurement means to measure the three-dimensional data of the screen, and the image transformation means can transform the image that is displayed based on the three-dimensional data of the screen measured with this measurement means.

Also, based on the observer's three-dimensional data, a means for generating sound effect can be provided. Also, the image displayed for said observer can be the image that captures one or more targeted objects.

Moreover, the image displayed for said observer can be images generated by computer graphics.

According to the invention of the first and the seventh aspects described above, it is possible to measure the three-dimensional data of moving targeted objects and to output them with their images and to transform them to the image of a virtual camera that exists in the arbitrary space-time based on the three-dimensional data. When assuming this virtual camera to be the viewpoint of a moving observer, if the observer's three-dimensional data is known, then the three-dimensional data of the virtual camera is defined, then by reversing the procedure that transforms the image of the virtual camera to the image of the projector assuming a screen to be the transformation plane, it is possible to generate an image of the moving object that must be seen by the observer (the virtual camera) by using the image that captures the targeted object, and to project or display it, contrary to when capturing. The invention of the eighth and the ninth point of view is, applying the technique of the virtual camera of the first and the seventh, to generate and display the image seen from the moving observer based on the three-dimensional data of the observer.

First, when capturing a moving object, by using a universal head and a camera with high-precision zoom lens in order to measure the location of the targeted object, the three-dimensional data of the targeted object is obtained by using the direction of the camera and the captured image. By using the universal head and the lens, it is possible to project the captured image, contrary to capturing with a camera, by using a moving image projector (e.g., a video projector) instead of a camera. Also, to obtain the virtual camera's image in the edit operation, it has been possible to project the image on the virtual transformation plane and to transform it equivalently to capturing again in real-time.

Using these techniques, it is possible to transform and actually project the image on the screen in the space as the image in which the virtual object is seen when it is seen from the observer's direction if the screen's location and the projector-head's location and the location in the space of the virtual object of the captured image are known. Because the projected image is calculated with the three-dimensional data calculated in real-time and is transformed in real-time and is projected as a moving image, the virtual object seems as if it is moving, for the observer.

By these edit operation and the display by the projection, it is possible to give an observer the impression of presence.

[Brief description of the drawings]

[Fig.1]
    A figure showing the measurement of the jump events of the first embodiment of the present invention.

[Fig.2]
    A block diagram showing the component of the image processing device of the first embodiment of the present invention.

[Fig.3]
    A figure illustrating the transformation of the captured image to the virtual camera's image through the transformation plane.

[Fig.4]
    A figure illustrating the coordinates transformation from the camera head to the virtual camera.

EP 0 669 758 B1

[Fig.5]
A figure showing the coordinates transformation.

[Fig.6]
A block diagram showing the component of the image processing unit for coordinates transformation.

[Fig.7]
A figure showing the appearance when capturing the targeted object with two camera heads.

[Fig.8]
A figure illustrating the area composed by the field of view of the two camera heads. (a): an example when the field of view is the same, (b): an example when the field of view is different.

[Fig.9]
A figure illustrating the case when the plane perpendicular to the optical axis of one of the capturing camera is used for the transformation plane.

[Fig.10]
A figure illustrating the case when the transformation plane which is in the half angle of the capturing camera and the virtual camera is used. (a): an example when the transformation plane which is parallel to the half angle of the capturing camera and the virtual camera is used, (b): an example when the transformation plane which is perpendicular to the half angle of the capturing camera and the virtual camera is used.

[Fig.11]
An example when the transformation plane passing the jumping athlete is used.

[Fig.12]
A figure showing an example when displaying two jumping athletes overlapped.

[Fig.13]
A figure showing an example of the solid model of the background used in the slalom.

[Fig.14]
A figure showing an example when the ski's track is used for the background and when the athlete's image is used for the background.

[Fig.15]
A figure illustrating the transformation when multiple players are tracked with the different tracking heads of the embodiment.

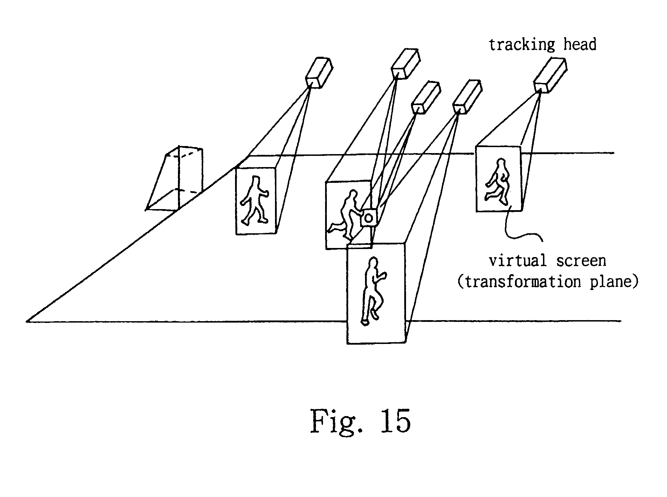

[Fig.16]
A block diagram of the image edit unit used for the embodiment in Fig.15.

[Fig.17]
A figure showing the example of images from three heads and their image control signal of the embodiment in Fig.15.

[Fig.18]
A figure showing the relation of virtual camera's location and the virtual camera's image transformed from three heads' image of the embodiment.

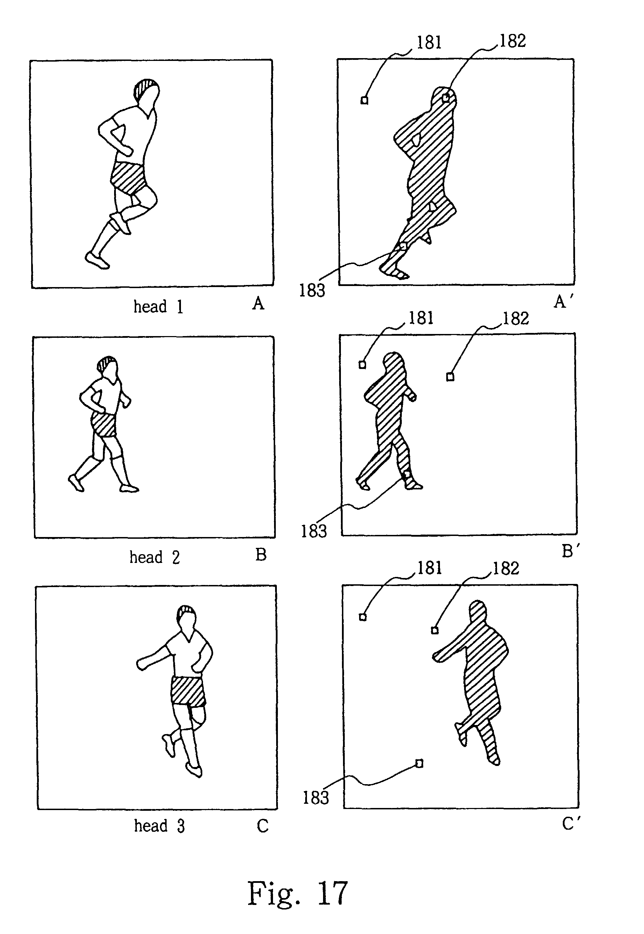

[Fig.19]
A figure showing the example of image composed from three virtual cameras' image in Fig.17.

[Fig.20]
A figure illustrating the example of the priority table and its output image of the embodiment.

[Fig.21]

A figure illustrating the example when the curved surface is used for the transformation plane to the targeted object moving on the curved lane.

[Fig.22]

A figure illustrating the example capturing the athlete running on the linear lane.

[Fig.23]

A figure illustrating the appearance when the image of which the curved surface is used as the transformation plane is extended to straight.

[Fig.24]

A figure illustrating the appearance when transforming the athlete running on the curved lane to the image running on the linear lane, where the flat plane is used for the transformation plane.

[Fig.25]

A figure illustrating the case when transforming the image tracked and captured with two heads to the image of the moving virtual camera of the fifth embodiment. (a): an example when the virtual camera is on the same side of the head, (b) an example when the virtual camera is on the opposite side of the head.

[Fig.26]

A figure showing the change of coefficient k when intermediate images are generated at the intermediate area of the two heads when switching images of the embodiment.

[Fig.27]

A figure illustrating the angle of the transformation plane and the head when switching images. (a): when the angle of the two heads and virtual camera's transformation plane is different, (b); when the transformation plane of the two heads and of the virtual camera are common.

[Fig.28]

A figure illustrating the case when switching images of heads based on the area where the targeted object exists.

[Fig.29]

A block diagram showing the component of the moving image processing device of the embodiment of the present invention.

[Fig.30]

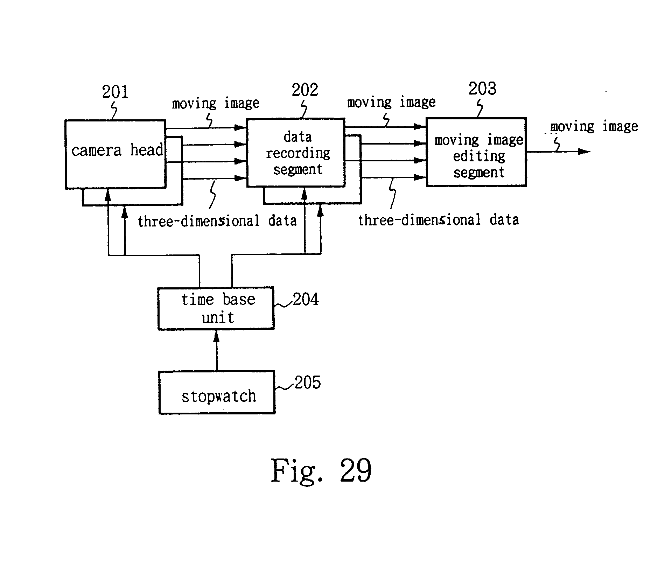

A figure showing an appearance of capturing the moving image that is the target for processing of the embodiment in Fig.29.

[Fig.31]

A figure illustrating the space-time map of the present invention.

[Fig.32]

A figure showing the principle of projecting the image captured with a camera head on the space-time map of the present invention.

[Fig.33]

A figure illustrating the principle of capturing the image projected on the space-time map with a virtual camera of the present invention.

[Fig.34]

A figure illustrating the cut-and-paste of the space of the space-time map of the embodiment.

[Fig.35]

A figure illustrating the appearance of capturing the targeted objects which is in the different course with a virtual camera of the embodiment.

[Fig.36]

A figure illustrating the space-time map of the images which occur on a different occasion of the embodiment.

[Fig.37]

A figure illustrating the cut-and-paste of the space of the space-time map on a different occasion of the embodiment.

[Fig.38]

A figure illustrating the time-gap of the video signal from different camera heads.

[Fig.39]

A figure illustrating the appearance of adjusting the time base of the image of a different time base with a virtual camera into the space-time map.

[Fig.40]

A figure showing the appearance of capturing before-turn and after-turn with a camera head.

[Fig.41]

A figure illustrating the cut-and-paste of the space into the space-time map of before-turn and after-turn.

[Fig.42]

A figure showing the appearance of capturing before-turn and after-turn with a virtual camera.

[Fig.43]

A block diagram showing the configuration of hardware of the moving image edit segment.

[Fig.44]

A figure illustrating the raster-scan of the output image.

[Fig.45]

A figure showing an example of a camera displaying the space-time map of the embodiment.

[Fig.46]

A figure illustrating the space-time map that include the background image of the embodiment.

[Fig.47]

A figure showing an example of the image composed with the background image of the embodiment.

[Fig.48]

A figure illustrating the space-time map illustrating the composition of the background image of the embodiment.

[Fig.49]

A figure showing an example of the image composed with the background with blurring of the embodiment.

[Fig.50]

A figure illustrating the space-time map creating the background image with grids of the embodiment.

[Fig.51]

A figure showing an example of the screen composed with the background of grids and the computer graphics of the embodiment.

[Fig.52]

A figure illustrating the image composition of the embodiment.

[Fig.53]

A figure showing an example of the image on the space-time map captured with the camera of the embodiment.

[Fig.54]

A figure showing an example of the image transformed to the image with a virtual camera which is moving smoothly of the embodiment.

[Fig.55]

A figure showing the relation of the projected image and a projector and the principle observer of the present invention.

[Fig.56]

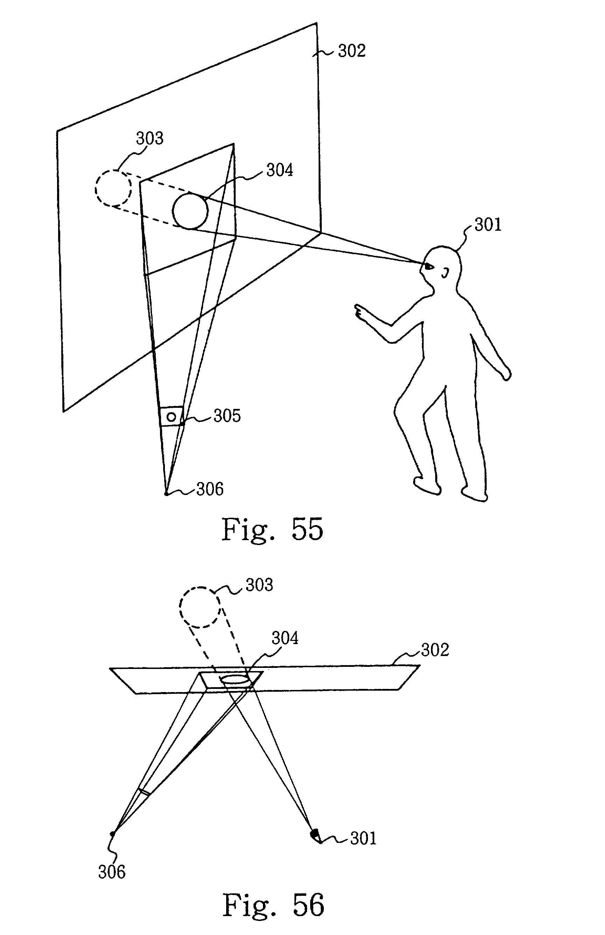

A figure showing the Fig.56 seen from above.

[Fig.57]

A figure illustrating the principle of the transformation of the captured image to the image seen from the observer and the projection of it on the screen.

[Fig.58]

A figure illustrating the first embodiment in which the virtual object is displayed on the screen with a running observer.

[Fig.59]

A figure showing the image which captured the observer.

[Fig.60]

A figure showing the image of the virtual object and the background with an observer.

[Fig.61]

A figure showing a block diagram of the image display device of the embodiment.

[Fig.62]

A figure illustrating the appearance which shows multiple overlapped virtual objects seen by the observer of the embodiment.

[Fig.63]

A figure showing the example of the projected images seen from the observer of the embodiment.

[Fig.64]

A figure showing the example of projecting the virtual object with multiple projectors based on the observer's movement of the embodiment.

[Fig.65]

A figure showing the example of projecting the virtual object while moving the projector based on the observer's movement of the embodiment.

[Fig.66]

A figure showing the appearance of a projector head used for the embodiments of the present invention.

[Fig.67]

A figure showing the projection area generated when projected with two projectors of the embodiment.

[Fig.68]

A figure showing the example of projecting the virtual object with a screen installed along the oval lane on which the observer is moving of the embodiment.

[Fig.69]

A figure showing the example of projecting the virtual object, while using the plane on which the observer is moving as a screen of the embodiment.

[Fig.70]

A figure showing the example of installing a screen which surrounds the observer, and projecting the virtual object on the screen while measuring the observer through the screen of the embodiment.

[Fig.71]
A figure showing the example of projecting the virtual object on the moving screens which have mechanism for mobility of the embodiment.

[Fig.72]
A figure showing the example of projecting the virtual object on the screen which moves with the observer of the embodiment.

[Fig.73]
A figure illustrating the calibration of the measurement camera head of the embodiment.

[Fig.74]
A figure showing the example of measuring the three-dimensional data of the fixed screen with the measurement camera head of the embodiment.

[Fig.75]
A figure showing the appearance of adjusting the projector heads of the embodiment.

[Fig.76]
A figure showing the system which display the observers in the distant place simultaneously of the embodiment.

[Fig.77]
A figure showing the example of capturing an actor while projecting the virtual object near the actor of the embodiment.

[Fig.78]
A figure showing the example where the observer is taking on the stereoscopic-goggles of the embodiment.

[Fig.79]
A figure showing the example where multiple observers are taking on the stereoscopic-goggles of the embodiment.

[Fig.80]
A figure showing the example of displaying the virtual object on the device which combines multiple CRTs of the embodiment.

[Fig.81]
A figure showing the example of displaying the virtual object on the movable flat display of the embodiment.

[Fig.82]
A figure showing the example of displaying the virtual object on the rotatable CRT device of the embodiment.

[THE BEST FORM TO IMPLEMENT THE INVENTION]

Next, the embodiments of the present invention is described referring to drawings.

An example where jump events in skiing are captured and An example where jump events in skiing are captured and transformed to the image captured with the virtual camera based on the captured image is used for explanation.

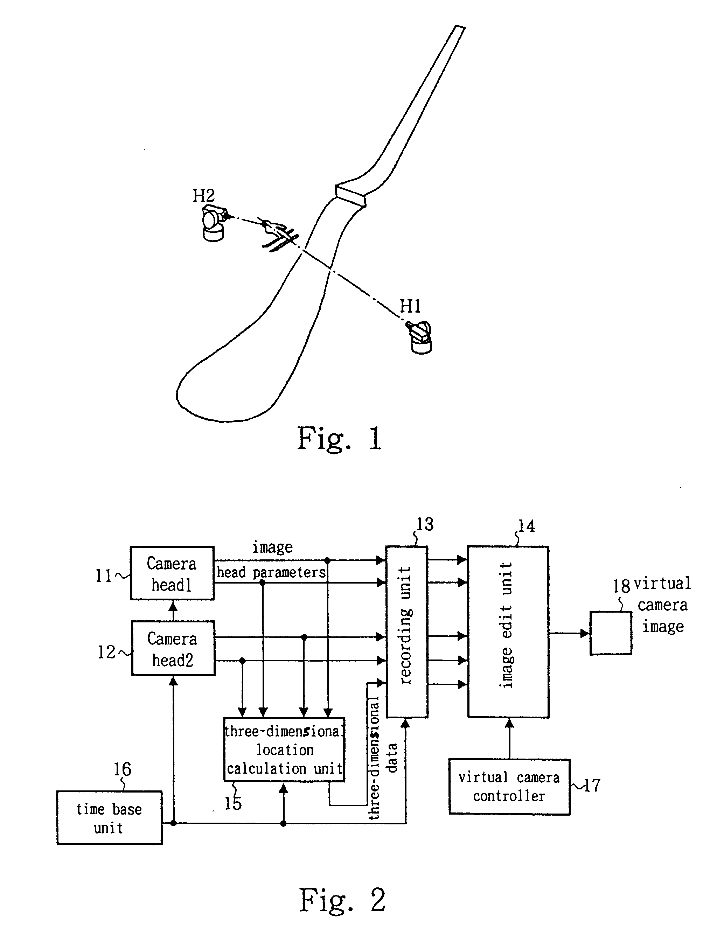

If the target is the jump events in skiing, for example, two camera heads H1, H2 for measuring location and editing are used as shown in Fig.1. Beforehand, the two heads must be calibrated and the parameters such as spatial location must be measured. Fixed items such as the jump-stage must be measured for their positional relation beforehand. Also, each head should be programmed to track the athlete's helmet, for example. By setting up an area for searching near the starting location in a runway, each head can begin tracking automatically when an athlete passes the area. During the targeted athlete for measuring is in the view of the two heads, the three-dimensional location is measured in the field period of the camera.

**EP 0 669 758 B1**

In addition to measuring the location, images are obtained from each head: if two heads are used, two images are obtained at the same time. Also, data such as the direction and the angle of view of each head is obtained at the same time. These data are recorded on a recording device if necessary. Because an object such as a helmet can be automatically extracted from the image, it is possible to calculate the three-dimensional coordinates automatically during the measurement if two heads can be correlated automatically. However, if it is difficult to extract such a point automatically, it is possible to obtain the three-dimensional coordinates if it is seen from the two heads and can be correlated. In such a case, because correlation should be made by human help, the image should be recorded and then played back slowly for correlation. In addition to images, the parameters of a head such as direction are recorded, therefore it is possible to calculate the three-dimensional location of any point if it is in the image and it is possible to correlated it in the two images. Numerical data is three-dimensional, therefore it is possible to display the track with the viewpoint selected regardless of the location of the tracking head.

On the contrary, since images are obtained only from the viewpoints of camera heads, it is necessary to transform the image in order to obtain the image from any viewpoint. Fig.2 shows a block diagram of the hardware for image transformation. The basic structure of the image processing device shown in Fig.2 is similar to the structure of the moving image processing device in the Japanese Patent Application No. 221363 (1993) (published 20/03/1995 under JP-A-07-079382) which discloses processing the image using a constraint plane. However, the structure shown in Fig. 2 differs in the point that it is structured to process targeted objects moving in the three-dimensional space and their background image.

The image processing device shown in Fig.2 provides: two camera heads 11, 12 that capture the targeted object athlete, the recording unit 13 that record the image outputted from the camera heads 11,12 and the parameters of the heads, the image edit unit 14 that edits the image captured with the virtual camera based on the image outputted from the recording unit 13 and the three-dimensional data and outputs the virtual camera image 18, the three-dimensional location arithmetic unit 15 that calculates the three-dimensional location based on the image outputted from the camera head 11, 12 and the parameters of the heads and sends them to recording unit 13, the time base unit 16 that sends standard time data to the camera head 11, 12, the three-dimensional location arithmetic unit 15, and the recording unit 13, the virtual camera controller 17 that sends parameters of the virtual camera to the image edit unit 14.

The operation of this image processing device is explained. The images obtained during measurement are recorded in the recording unit 13 with the parameters of the camera heads 11, 12 and its three-dimensional data if necessary and are send to the image edit unit 14. On the other hand, the parameters of the virtual camera such as the viewpoint and the angle of view which is necessary for output are inputted from the virtual camera controller 17. Based on these data, the image edit unit 14 transforms the image from the camera head and outputs the image of a virtual camera 18 which image is like the image captured with the virtual camera which did not exist during the actual measurement.

That is, in the present invention, in the moving images processing device which provides the camera head 11, 12: the capturing means to capture one or more moving objects and output them with the three-dimensional spatial data of said moving objects, and the image edit unit 14: the image edit means to process the output image from the capturing means camera head 11, 12 using said three-dimensional spatial data, as the characteristics of the first point of view of the present invention, the image edit unit 14 provides the image transformation means to project the image of the moving objects captured based on the three-dimensional spatial data on a transformation plane in the space where said moving objects are moving, and transform the projected image to an image equivalent to the image captured with a virtual camera which exists in a spatial location or on a time base different from that of the camera head 11 and 12, wherein the image transformation means include the arithmetic means to transform the image in one field unit and said transformation plane uses the plane in the different spatial location as said moving object moves.

The principle of the image transformation in the present invention is described as follows:

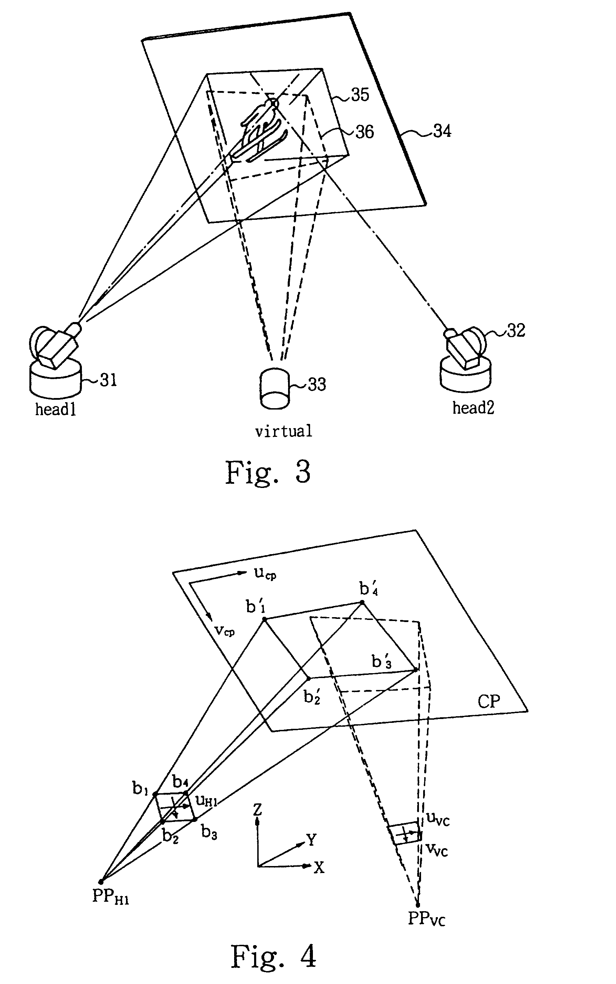

The image is transformed through the transformation plane 34 in the space as shown in Fig.3. Actually, the transformation is processed electronically (image processing using computer), and it is like projecting the captured image on the screen in the space with a slide projector, then capture it with another camera again. For example, when the image captured with the head 1 (camera head 31) is transformed, it is projected in the opposite direction from the same location and with the same angle of view as captured on the transformation plane 34. Apart from it, the process is to capture the image projected with the virtual camera 33 which has a desired viewpoint and a desired angle of view. For the transformation plane 34 in the space, a flat plane or curved surface can be used for image transformation in the same way.

If a curved surface is used as the transformation plane, comparing to a flat plane, the number of parameters needed for calculation will dramatically increase. However, the image obtained by the transformation is not the image captured with the actual camera which is in the location of the virtual camera 33. Therefore it is basically impossible to get the same image as the image captured actually, even if the transformation is complicated. Furthermore, if the calculation becomes complicated, the influence of errors becomes large and results in the system vulnerable to noise. Thus, normally the transformation plane should be a flat plane. The location in the space of this flat plane is described later.

Because images are obtained at each successive field, the transformation must be finished within the period of a field. Therefore, if the field that will be transformed is decided, then the image is considered to be one still image, and the camera's positional relation and the location of the transformation plane is fixed to the location specified to that field. Because the targeted object is moving, the camera head that is tracking it is also moving, and the virtual camera may also be moving. It takes a certain period to capture the image with the camera, and also it takes time to display the output of the virtual camera's image on the display device, so strictly speaking, an image can not be handled as one plane. However, obtaining the image by transformation is not processed strictly, so no problems occur in the process at units of fields. However, the time in a field should be defined for the positional relation of cameras and the positional relation of the transformation plane. In the normal CCD cameras, the end of a field should be used because photo-electron is accumulated at the latter field due to shuttering. Furthermore, if multiple not-synchronized camera images are used, it is necessary to control the absolute time based on the time data from the time base unit 16.

Fig.4 illustrates the principle of image transformation that use transformation plane. In this example, the case where the image from the head 1 (camera head 31) is transformed is used for explanation. To make calculation for image transformation easy, the transformation plane is a flat plane and the camera is a pin-hole model. What we need is the virtual camera's image. That is, if a certain point on the virtual camera's image is specified with the local coordinates on the image, the corresponding point in the local coordinates on the image of head 1 (camera head 31) must be obtained. On the other hand, the camera head, image transformation plane, and the virtual camera are in the three-dimensional space, and their positional relation is obtained in the global coordinates.

First, considering the image transformation, it becomes a projection from one plane to another plane. To make the transformation linear, parameter variable H is added to increase the dimension by one. Let the coordinates axes of the image of head 1 uH1, vH1, and the coordinates axes of virtual camera's image uVC, vVC. uCP and vCP is the coordinates axes on the transformation plane. The transformation that project the image of head 1 on the transformation plane, using a parameter variable, is expressed in the next expression (1).

uCP and vCP are obtained by calculating the parameter variable as in the expression (2). In the same way, the transformation that project the virtual camera's image on the transformation plane is expressed in the expression(3).

Using these expressions, the relation of virtual camera's image and the image of head is expressed in the expression(4) and expression(5).

$$
\begin{pmatrix} h_{H1} \cdot u_{CP} \\ h_{H1} \cdot v_{CP} \\ h_{H1} \end{pmatrix} = \begin{pmatrix} A_{H11} & A_{H12} & A_{H13} \\ A_{H14} & A_{H15} & A_{H16} \\ A_{H17} & A_{H18} & 1 \end{pmatrix} \begin{pmatrix} u_{H1} \\ v_{H1} \\ 1 \end{pmatrix}
$$

$$
= A_{H1} \begin{pmatrix} u_{H1} \\ v_{H1} \\ 1 \end{pmatrix} \qquad\qquad \text{---- (1)}
$$

$$u_{CP} = \frac{A_{H11} \cdot u_{H1} + A_{H12} \cdot v_{H1} + A_{H13}}{h_{H1}}$$

$$= \frac{A_{H11} \cdot u_{H1} + A_{H12} \cdot v_{H1} + A_{H13}}{A_{H17} \cdot u_{H1} + A_{H18} \cdot v_{H1} + 1}$$

$$v_{CP} = \frac{A_{H14} \cdot u_{H1} + A_{H15} \cdot v_{H1} + A_{H16}}{h_{H1}}$$

$$= \frac{A_{H14} \cdot u_{H1} + A_{H15} \cdot v_{H1} + A_{H16}}{A_{H17} \cdot u_{H1} + A_{H18} \cdot u_{H1} + 1}$$

$$\quad (2)$$

$$\begin{pmatrix} h_{vc} \cdot u_{CP} \\ h_{vc} \cdot v_{CP} \\ h_{vc} \end{pmatrix} = B_{VC} \begin{pmatrix} u_{vc} \\ v_{vc} \\ 1 \end{pmatrix} \quad\quad (3)$$

$$\begin{pmatrix} h_{C1} \cdot u_{H1} \\ h_{C1} \cdot v_{H1} \\ h_{C1} \end{pmatrix} = A^{-1} \cdot B \begin{pmatrix} u_{vc} \\ v_{vc} \\ 1 \end{pmatrix}$$

$$= C_{C1} \begin{pmatrix} u_{vc} \\ v_{vc} \\ 1 \end{pmatrix} \quad\quad (4)$$

$$h_{C1} = \frac{h_{VC}}{h_{H1}} \quad\quad (5)$$

$$u_{H1} = \frac{u_{VC} \cdot c_{C17} + v_{VC} \cdot c_{C12} + c_{C13}}{u_{VC} \cdot c_{C17} + v_{VC} \cdot c_{C18} + 1}$$

$$v_{H1} = \frac{u_{VC} \cdot c_{C14} + v_{VC} \cdot c_{C15} + c_{C16}}{u_{VC} \cdot c_{C17} + v_{VC} \cdot c_{C18} + 1} \quad\quad (4)'$$

The transformation matrix of the head and the virtual camera can be calculated if the transformation plane and the relation of camera head and the relation of the virtual camera, respectively, is defined. For example, the transformation matrix of the camera head can be calculated from the 4 points on the image of the camera head, for example, the 4 corners: b1, b2, b3, and b4, and the corresponding 4 points on the transformation plane: b1', b2', b3', and b4'.

In the same way, the matrix for the virtual camera can be calculated if four or more corresponding points are obtained.

The problem occurs when calculating the location of the corresponding point on the image and the transformation plane. This calculation is done only for once for one field because the positional relation is assumed to be fixed during one field. Also, it is calculated in the three-dimensional global coordinates, and then transformed to each local coordinates. PPH1h indicates the projection center of the camera, and PPVC indicates the projection center of the virtual camera, and the transformation plane is shown by CP. Each plane is defined by one point (the origin on the plane in the local coordinates is desirable) and the normal vector. These correspond to the location of the principal point of the image-formation plane of the positive of the camera (the location of the target corresponding to the projection center of the capturing element) and the direction of the principal axis of the lens.

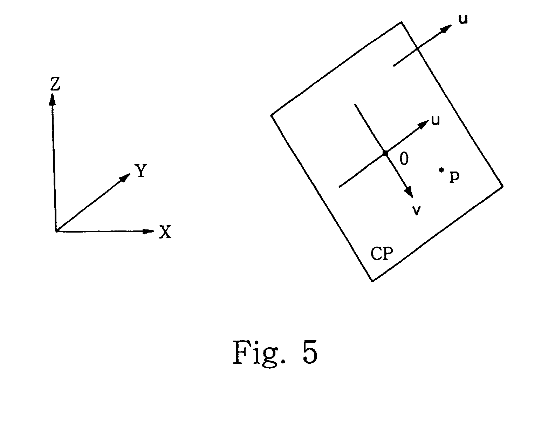

The coordinates are transformed as follows. As in Fig.5, consider the local coordinate system uv on the global coordinate system XYZ and on a plane CP. Any point P on the plane is expressed as $(x_P, y_P, z_P)$ in the global coordinate system. The location of the origin in the local coordinate system is $(x_0, y_0, z_0)$ in the global coordinate system. And let the direction vector in the global coordinate system of the u-axis and v-axis in the local coordinate system $(x_u, y_u, z_u)$, $(x_v, y_v, z_v)$, respectively. Then these vector cross orthogonally with the normal vector n (expression(9)). By using this, any point P on the plane can be expressed as the expression(6), and the expression(7) together. The inverse is shown as the expression(8).

$$
P = \begin{pmatrix} x_P \\ y_P \\ z_P \end{pmatrix} = \begin{pmatrix} x_0 \\ y_0 \\ z_0 \end{pmatrix} + \begin{pmatrix} x_u \\ y_u \\ z_u \end{pmatrix} \cdot u_P + \begin{pmatrix} x_v \\ y_v \\ z_v \end{pmatrix} v_P
$$

$$
= \begin{pmatrix} x_u & x_v & x_0 \\ y_u & y_v & y_0 \\ z_u & z_v & z_0 \end{pmatrix} \begin{pmatrix} u_P \\ v_P \\ 1 \end{pmatrix} \quad\quad \text{------ (6)}
$$

$$
P = D \begin{pmatrix} u_P \\ v_P \\ 1 \end{pmatrix} \quad\quad \text{------ (7)}
$$

$$
\begin{pmatrix} u_P \\ v_P \\ 1 \end{pmatrix} = D^{-1} \begin{pmatrix} x_P \\ y_P \\ z_P \end{pmatrix} \quad\quad \text{------ (8)}
$$

$$0 = \mathbf{u} \cdot \mathbf{n} = \begin{pmatrix} x_u \\ y_u \\ z_u \end{pmatrix} (x_n \cdot y_n \cdot z_n)$$

$\mathbf{u}$ is a u-axial unit vector

$$0 = \mathbf{v} \cdot \mathbf{n} = \begin{pmatrix} x_v \\ y_v \\ z_v \end{pmatrix} (x_n \cdot y_n \cdot z_n)$$

$\mathbf{v}$ is a v-axial unit vector

$$\left. \qquad \right\} \text{ ——— (9)}$$

The above matrix D is the coordinates transformation matrix. To obtain the value of the matrix, it is profitable to begin by obtaining from the location in the global coordinates of the origin and the point on the uv-axis in the local coordinates. In the camera's image, u-axis and v-axis cross orthogonally, however, the angle can be set arbitrarily on the transformation plane. If the coordinates transformation matrices are calculated for each plane, the coordinates transformation can be done. In order to obtain the corresponding point of the camera's image and the transformation plane, it is necessary to obtain the point on which the line passing the projection center and a certain point on the positive image-formation plane, and the transformation plane are crossing in the global coordinate system. By doing the calculation above, it is possible to obtain the image transformation matrix CC1 in the expression(4). This calculation is needed once for each field and should have high precision, therefore, the calculation should be done in the software. Image transformation should be done for each pixel in the virtual camera's image, however, once the image transformation matrix is defined, it is necessary to calculate the multiplication and division of a matrix and a vector, which is easily done with the hardware.

By using the expression(4), it is possible to obtain the location of a pixel in the camera head's image that corresponds to any pixel in the virtual camera's image. If the location does not exist in the actual image, the image corresponding to the pixel in the virtual camera's image does not exist, which means it is on the background.

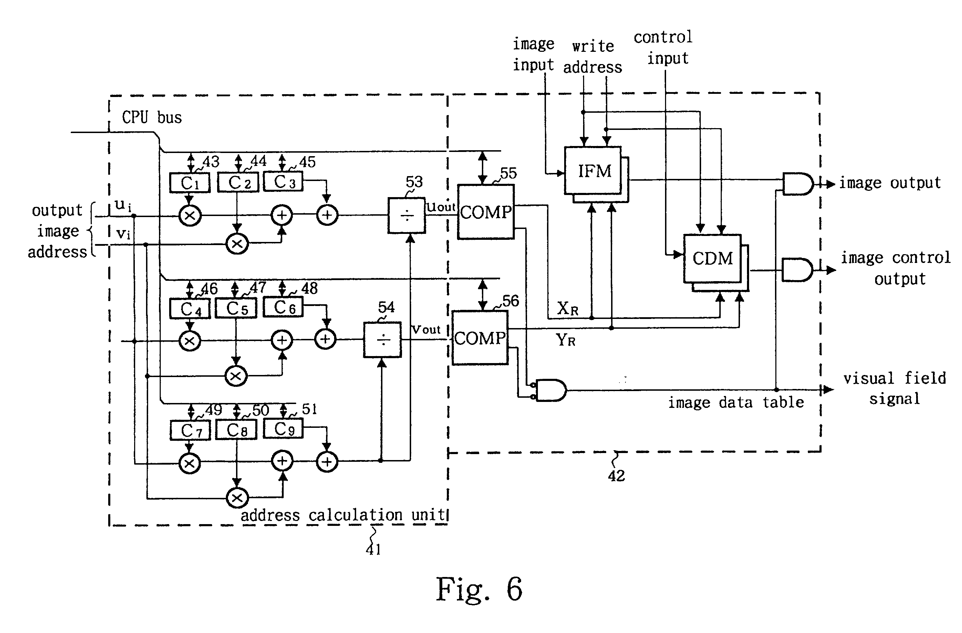

The circuit block diagram of the actual image transformation is shown in Fig.6. It has two parts: the address calculation unit 41 and the image data table 42. The above matrix calculation corresponds to the image's location, or the address. This calculation is done by the address calculation unit 41, and it calculates the corresponding location in the input image by using the pixel's location in the output image. The image data on which location was calculated is extracted using the image data table 42. The address calculation unit 41 provides the coefficient registers 43-51 that store coefficients for coordinates transformation, the multiplier that multiplies these coefficients with the address of the output image, the adder that adds the result of the multiplication, and the divider. And the image data table 42 provides the comparators 55, 56 that compare the address output, the image memory IFM where the image is inputted in units of fields, and the image control memory CDM that store data for image control.

The above operation is described below. The input image is a image captured with a camera head. This image is written on the image memory IFM for one field sequentially. The write address at this moment corresponds to the location of the capturing element, so the write address is not shown in the figure. However, it is possible to generate it by using the counter which is synchronizing with the capturing element. Also, if it is possible to extract the targeted object in the image, its data can be written as the control data on the image control memory CDM. The image control memory CDM is the two-dimensional memory that corresponds to each pixel with the image data. For example, by writing 1 if the pixel is the targeted object, and 0 if it is background, it is possible to extract the figure of the targeted object with only one bit. In the case where the targeted object can not be extracted clearly, the image control memory CDM can have multiple bits that enables blurring image if necessary. That is, the output of the image control memory CDM is used for extracting the targeted object if multiple images are overlapped, or background image is overlapped.

On the other hand, address calculation is done as follows. If the three-dimensional spatial locations of the camera head, transformation plane, and the virtual camera are defined, the expression(4)' can be defined. This calculation is done by software, where each coefficients of the transformation matrix CC1 is calculated for every field. The calculated coefficients C1~C8 are written on the coefficient registers 43-51 through the CPU bus. In the expression(4)', the part 1 can be modified as the coefficient register 51 in the hardware if necessary. The output address, or the location of the virtual camera's pixel can be generated with the address counter (not shown in the figure) that is synchronizing the output.

The output address is calculated using the value of coefficient register with the multiplier and the divider.

Moreover, the parameter variables transform the address by using the divider 53, 54. Due to dividers, the calculation can not be done if the coefficients have an error. Such coefficients should be removed by software beforehand. It is necessary to investigate if the calculated address range is within the field of view of the input image by using the comparator 55, 56 for each axis. If it is within the range, IVF, the signal indicating that it is in the field of view, will be 1. This signal is outputted as it is, or masked for the image data and the image control data for not outputting the nonexistent data.

By doing as described above, it is possible to obtain the virtual camera's image. And considering the transformation to the virtual camera's image for only one field, it is virtually equivalent to the Japanese Patent Application No.221363(1993) where the constraint plane is used for a transformation plane. Also, the structure for extracting the targeted object from the background is described in the previous application.

Furthermore, if the constraint plane is used, the transformation plane can be chosen apart from the constraint plane. Therefore, it is possible to use it in the same way for the application where the constraint plane exists.

Here, in the present invention, the problem occurs in the spatial location of the transformation plane. That is, in the present invention, the targeted object is moving in the three-dimensional space, and the transformation plane itself can move, contrary to the constraint plane which does not move. Then, the explanation for setting the transformation plane is given as follows.

Because the transformation plane does not exist actually but is a virtual plane, it can be anywhere in terms of the expression unless it is not perpendicular to the camera head or the virtual camera (imaging plane of the camera). But the obtained image depends on the transformation plane severely, therefore its location should be considered much. Because the image of the targeted object is required, the transformation plane should be set on the location relevant to the targeted object.

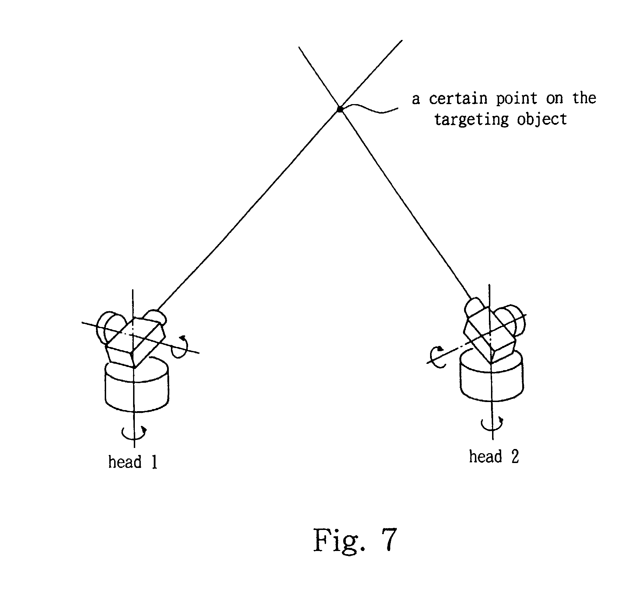

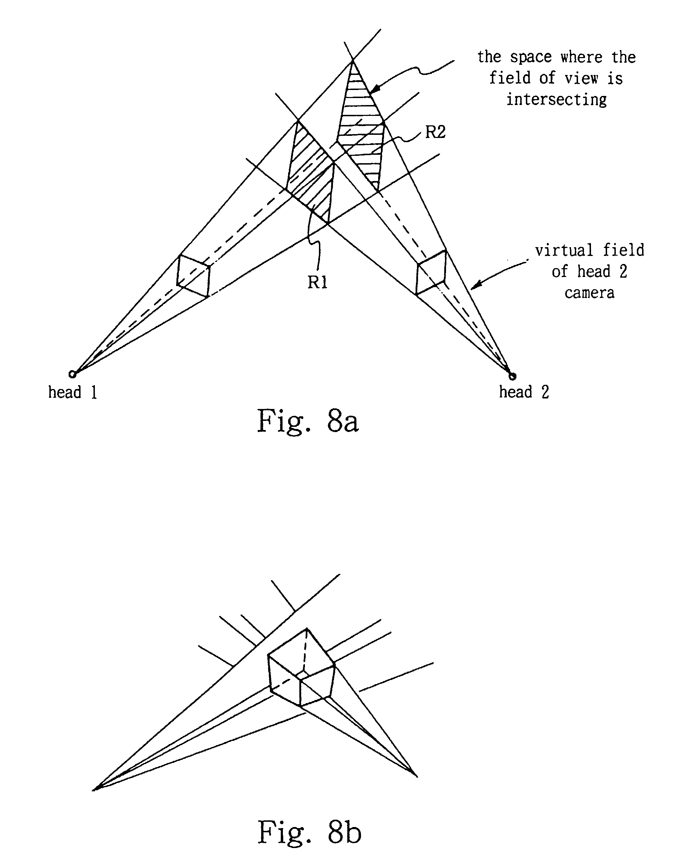

For example, when the targeted object is tracked with two heads: head 1, head 2 as shown in Fig.7, there is a common space where the two camera's field of view are crossing as shown in Fig.8. The transformation plane can be a plane that include the plane in the space where the field of view of multiple measuring heads are crossing. The space where its three-dimensional coordinates can be obtained is the space common to the field of view of two or more heads. For example, if the angle of view of the two heads are the same, the common field of view is the space surrounded by four planes shown in Fig.8(a). And among the four planes, the plane that can be used for the transformation of head 1's image is either 21 or 22. If the angle of view of the two camera heads are different, the common field of view is like the figure shown in Fig.8(b). However, the range of the transformation plane can not be restricted to the planes consisting the space, but can be the plane including this range.

And either of the two planes can be used. Thus, the use of the surface of the space constructed by the common field of view of two camera heads as the transformation plane is suitable for the competition where multiple targeted objects exist. When such a plane is used and the field of view is larger than the targeted object, the transformation plane and the targeted object separate far away, which is not suitable for transformed image.

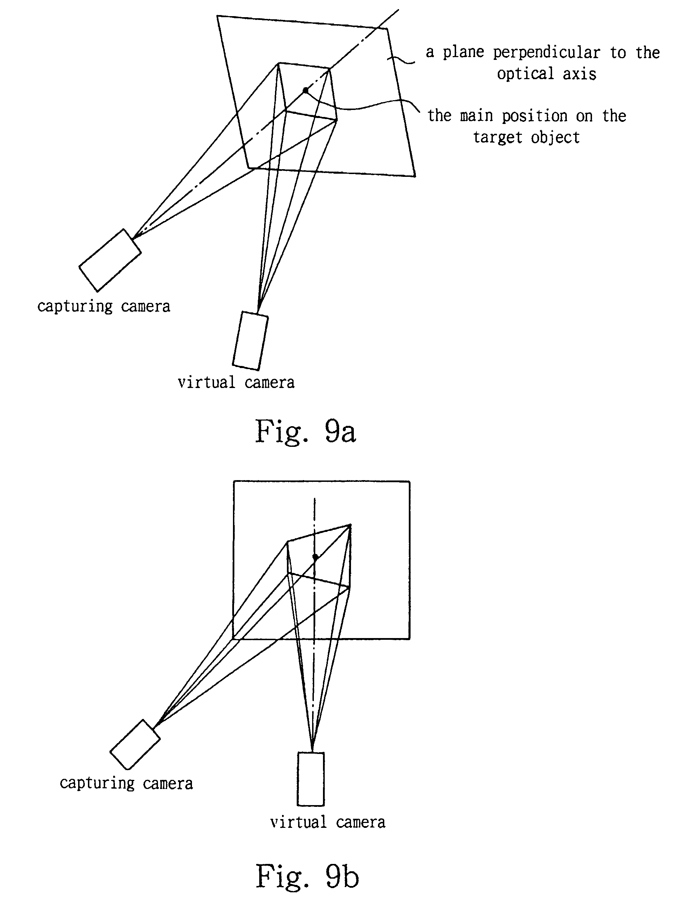

In such a case, the plane like the one shown in Fig.9 is used. In Fig.9, the plane which passes a certain point (e.g. the targeted point for auto-tracking with the measurement camera head), and is perpendicular to the optical axis of the camera is used. In Fig.9(a), the plane perpendicular to the optical axis of the capturing camera head is used. In Fig.9(b), the plane perpendicular to the optical axis of the virtual camera is used. Thus by using the plane perpendicular to the optical axis of either camera, the transformation calculation becomes simple. Especially, if the capturing camera and the virtual camera is in the near location, not only the calculation is simple but natural image can be obtained.

If the capturing camera and the virtual camera is in the distant location, the image will be distorted. It is possible to select the transformation plane which enables to decrease the distortion a little.

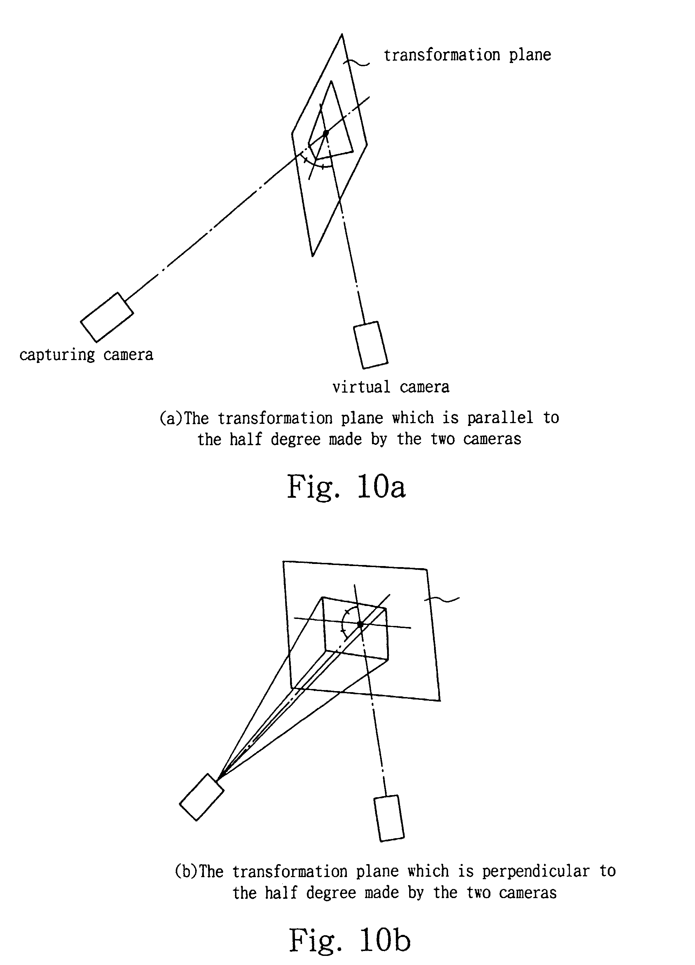

Fig.10 shows the example. The lines which connect the principal point of the targeted object and the projection center of each camera cross with the angle defined by the positional relation of both cameras. Let the projection plane a plane passing the principal point, and the lines that connect with each camera have a constant angle. For example, in Fig.10(a), the plane which includes the bisector of the angle made by the capturing camera and the virtual camera, and which is perpendicular to the plane defined with the three points: the principal point, both cameras' projection centers, is used as the transformation plane. In such a case, the image is transformed upside down because the screen is captured from the back. Also, as shown in Fig.10(b), the plane perpendicular to the plane in the Fig.10(a) can be used. In such a case, the image is not turned over. In Fig.8, not only the transformed image is distorted unnaturally, but the transformation itself can not be done if the virtual camera is in some location because the transformation plane is defined with only the positional relation of the two measuring camera heads (capturing cameras). Likewise, in Fig. 9, the same kind of problem can occur because the location is defined by only one camera. In Fig.10, it is possible to prevent the case where it is impossible to transform because the positional relation of both input and output is used for transformation. Therefore the image has relatively less distortion.

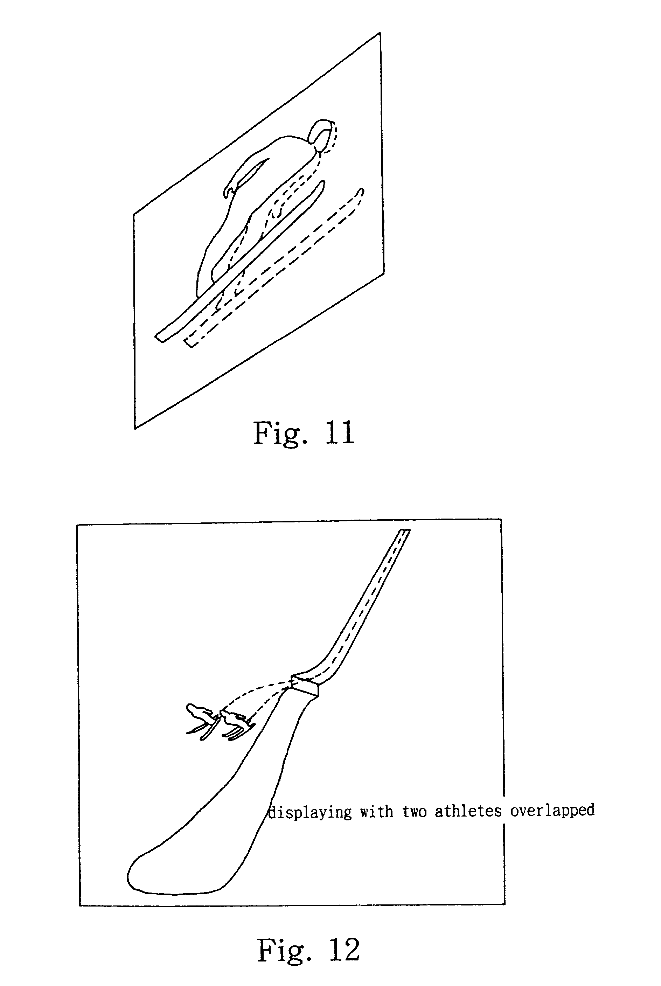

Depending on the situation, various angles can be used in the transformation plane in addition to the one shown in Fig.10. When multiple measurement points on the targeted object are used, it is possible to obtain the data of the posture of the targeted object. Also, it is possible to change the angle of the transformation plane by using the data of the posture of the targeted object. Also, if the targeted object's shape is partially known, it is possible to choose the angle that makes the shape look natural. For example, in the ski jumping contest, by using the transformation plane that penetrates the athlete vertically as shown in Fig.11, the image becomes as if shrunk horizontally and becomes natural if the virtual camera is near in the front of the athlete.

Also, if the targeted object's shape is known, the surface of the solid object can be used for transformation plane. This transformation requires rendering technique used in computer graphics, and projection on the transformation plane is not used. Then the image is put on the surface of the solid object, and is captured with the virtual camera. It requires considerable calculation to obtain the image, however, the image will become relatively natural.

The above described selection method of the transformation plane can be changed depending on the targeted object, or can be switched automatically depending on the positional relation of the targeted object and the camera. Also by obtaining multiple images by the multiple transformations, then by synthesizing them, one image can be generated. In such a case, multiple images are simply overlapped. Also if the targeted object is large, or can be divided, or the image can be divided, it is possible to use the different transformation method for each part of the targeted object, or for each region of the image, or for the targeted object and background.

By using the image transformation methods described above, it is possible to obtain the image from any capturing location when the image of the targeted object is needed. Therefore, for example, it is possible to overlap the images on the same display by using ski jumping data which are measured in the different days. This image gives the feeling as if the athletes are jumping at the same time. In such a case, the location of the measuring camera head can be different for each measurement. Also it is possible to display the overlapped data of the different jump stages on the different places. Moreover, observing location can be chosen freely, and can move with the athlete. Fig.12 is an example image of it, where two athletes are overlapped and their tracks are remained, and viewed from the above of the seats.

When two athletes are displayed simultaneously, one virtual camera is used, but two images are used. If the location of the camera head used for capturing is different for each athlete, the different transformation planes should be used for each one. The case where multiple transformation planes are used is described in detail in the third embodiment.

Furthermore, in the above embodiment, the image transformation is done in one field unit, but any one image unit can be used for image processing, and it can be one image unit that is different from the frame unit, or interlace scanning method.

[The second embodiment]

Unlike the jumping events, in the slalom, or in the great slalom, the athlete moves three-dimensionally. And the positional relation of poles is important. Therefore, for example, extracting only the athlete and displaying it is almost meaningless, and the background becomes important. In the location measurement where a constraint plane is used, because the targeted object is moving only in a two-dimensional plane, the background can be treated as two-dimensional and as a pattern on the constraint plane. However, if the targeted object is moving in three-dimensional space, the method is not natural and the following method is used.

If the background does not move usually, it is possible to be measured three-dimensionally beforehand.

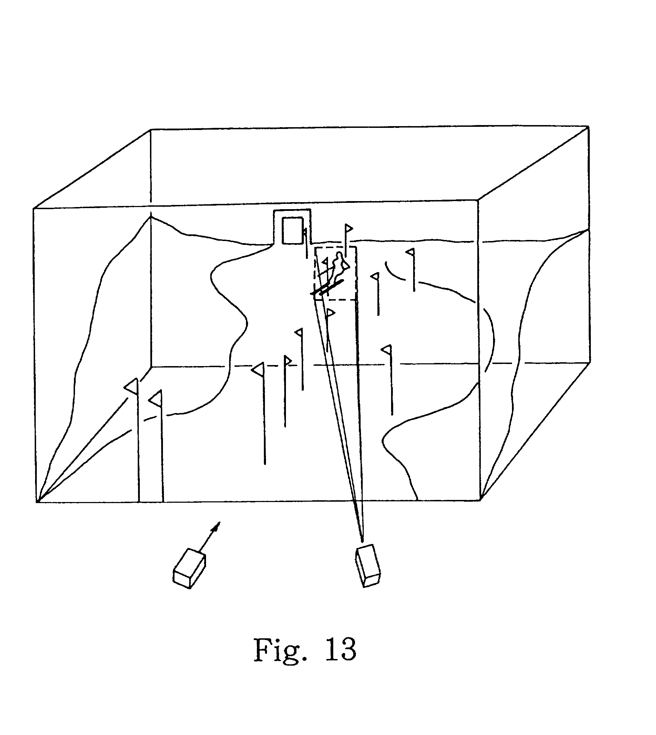

Therefore, in principle, it is possible to measure the entire background, however, in ski, by measuring the important part such as poles' location precisely and measuring other part roughly, it is possible to measure efficiently and reduce the data. By using this data, the solid model as shown in Fig.13 is constructed. This model should be stored within a computer, and is not needed to be displayed in the actual figure. The rough part can be approximated to the geometrical figure. If the parameters of the virtual camera is obtained, it is possible to compose the background by using this solid model and computer graphics. The image transformation plane described above moves with the targeted object's location in this model, and if a certain field is specified, the location of the transformation plane can be defined. This solid model and the transformation plane in it together can be considered as the space-time map at a certain time. This space-time map includes the three-dimensional data of the background, the three-dimensional data of the targeted object, and the three-dimensional data of the transformation plane, where all of them can be treated together. Even if the terrain map of ski's course is represented entirely and precisely for the solid model of the background, the bump on the snow can not be seen clearly on the image. Therefore, all you have to do is, for example, to obtain only the pole's positions precisely, map the ground, and paint white except the targeted object and poles. If the bump is important, it is necessary, for example, to display the contour lines or emphasize the shading on the captured image in order to indicate the bump. Also, the athlete's track can be mapped in the map, therefore, it is sometimes possible to express the bump on the ground by displaying the athlete's track.

If the location of the principal point of the targeted object is known, it is possible to obtain the location of the transformation plane that transform the image to the virtual camera's image. Also, if it is possible to separate the targeted object and the background in the captured image, the athlete is like the figure cut out from a photograph and put in a model. Because the three-dimensional location of the transformation plane is known, it is possible to calculate whether the pole is visible or not if it is seen from the virtual camera.

In such a case, the data for extracting only the athlete (the targeted object) can be obtained by the image control output in the Fig.6.

When composing the virtual camera's image, if the targeted object does not exist in the image control output, the background data is drawn from the space-time map and is displayed for that part. The part where targeted object exists is like the image transformed as described above for the captured image.

When handling moving images, except for the case where the parameters of the virtual camera is fixed, the background must be composed in every field. Therefore, the projection of the background data to the space-time map should be restricted to the minimum requirements according to the calculation power of the computer.

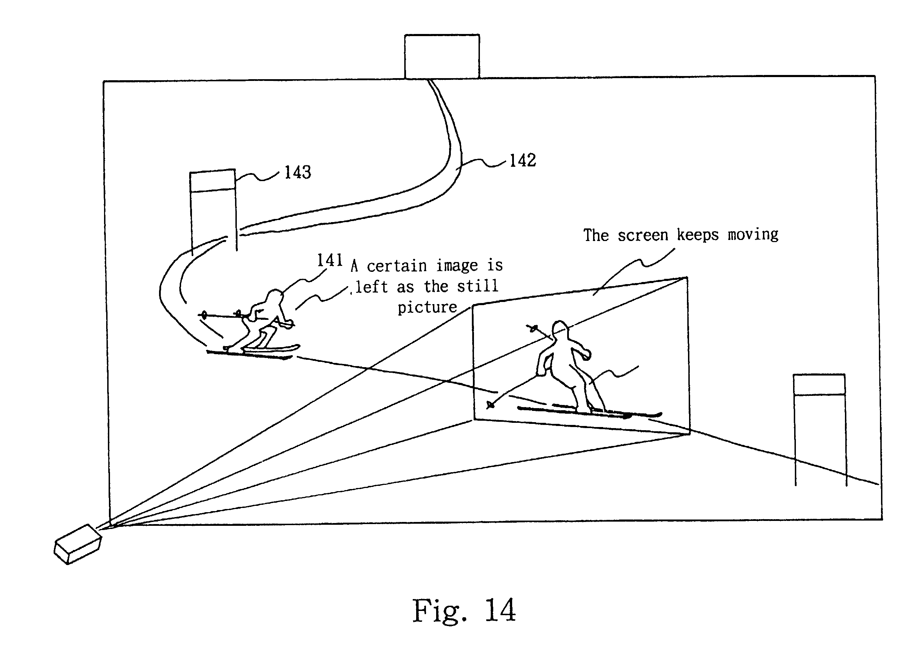

Also, if the range of athlete's movement is restricted as in the ski's course, and therefore the parameters range of the virtual camera is known, it is possible to calculate the background image in advance. The background image is not limited to the actual background such as a course and pole 143 in Fig.14. The athlete's track 142 can also be the background. That is, it is possible to record the previous athlete's track or a certain athlete's track, these tracks can be used for background and can be composed with the athlete's image as the background like pole 143. Because the track's data naturally contains the three-dimensional data, the view will change depending on the viewpoint of the virtual camera. Also, by positioning virtual grids in the space for three-dimensional graduations, the location can be easily grasped.

Also, as the code 141, the image at a certain moment of the moving athlete can be used for background. It will be a still image. It is just like the life-sized cut-out picture is standing in a course. Because the location can be played back precisely, if another athlete is passing by the still image's location, it is possible to indicate which one is invisible when playing back. Also, in such a case, it is possible to compose shadows as necessary. If the shape of the ground (background) is known, it is possible to calculate the shadows on the ground by specifying the position of the lighting(the sun). The shadow can give the stereoscopic effect for the background. Shadow requires much calculation, however, it gives not so much effect. It is possible to add shadows not only on the athlete's still image that was recorded for background, but also on the moving athlete (the targeted object). In both cases, the shape of the athlete is something flimsy which is cut out from the transformation plane with the athlete's shape. Therefore it is necessary to choose the sun's position carefully not to produce unnatural shadows.

If the athlete's image is recorded, it is possible to not only record the captured image as it is, but record as the background after processing the image, such as recording only athlete's outlines, or recording as a transparent image. Recording some images sequentially gives the background like a frame-picture. Naturally, these images are transformed using the transformation plane, so their shape will change as the virtual camera's location changes.

If poles alone are used as the background measured in advance, the figure of the lane will appear by overlapping all athletes' ski track. Because the location of the virtual camera can be chosen freely, it is possible to record the image as the record of the competition by capturing in front or from above.

[The third embodiment]

So far, one virtual camera is used for one captured image, however, in the game in which many players are playing, such as soccer, each player may be measured by a measuring head. In such a case, the captured image is basically for the image of each player. However, for the virtual camera's image, the image of multiple players must be obtained at the same time depending on the angle of view. Therefore, consider the transformation plane for each measuring head as in Fig.15. For example, the location of the transformation plane is the center of the player, and the transformation is perpendicular to the ground. It is just like the screen is standing on the player's location, and the image is projected on it and it is captured again with the virtual camera. In such a case, naturally, according to the positional relation of the virtual camera and players, the image on the back is invisible. Moreover, lines on the ground can be composed as the background.

Also, even if there is one targeted object like the ski jumping contest, it is possible to capture multiple athletes at the same time by editing it. In such a case, if the capturing head's location is the same, a common transformation plane can be used, however, usually a different plane is necessary for each head.

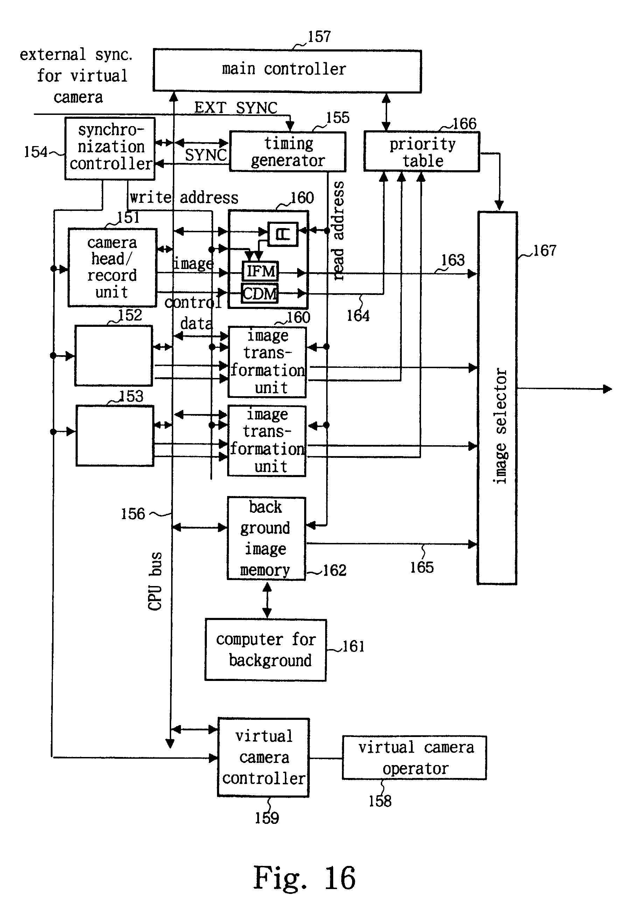

If multiple images are used, when combining camera heads or combining a camera head and a recording device, each image must be synchronized of its time. As described in the Japanese Patent Application No.221363 (1993), time is managed by adjusting the targeted object's location. That is, by shifting the direction of the camera head that is to be synchronized, comparing the direction when it was captured, and set it to the direction to which the targeted object may exist at the adjusted time. Naturally, because the targeted object moves three-dimensionally, it must be calculated in the three-dimensional coordinates. In such a case, the image used before can be approximated, or the neighbor images in the fields can be used. All images must be synchronized, and be treated as still images in units of fields in the same way as the transformation of one to one. Fig.16 shows the block diagram of the hardware that outputs the image captured by tracking multiple targeted objects with each camera head, as the image of one virtual camera. The figure shows the composition in which three original images are used, three image transformation units 160 are provided, and the virtual camera's images transformed with the image transformation units 160 are outputted as one virtual camera's image by referring to the data in the priority table 166 and by selecting with the image selector 167.

Multiple camera heads (or, recording units) 151~153 are synchronized by the synchronization controller 154. It is also synchronized with the timing generator 155 which generates the output timing of the virtual camera. If the output of the virtual camera must be synchronized with another unit, external synchronization must be used to the timing generator 155.

The three-dimensional data of each camera head is inputted to the main controller 157 in units of fields through CPU bus 156. Also, the parameters of the virtual camera is generated by the virtual camera controller 159 by operating the virtual camera operator 158. If the virtual camera moves, the virtual camera controller 159 generates the camera's parameters that correspond to the current field. In the same way as the camera head, these parameters are inputted to the main controller 157 through CPU bus 156. The main controller 157 obtains the transformation parameters by calculating the transformation plane according to each head based on the three-dimensional data. These transformation parameters are written to the image transformation unit 160 through CPU bus 156. The image transformation unit 160 is the image transformation circuit shown in Fig.6, and is required as many as the images required for the transformation. The synchronization controller 154 and the timing generator 155 each has the counters of the write address and the read address. If multiple camera heads are used simultaneously, these counters can be used in common. The image transformation unit 160 generates the image for each head based on the write address from the synchronization controller 154, the read address from the timing generator 155, and the image from the camera head. Also, the camera head generates the control data signal that separates the targeted object and the background. If the targeted object can be extracted clearly from the background, one bit is enough, however, by using multiple bits, borders can be blurred. In the same way as the image data, the control data signal is also transformed.

On the other hand, background is calculated with the computer for background 161, and is written on the background image memory 162, based on the virtual camera's data. Usually, this calculation requires considerable computation, so a special computer is used in this example. Background image 165 can be obtained from the background image memory 162 by synchronizing with the timing generator 155.

Thus, it is possible to obtain the transformed image 163 transformed based on each head, the control data 164 that shows the relation of the targeted object and the background, and the background image 165.

Main controller 157 calculates each transformation plane by using the three-dimensional data from each head, and at this time, the positional relation of each head is revealed.

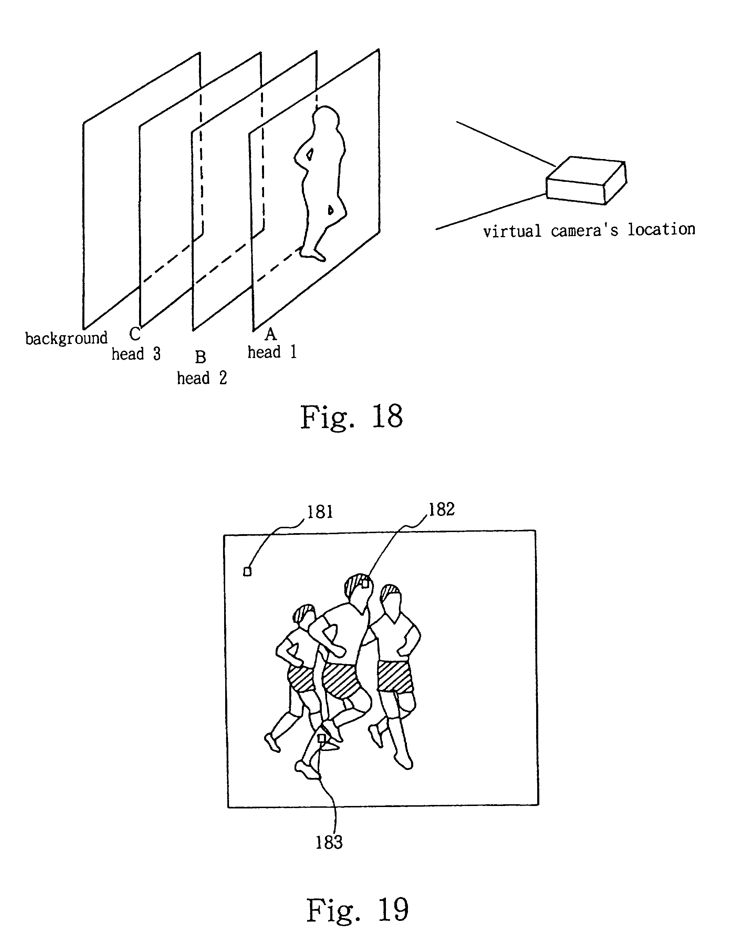

For example, in soccer, if each three players is tracked with the different camera head, the image shown in Fig.17 can be obtained by transforming them to the virtual camera's image. In Fig.17, A, B, and C are the virtual camera's image, and A', B', and C' are the one-bit image control signals that extract the targeted object player from the background. Image control signal is used to distinguish the background and the targeted object. Based on the three-dimensional location of each player, assume the positional relation in Fig.18 if seen from the virtual camera's location. Player A is in most front, and player B is in the next, and player C is in most back. Each distance is included in the image transformation as the transformation matrix when it is transformed. The problem here is the positional relation. If the positional relation is obtained, the main controller 157 write the relation on the priority table 166. Based on the value of this priority table 166, the image selector 167 switches the transformed image and outputs it as the virtual camera's image output. If the image control data is one-bit which indicates if there is a targeted object or not, the image selector 167 can be a simple selector, however, if the image control data has multiple bits and the surrounding of the targeted object is blurred, not only a simple selector but also the calculation device that multiplies the coefficient to each image data and adds them up is needed.

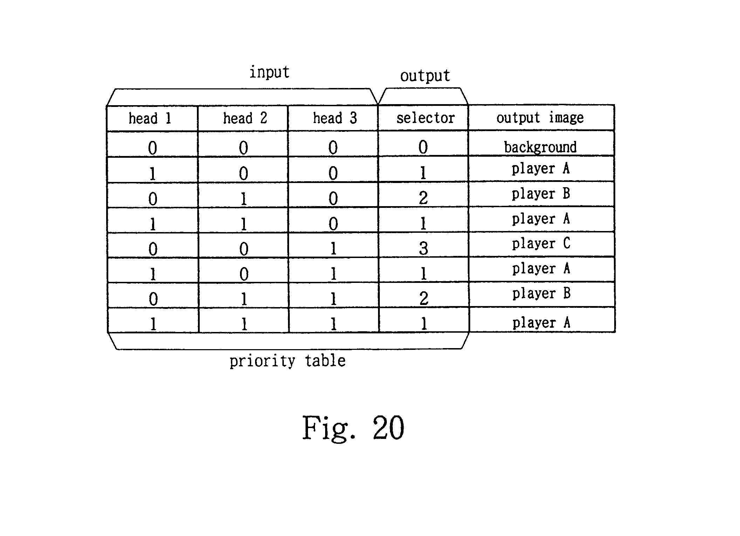

In the following example, to make it simple, the case where one bit is used for image control data is explained. If the positional relation is as shown in Fig.19, the priority table 166 is like the one shown in Fig.20. If the positional relation of players are obtained, it is fixed in the corresponding field.

The input of table (which is update at every field) is the image control signal for each image. In this example, it is either 1 or 0 because one bit is used. If it is 1, it is the targeted object, and if it is 0, it is the background. The output of the priority table 166 controls the image selector 167, and outputs the corresponding image. In this example, if it is 0, the background image is selected, and if it is 1, the image of player A is selected, and similarly, 2 selects player B, 3 selects player C. By doing this, at each pixel of the output image, the image to be outputted is decided by referring to the table,.

For example, in the pixel 181, as shown in Fig.17, all the image control signals are 0, so the background image is selected. At the pixel 182, only the image control signal of head 1 which is capturing player A is 1, so the image selector 167 has 1, and the image of head 1, that is, the image of player A is selected. At the pixel 183, the image control signal is 1 in both head 2 and head 1, but based on the table, the head 1 is selected. Thus, by using the positional relation of images, as shown in Fig.19, it is possible to obtain the image just like the one captured actually, where the player in the back is hiding behind the player in the front.

If the image control data has multiple bits, the output of the table is not the head number to select, but is the weighting coefficient of each head's image: k1, k2, k3...., and the output can be calculated by the following expression(10):

$$output = (head\ 1)*k1 + (head\ 2)*k2 + (head\ 3)*k3 + ... \qquad (10)$$

If one bit is used, it can be considered that the above coefficients are either 1 or 0.

As described above, the priority table 166 is used for positional relation of images, because it is possible to output the virtual camera's image in practical speed in that the priority table, which indicates which image should be outputted, can be easily constructed for every field by the image control signal, and can be easily updated, whereas it requires fast comparison calculation if the positional relation for each pixel should be judged.

So far, one virtual camera is considered, however, if multiple virtual cameras are required, do the above as often as needed. In such a case, the image of a camera head, the three-dimensional data, and the background data can be used in common, however, it is difficult to use the transformation parameters and background image in common because they are different for each virtual camera's parameters. After all, if multiple virtual cameras are used, the system requires the hardware and the software of almost the same scale as many times as needed, and they must be operated in parallel.

[The fourth embodiment]

In the transformation described above, the transformation plane is defined based on the location of the virtual camera, the capturing camera head, and the targeted object, however, it is also possible to define the transformation plane by using other three-dimensional data, and to transform the transformation plane itself including the image projected on the transformation plane.

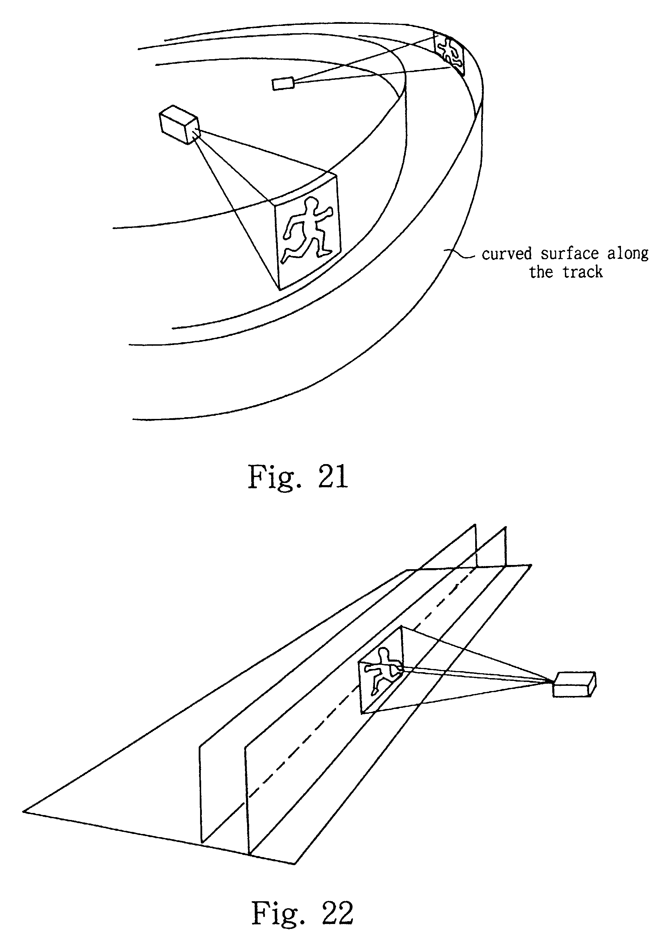

For example, when the range of athlete's movement is known beforehand, such as the track events in the field and track events, it is possible to use the transformation plane of the curved surface which passes the center of the track and is perpendicular to the track, as shown in Fig.21. As shown in Fig.21, by capturing the image with the camera head from inside of the track, the head is always capturing from the side of the athlete. Similarly, in Fig.22, the athlete running on the linear track is captured, and in such a case, also the transformation plane is the plane passing the center of the track.

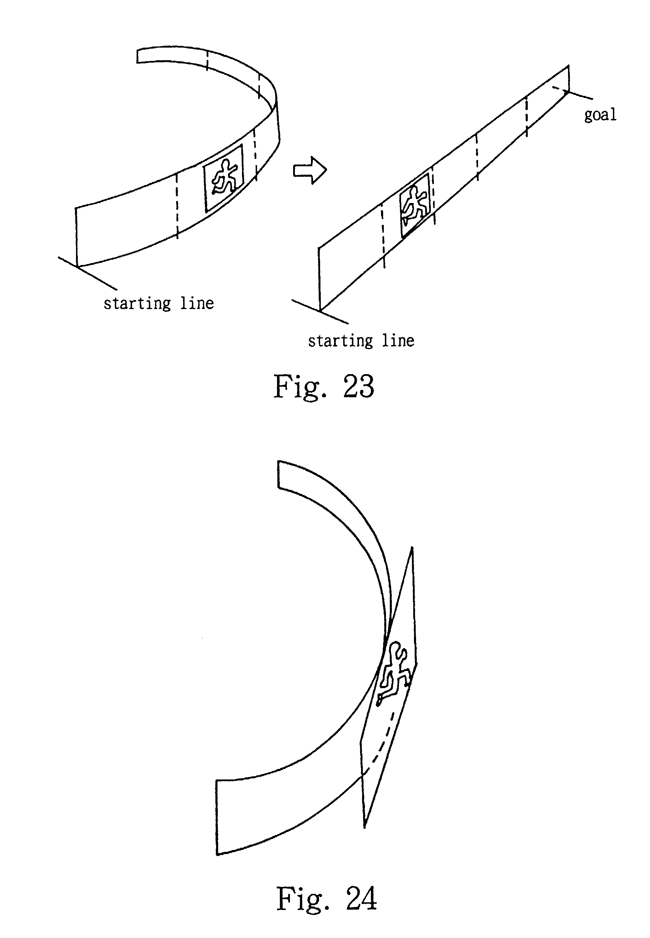

Next, when comparing the athlete running on the curve as shown in Fig.21 and the athlete running on the linear as shown in Fig.22, it is possible to obtain the image for comparison by transforming the transformation plane. For example, project the image on the transformation plane of curved surface as shown in Fig.23, and transform the plane including the projected image to linear by stretching it out. By doing this, it becomes the transformation plane of the linear track as shown in Fig.22, and it is possible to compare the athlete on the curved track and the linear track by bringing the stretched transformation plane next to the track in Fig.22 and capturing with the virtual camera. Because the virtual camera can be put on any location, by moving the virtual camera with the athlete to see him from the side, it is possible to get the image which shows the difference of paces and postures clearly.

Considering the case where this fourth embodiment is applied to capturing speed skating, it is possible to understand the effect of it. In speed skating, the way for passing the curved lane is different in the inside lane and the outside lane. Therefore, in the 500m event, for example, it is impossible to observe the positional relation of the athlete starting from inside lane and the athlete starting from outside lane. By stretching the curved lane to the linear lane as described above, it is possible to compare the athletes in the different lane. Also, in speed skating, each athlete is skating in the different occasion, therefore, when comparing the athletes, the athletes skating in the different occasion should be captured simultaneously and should be displayed. For this reason, in this embodiment, it is possible to capture the image of athletes skating in the different occasion at the same time and make it as if they are skating in the linear lane where it is easy to compare, so it is possible to watch the event with the images that have not existed before.

In the above, the transformation plane of the athlete running on the curved lane is a curved surface, however, if the curve is not so sharp, the flat plane touching at the location of the athlete and the curved surface can be used. This transformation flat plane moves with the athlete on the center of the lane. In this way, by using a flat plane, the expression of the transformation plane and the hardware described above can be used as it is.

Moreover, the distance graduations on the transformation plane, or the computer graphics of the record holder can be used as the background. If transforming the transformation plane, by transforming them all together and holding the same positional relation, it is possible to compare the athlete running on the different track.

[The fifth embodiment]

Normally, multiple capturing heads capture the same point to get the three-dimensional coordinates. Therefore, in many cases, the image of one targeted object can be obtained from multiple camera heads. It is possible to decide beforehand on which head's image is used to generate the virtual camera's image, however, images of multiple heads should be used to obtain the most natural image.

The image distortion by the transformation of image largely depends on the angle made by the transformation plane and the capturing camera, and the transformation plane and the virtual camera. That is, more perpendicular the principal axis of each head and the transformation plane is, less the distortion. If targeted object moves, or the virtual camera moves, its angle changes. Therefore, to get the more natural image, switch the images when multiple camera heads are used.

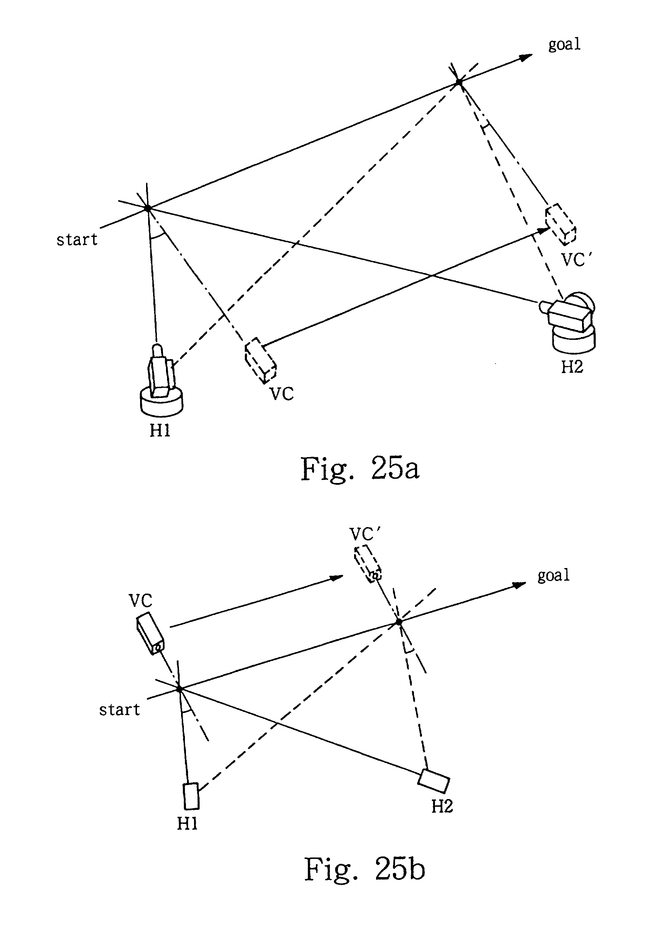

For example, Fig.25(a) shows the measurement of the 100m track event. The athlete, which is the targeted object, is tracked with the two camera heads H1 and H2. In this figure, the virtual camera VC is moved parallel with the athlete from the side of the heads in order to keep the constant distance between them. Near the starting line, the angle made with the virtual camera and the head H1 is smaller than the angle made by the virtual camera and head 2. Therefore, the virtual camera's image should be transformed based on the head H1's image. On the contrary, near the goal, the head H2 has smaller angle with the virtual camera.
Therefore, the head H2's image should be used.

In Fig.25(b), the virtual camera and the heads are on opposite sides of the targeted object. Therefore, the transformed image is turned over. However, in the same way as the above, based on the angle of each head and the virtual camera, head H1's image should be used near the starting line, and head H2's image should be used near the goal for transformation.

In order to select the image of heads, not only the smallest angle made with the virtual camera is selected, but the image can be switched based on the targeted object's location.

In the 100m track event as shown in Fig.25(a), the range of movement of the targeted object is known in advance, therefore it is possible to switch the image. For example, H1's image is used between Om and 60m, and H2's image is used for the rest. The switching based on the targeted object's location is similar to the camera's switching in TV's broadcasting, therefore the discontinuity caused by the switching of image is already accustomed.

Also, if the virtual camera moves around, it is possible to switch the image based on its location. Also, if the targeted object does not move so much but changes its posture, it is possible to switch the head to see the best angle depending on the posture. Also, if the targeted object changes as time passes, it is possible to switch based on the occasion.

Moreover, it is possible to switch them by judging the overall multiple switching conditions described above. For example, it is possible to decide which head's image should be used based on a certain conditional expression or the table by using both the targeted object's location and the virtual camera's location.

Next, the image switching method is described. The most simple way is to switch at the field when the switching condition is satisfied. In such a case, the hardware and the software is very simple, however, if the targeted object moves slowly, or there is much noise in the three-dimensional measurement, the image is switched repeatedly and it is unnatural. In such a case, the switching condition should have hysterisis. For example, it is possible to prevent the repeating switching by setting a range between the condition switching from the measurement head H1's image to the H2's image and the condition switching from the head H2 to the head H1.

If it is possible to distinguish the background and the targeted object clearly, only the targeted object's image should be switched. Because the image before switching and the image after switching always have some differences, to minimize the effect, switching only the targeted object can minimize the effect of switching instead of switching entire image in terms of the size. In such a case, because the background obtained by composing has no effect of switching, the background obtained by composing the data on the space-time map should be used.

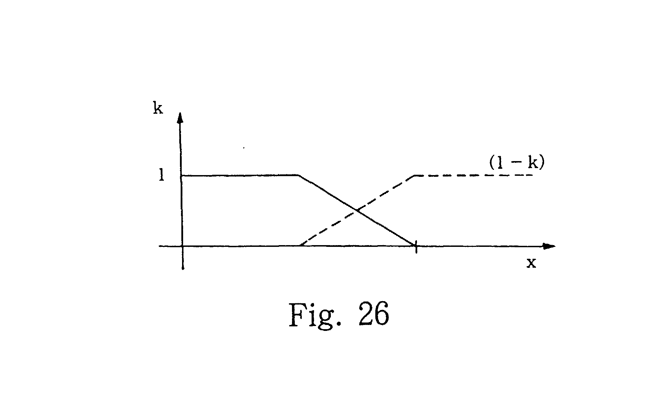

If the switched heads are in the distant location and the image changes greatly after switching, it will be unnatural because the switching is clearly distinguished. In such a case, before switching the image completely, switch the image gradually by using the intermediate image made from the two images. It is like cross-fading which is widely used in image editing. As shown in Fig.26, it can be realized by adding weight on the two images used in switching. In Fig.26, the switching condition is based on the location of the virtual camera. The coefficient k changes as the virtual camera moves. By putting this coefficient in the next expression(11), intermediate image can be generated. The expression(11) is used when switching the head 1 and the head 2. The images transformed by the transformation plane should be used for switching.

$$\text{output image} = (\text{transformed head 1's image})*k + (\text{transformed head 2's image})*(1-k) \qquad (11)$$

It does not matter if the condition satisfying the switching condition is passed within a short period, however, if it takes long time to pass the intermediate value, considering the direction of switching, even if it is in the middle of switching in terms of the spatial location, it is necessary to finish the switching within a certain period. Also, in the special play-back, such as stop-motion or play-by-frame, it is better not to switch the image. Therefore, it is necessary to provide multiple switching conditions and to select one of them based on the play-back method or the capturing condition, or stop switching.

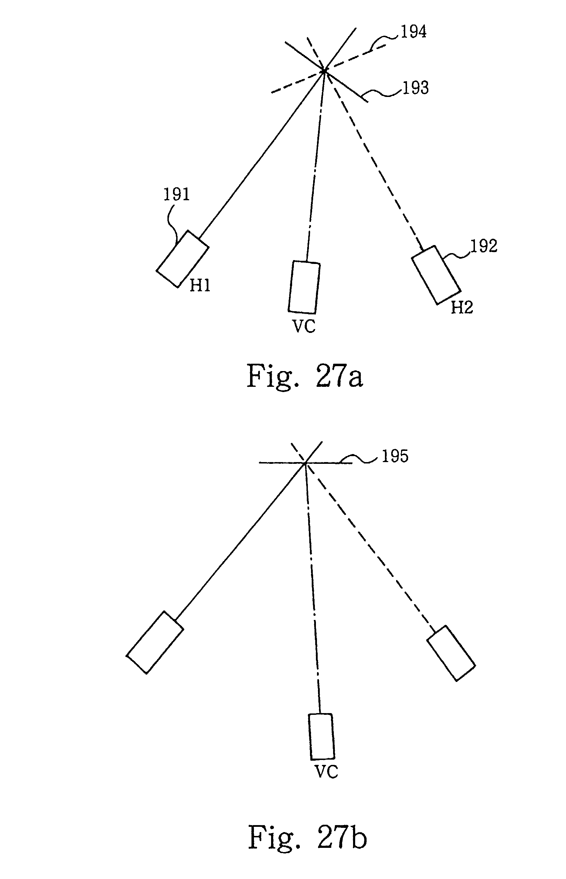

If heads are switched, the transformation plane is also switched. If the switched heads are at a distant location, the gradient of the transformation plane will change greatly at the switching. The gradient of the transformation plane severely influences the distortion of image, so the switching of the transformation plane can change the image largely. Therefore, the gradient and the location of the transformation plane should be changed smoothly. In Fig.27(a), the transformation plane between the head 271 and Fig.27(a), the transformation plane between the head 271 and the virtual camera VC is 273, however, the transformation plane with the head 272 is 274, and the angle is quite different. In Fig.27(b), the transformation plane is 275 which can be used in common on the switching. Thus, if switching is expected, the transformation plane should be the plane based on the virtual camera, such as the plane perpendicular to the optical axis of the virtual camera, then the calculation becomes easy because the transformation plane does not move on the switching.

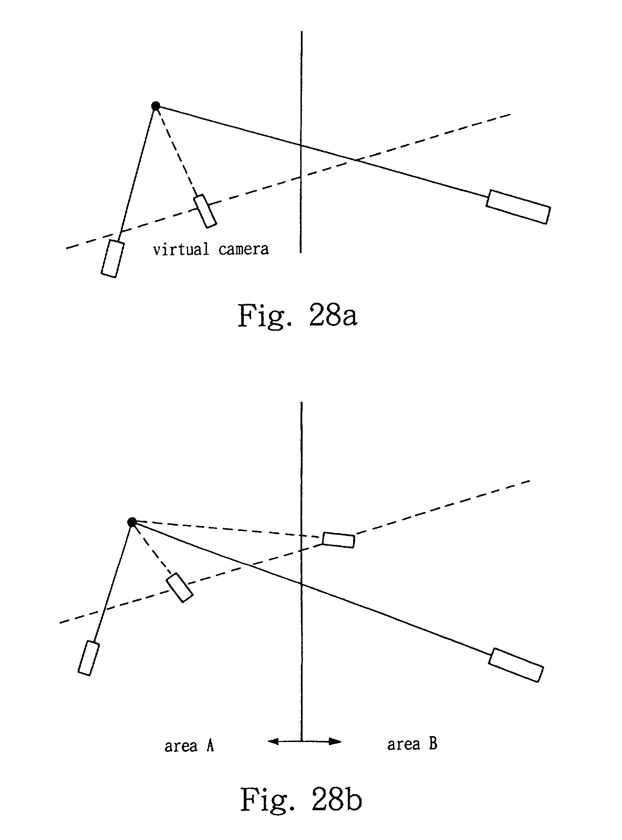

Moreover, in the image where the virtual camera is moving, depending on the targeted object's location, it is possible to use the image of the head closer to the targeted object, not the image of the head closer to the virtual camera, and to switch the image of the head based on the location when the targeted object moves. For example, as shown in Fig.28(a), if the targeted object is in area A, and if the virtual camera VC moves from area A to area B, as shown in Fig.28(b), if the targeted object is still in area A even if the virtual camera moves to area B, then the virtual camera is closer to the head H2, however, the image of head H1 contains more data of the targeted object image, so head H1 is sometimes superior to the head H2 when transforming images. In such a case, it is possible to switch the image based on the location of the targeted object.

By comprising functions as described above, in the first and the fifth embodiments, the following effects are obtainable:

It is possible to edit the image as an image captured from an arbitrary location after capturing the events where the athlete is moving in the three-dimensional space, such as ski jumping events or Alpine events.

Also, it is possible to edit the image as a three-dimensional image, even in events where players may fall down, such as American football or rugby.

Also, by using a transformation plane which passes the moving object, it is possible to transform images naturally that is suitable for the captured moving object.

Also, when using multiple capturing cameras, by using a transformation plane which is perpendicular to the optical axis of one of the capturing cameras or the virtual camera, it is possible to simplify the calculation because the parameters in the calculation for image transformation can be reduced.

Also, if the capturing camera is fixed and the spatial location of the virtual camera is moved, even if the virtual camera is perpendicular to the optical axis of the capturing camera, by using a transformation plane whose angle is in the angle made by the optical axis of the capturing camera and the optical axis of the virtual camera, it is possible to transform images for any virtual camera's location.

Also, because it is possible to use any transformation plane which is within the space constructed by the field of view of multiple capturing devices, if there are multiple moving objects, it is possible to transform images to the virtual camera's image by putting the transformation plane regardless of the location of the moving objects.

Also, because the background image is stored as the three-dimensional data, and the background is composed with the moving object's image by transforming it based on the parameters such as the virtual camera's location, the background of the moving object is moving with the moving object, and it is possible to compose images with reality which is moving in the three-dimensional space.

Also, even in the images where it is difficult to get the stereoscopic feeling in the white background in such as the Alpine events, by using the previous athlete's track as the background, it becomes easy to recognize the event. Also, by overlapping the previous athlete's image as the background, it is possible to compare with the previous athlete.

Also, for the events where multiple players are moving, such as soccer, when editing for the images captured with the virtual camera, even if the positional relation of the multiple players to the virtual camera can change by their movement, it is possible to hide the image in the back by considering their positional relation.

Also, when transforming to the images of virtual camera based on their positional relation by using multiple images, because moving images are extracted from the background, it is easy compose them and to mask the image in the back based on their positional relation.

Also, when transforming images capturing the same moving object with multiple capturing cameras to the virtual camera's image, it is possible to obtain natural images even if the virtual camera is moving because the capturing camera that is most suitable for the capturing condition for the virtual camera is used.

Also, when transforming images while switching the image captured with multiple capturing camera, and the virtual camera is moving, the image will not deteriorate by the repeating switching in the intermediate area because switching condition has hysterisis.

Also, when the moving object is moving slowly, and the capturing camera's image is switched while virtual camera is moving, it is possible to switch the image naturally by switching suddenly.

Also, in the intermediate part of the two capturing camera's area, because the image averaging the two capturing camera's image data is composed and transformed to the virtual camera's image by projecting on the transformation plane, the switching will not be unnatural.

Also, by using curved surface instead of the flat plane for the transformation plane, in the events where curved lane is used, such as the track events or speed skating, because the curved lane and the linear lane are treated equally, it is possible to compare the athletes easily. Especially, the curved lane can be transformed to the linear lane by using the image capturing the athlete from inside of the curved lane, it is possible to compare the athletes at the different lane in the speed skating or on a different occasion.

Also, even if the moving range of the moving object is limited to one flat plane, by selecting another transformation plane apart from the constraint plane, it is possible to obtain natural images.


(The sixth embodiment)


Fig.29 illustrates a block diagram which shows the configuration of the moving image processing device of the sixth embodiment of the present invention.

The moving image processing device of the present invention provides a camera head 201 which extracts the three-dimensional spatial coordinates data by capturing the targeting object of the moving object and outputs the captured images with this three-dimensional data, and data recording segment 202 which records the image with the three-dimensional data and time data, and moving image editing segment 203 which maps the obtained image on the space-time and transforms the image. Also it provides a stopwatch 205 for outputting the standard time data and time base unit 204 which distributes the time data that the stopwatch 205 outputs to camera head 201 and data recording segment 202. Furthermore, in the configuration that extracts the three-dimensional data of the moving objects with camera head 201, it is of course possible to process for computing the three-dimensional space coordinates of the moving objects with the arithmetic unit which is installed separately from the position of the camera devices.

Besides, the moving image processing device in this embodiment is essentially the same as the moving image processing device in Fig.2, wherein the data recording segment 202 corresponds to the recording unit 2, the moving image editing segment 203 corresponds to the image editing unit 14 and the virtual camera controller 17, the stop watch 205 and the time-base unit 204 corresponds to the time-base unit 16, and the three-dimensional location calculation unit 15 is included in the camera head 201, however, the present invention is different in that it is composed for processing moving images of the targeted objects moving in a constraint plane.

In this embodiment, the example of editing the moving images capturing swimming athletes is used for explanation.

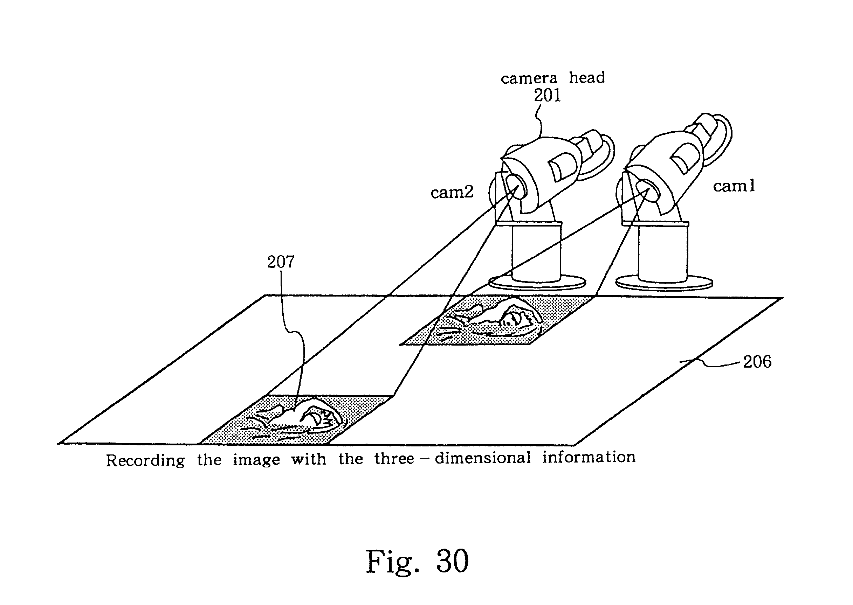

In a swimming competition, the vertical movements of the targeted objects (athletes) are much smaller than their horizontal movement of them, so they can be considered as moving on a plane. Here, as illustrated in Fig.30, the three-dimensional position of the targeting object 207 as well as its image is measured with the camera head 201. Also, the camera head 201 moves automatically as the targeting object 207 moves to track the targeting object. Because it is considered that the movement of the targeting object 207 is restricted to the plane 206, the three-dimensional position of the targeting object can be obtained by calculating the intersection point of the plane and the line if the position of the camera head 201 relative to the plane 206, and the direction of targeting object 207 from camera head 201 are obtainable. Also, at the same time the captured range of the plane 206 can be computed using the angle of view of the lens. In this way, the three-dimensional data of the targeting object 207 as well as its image can be obtained. Like in this case, the means of obtaining the three-dimensional data of the moving targeting object 207 as well as its image are applied by the applicant as the Japanese Patent Application No. 82178 (1993) (published 21/10/1994 under JP-A-06-294613) and the Japanese Patent Application No. 82209 (1993) (published 21/10/1994 under JP-A-06-294614).

The characteristics of this embodiment is the image processing on the data recording segment 202 and moving image editing segment 203, so they are explained as follows.

First, data recording segment 202 is explained.

With data recording segment 202, the images and the three-dimensional data and time data must be recorded with synchronizing them. At this point, attention must be paid to the time management. In the case of swimming, where the movement of the target is relatively slow, 1/60 second of the camera can be used as the base time unit, but when multiple cameras which are not synchronized are used or when composing data captured at the different time, a time lag of 1/60 second at the maximum may be caused by using the camera field cycle as the time unit. For this reason, the stopwatch 205 which measures the record of the athletes is used as the time standard and to synchronize time base unit 204 with the timing signal from that. The time of each captured field that corresponds to the time measured at time base unit 204 is recorded corresponding to the image. That is, images are not managed in field units but are managed in real time like 'this field is the image from the 4 ms after the start to 20.7 ms after the start.' In this way, when the TV standards are different like PAL, NTSC or HDTV, or when the master clock frequency of the cameras has a deviation, it is possible to edit in the same way. Also, the elements used in the camera or the configuration of the camera sometimes generates constant time lags between the output image signal from the camera and the image actually captured. For example, in the cameras that uses CCD area image sensors, there is a lag of 1 field between the light image being accumulated in the charge on the element and the charge being read out from the elements. Usually this lag is constant and inherent in cameras, so if the camera is identifiable, it is necessary to correct it on the recording device and record the time when the images are actually captured on the image capturing device. This correction can be done in the camera too, not only in the recording device. Or the correction can be done when playing back or during the next editing stage by recording the correction value.

Within the three-dimensional data, it is recorded not only the position of the three-dimensional point that is measured with a camera head but also the data that is the characteristics of the head in the three-dimensional spatial coordinates like the three-dimensional position of the visual field that is captured with the camera, the three-dimensional position of the camera head, the three-dimensional position of the rotation axis of the universal head, the gap between optical axis and rotation axis, etc. Note that this data may not be recorded in all images but is needed at the header-part of the images. Also, to be exact, the three-dimensional position that is measured with a camera head is the position of the targeted object. Targeted objects are not always at the center of the image, so the location of the targeted object in the image as well as the three-dimensional spatial location of the targeted object must be recorded in every field of the image.

Furthermore, by recording not only the computed data like the three-dimensional coordinates data but also the raw data such as the zoom value of a lens at the same time, that may be useful for analysis or recovering when trouble have occurred. So raw data should be recorded as far as possible.

Because they are accessed with images at the same time, images and above mentioned data accompanying the image should be recorded in the same recording media. By modulating data adequately and adding it in unused area in the blanking period of a normal video signal, normal video signal recording equipment such as video tape recorders can be used as the recording equipment and recording media. But in this embodiment, considering the necessity of random accessing, optical disks are used for recording in digital. With digital recording, accompanied data is also recorded as the digital data. Therefore if the file structure is made so that the data that corresponds to each field of the image is obtainable, it is not necessary to modulate and add it in blanking period as mentioned above. But in this case also, considering to handle media, it is better to record the image and the accompanied data in the same media.

Next, the moving image editing segment 203 is explained. With the moving image editing segment 203, by processing the image from multiple data recording segments 202 or a camera head 201, the new images are created. Here, the characteristic of the present invention is to project the image that is captured or recorded on the space-time map, and to process the image for creating moving images by capturing the image that is projected on the space-time map with a virtual camera.

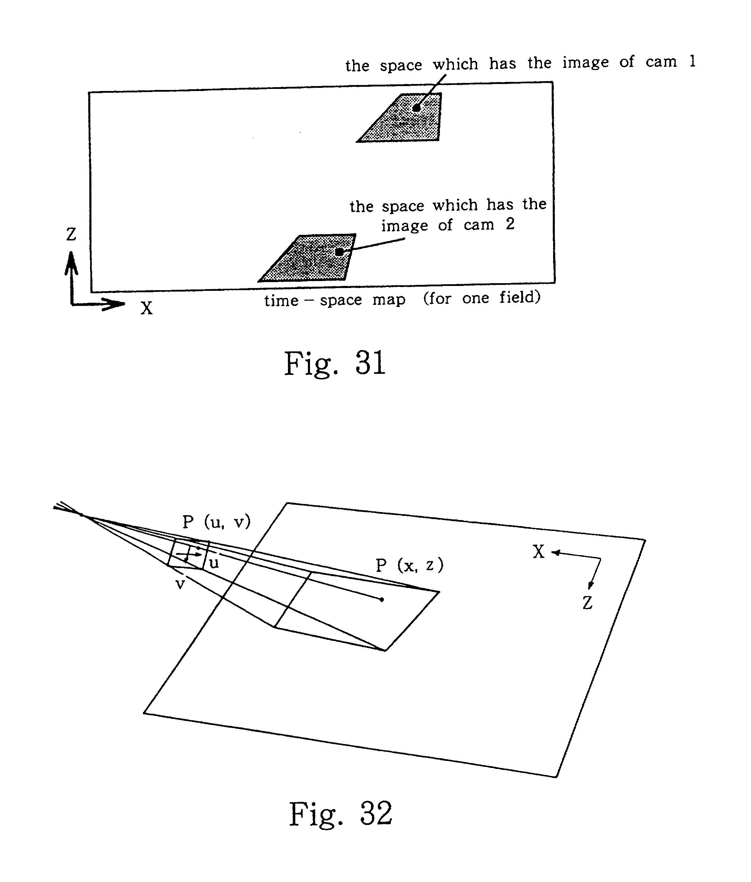

The fundamental thing that lies in this moving image process is the space-time map. Space-time map is a virtual four-dimensional space that has three axes of three-dimensional space and one time base, and it is actually a data table in a fast semi-conductor memory. In this example, the output of the moving image editing segment 203 is the image with NTSC timing, so the time unit is 1/60 second per field and space-time map is the tables of three-dimensional data repeated as many times as required per field. As in this example, if the TV timing of input and output is the same and if it is not necessary to process the image by combining the images of the field of different time base for creating one field of the output image, it is possible to re-write in every field by having a field on memory as the space-time map. Also, the three-dimensional data has the required region such as the potential region for output or the movement region of the targeted object. In this example, the movement of the targeted object is restricted to the movement of the constrained plane, the spatial data of the space-time map can also be a plane. In the case of a swimming athlete as targeted object, any location other than a swimming pool is meaningless, so the region is restricted to the swimming pool. In this case, the space-time map is like a plane viewing from the upper right of the swimming pool. Fig.31 illustrates the example of this space-time map.

In order to create this space-time map, with moving image editing segment 203, first the image of the input field is mapped on the space-time map using three-dimensional data from data recording segment 202 or from the camera head 201 directly. This is equivalent to the reverse of getting the image by capturing the constrained plane with a camera. In other words, it corresponds to projecting the image captured with a camera on the constrained plane reversely through a lens like a slide projector.

The actual processing is done as follows. As illustrated in Fig.32, the captured image is the image of viewing the constrained plane obliquely, so the image is transformed and written on the space-time map with the position adjusted. The location of the targeted object in the image is measured with the camera head 201. Also the currently captured region is obtained together with the image as data calculated using the status of a camera head 201. In this example, to make the calculation easy, by ignoring the non-linearity component such as the distortion of the lens, the transformation is expressed as the following matrix in the expression 12 in this case.

$$\begin{pmatrix} x \\ z \\ 1 \end{pmatrix} = \begin{pmatrix} a_{11} & a_{12} & a_{13} \\ a_{21} & a_{22} & a_{23} \\ 0 & 0 & 1 \end{pmatrix} \begin{pmatrix} u \\ v \\ 1 \end{pmatrix} = A \begin{pmatrix} u \\ v \\ 1 \end{pmatrix} \qquad (1\ 2)$$

The transformation matrix can be obtained by using the correspondence of four corners of the image to the captured range of the constrained plane. Because the camera head 201 follows the motion of the targeted object, this transformation matrix varies with every field, calculated based on the three-dimensional data that is sent from the data recording segment 202 with every field which is used to transform the image and to map it. This transformation process is done in parallel as many as required for the image to be edited. As mentioned above, in this example, the space-time map can be considered as a plane of the swimming pool. The space-time map has the entire range of the swimming pool but the captured image is restricted to the neighborhood of the athlete. As time passes, the position of the image moves in the map corresponding to the position of the moving athlete. This can be compared to a rectangular spotlight shining only on the athlete in a dark swimming pool, moving along with the moving athlete.

Next, the output from the moving image editing segment 203 is explained. Not like the prior image editing means, of the present invention, the target for edit is not the input image but the space-time map. The output image is the image that is obtained by capturing the space-time map with a virtual camera. This virtual camera has basically nothing to do with the camera head 201 that was used for input.

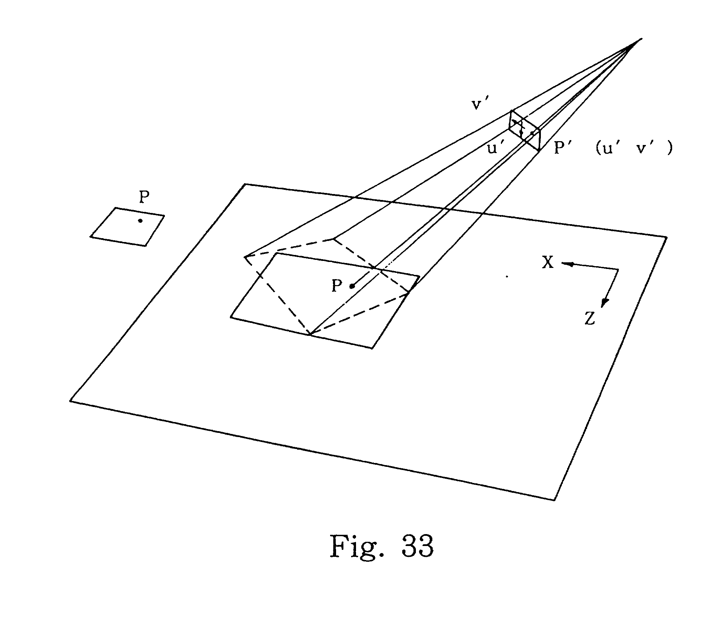

Therefore, it is possible to capture images at any position and at any angle of view. This idea is considered as a dark swimming pool where a spotlight is chasing an athlete and capturing him with an another camera. As mentioned above, the space-time map corresponds to the position of the actual three-dimensional space. Thus the virtual camera can be handled equally with the camera head for image input. That is, the position of a camera is decided then the camera's direction and the angle of view from that position can be decided. As mentioned above, because the space-time map has the actual three-dimensional spatial location, the position and the capturing range can be obtained if the position and the direction of a virtual camera are known. This is just like the reverse operation of mapping the image from a camera head. Fig.33 explains this principle, and in this example the constrained plane is used and the space-time map is a plane, so the image transformation is expressed as the matrix of following expression 13, similarly to the mapping case.

$$\begin{pmatrix} u' \\ v' \\ 1 \end{pmatrix} = \begin{pmatrix} b_{11} & b_{12} & b_{13} \\ b_{21} & b_{22} & b_{23} \\ 0 & 0 & 1 \end{pmatrix} \begin{pmatrix} x \\ z \\ 1 \end{pmatrix} = B \begin{pmatrix} x \\ z \\ 1 \end{pmatrix} \qquad (1\ 3)$$

Also this virtual camera can be operated for auto-tracking like the camera head 201. Because the position of all images on the space-time map is known when they are mapped, the output virtual camera can be operated based on them.

Next, the edit operation is explained.

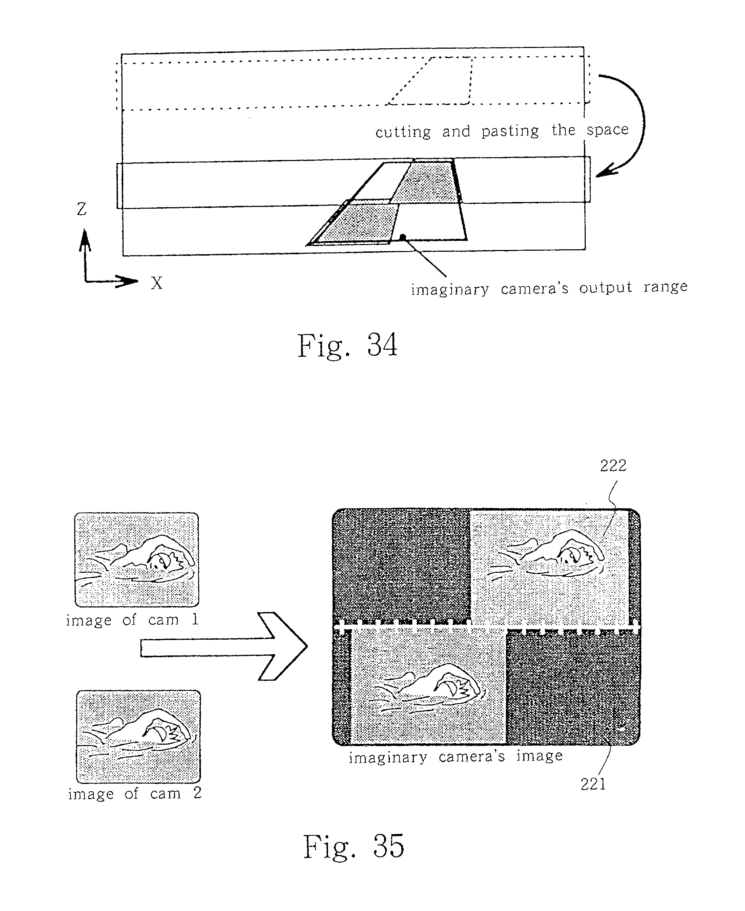

As mentioned above, the target for edit of the present invention is the space-time map. For example, in the example of swimming, consider the case when capturing the athletes in lane 1 and in lane 6 with the different camera heads ( cam 1, cam 2) as shown in Fig.30. Each image of the space-time map in this case lies in separated positions as shown in Fig.31. When capturing them with the virtual camera mentioned above, it is necessary to edit them because each image is too small for both images to be put on one display. When editing them, the space-time map itself can be cut-and-pasted as Fig.34. In this example, by bringing the entire scene of a swimming pool to another place as shown in Fig.34, the two athletes appear to be swimming in adjacent lanes. The space-time map corresponds to the actual spatial location so operating this is equivalent to replace the lanes in the actual swimming pool on the data. This editing operation moves the image on the space-time map with a condition that moves a figure that has the coordinates range corresponding to the lanes to move but does not move the part except for it. This is also expressed in the matrix of expression 14. However, as mentioned above, it is a move with a condition so this matrix E varies as the position ( x, y) on the map.

$$\begin{pmatrix} x^{\cdot} \\ z \\ 1 \end{pmatrix} = \begin{pmatrix} e_{11} & e_{12} & e_{13} \\ e_{21} & e_{22} & e_{23} \\ 0 & 0 & 1 \end{pmatrix} \begin{pmatrix} x \\ z \\ 1 \end{pmatrix} = E \begin{pmatrix} x \\ z \\ 1 \end{pmatrix} \qquad (14)$$

After editing it, the image of the athletes will be big enough as illustrated in Fig.35 by capturing with a virtual camera. With this operation, the image will be obtained where the athletes who were originally swimming in distant lanes are swimming in adjacent lanes.

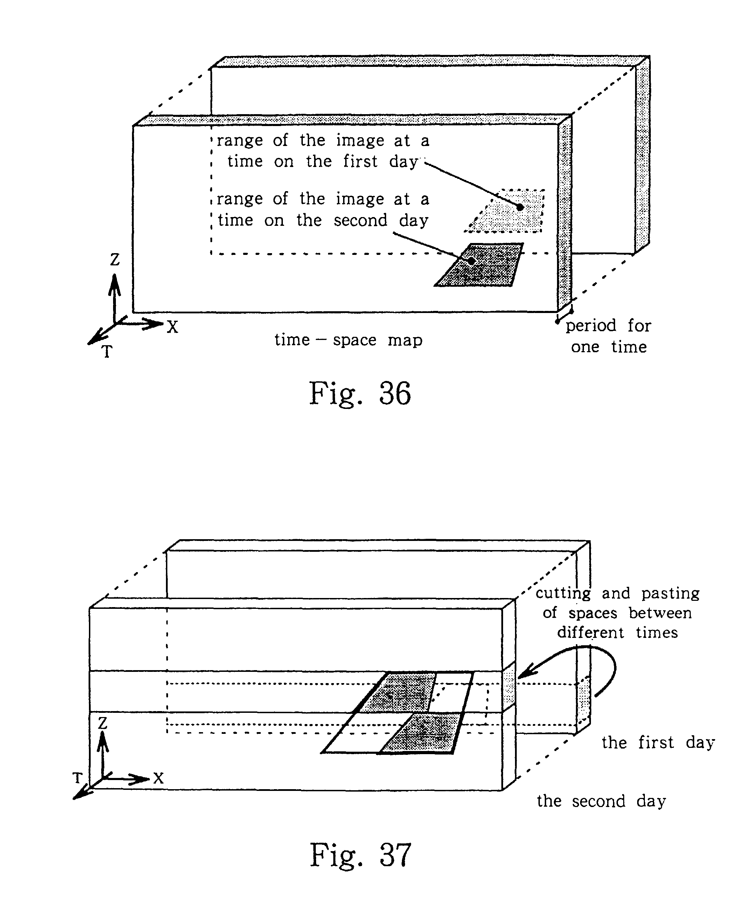

In this example, by the editing, it brings something that is spatially distant at hand, but it is possible to bring something that is distant in time at hand in the same way by the edition. For example, to compare the performance of the first day and the second day of an athlete, the operation will be as follows. The image of the performance of the first day and the second day are separately recorded with a camera head. The actual images are recorded on an optical disk, etc., and by reflecting them to the space-time map, in this example, the space-time map becomes a plane so it is considered that they are like piled maps of field unit, Fig.36. The edit operation moves this block as a lump, Fig.37. Thus it is possible to compete on the first day and the second day in adjacent lanes. In order to match the location, matching is carried out at the position of a swimming pool but matching of time needs some attention. In order to provide for this competition, a simultaneous start is required, however, stopwatches for measuring time and TV's fields are not usually synchronized. In the case of swimming where the speed is relatively slow, there is no problem with matching based on the unit of 16.7 ms which is the period of TV field, but when a 1/100 ms is critical, accuracy is needed as required. Therefore in the present invention, as mentioned above, time data is managed in real time. The process of using that real time is as follows.

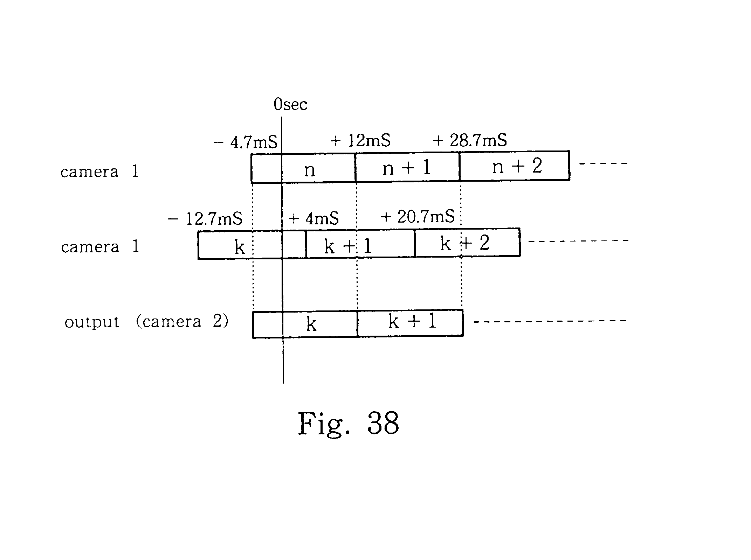

When editing the images from multiple camera heads, a camera is specified for the timing standard and decides the relationship between the clock and fields. The output images are obtained based on this timing. The image from the camera head 201 includes the time data from stopwatch 205 as well as the three-dimensional coordinates data, so the timing of every field is known. Each field has a interval because photo-charge is accumulated, and to make calculation easy, the moment of field change is used for typical timing. Considering the electron-shutter where charges are accumulated at the later half of a field, it is recommended that the end of the filed is used for timing. For example, as illustrated in Fig.38, in camera 1 the timing is that the n-th field is between -4.7 ms and +12 ms of the stopwatch and the (n+1)th field starts from +12 ms. Contrary, in camera 202 the k-th field starts from -12.7 ms and the (k+1)th field starts from +4 ms. If the first camera is used as the standard, the image of the second camera that has the timing adjusted to that field is required. For example, at the moment of +12 ms, the image from the second camera is displayed in the middle of the (k+1)th field. In this example, swimming is relatively slow, so the images of adjacent fields are not so much different. In these cases, to make hardware simple, it is possible to appropriate the previous field. At the moment of the above 12 ms, the image of the k-th field that starts from -12.7 ms is used as the image from the camera 202. In this example, the previous image was simply appropriated, however, it is possible to compose the image at the necessary time by using multiple images of before and/or after the same moment in time.

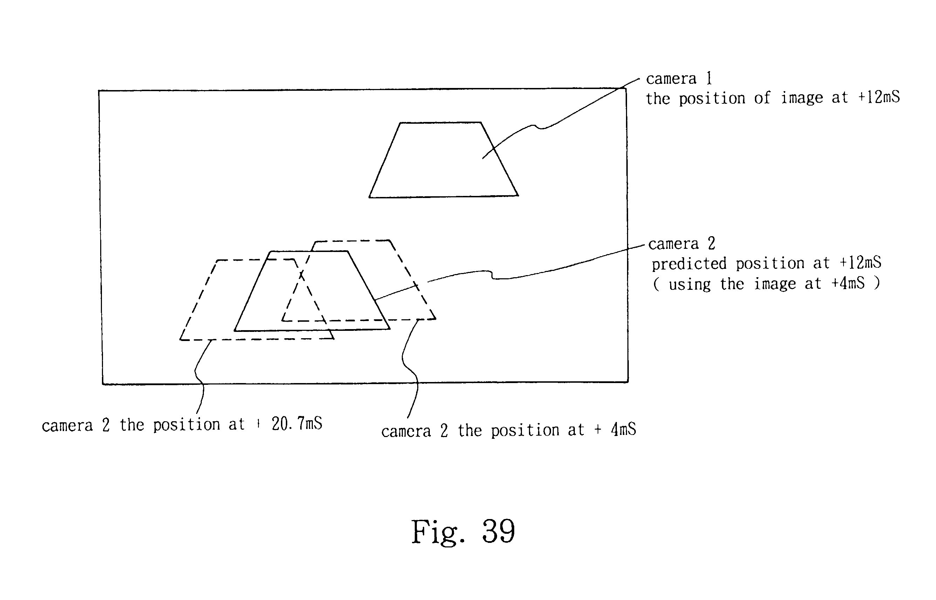

As well as images, the three-dimensional coordinates values used for mapping on the space-time map do not have a value all the time because they are obtained corresponding to fields. Because of this, in the space-time map which is adjusted to camera 201, the timing of three-dimensional data from camera 202 is different as well as the images. If the characteristic of the motion of the targeted object is known, it is possible to interpolate the value that can be determined by the expression of the characteristic of the motion as it was used for auto-tracking with a camera head. In this example, linear interpolation is used to make hardware simple and extrapolation used for auto-tracking is not used but interpolation of adjacent two fields is used, and more, the high precision part of the image is strictly only in one point of the targeted object and the rest of the image is not so highly precise, so linear interpolation has enough precision for this practical uses. Fig.39 illustrates the space-time map that is generated by matching the time base as mentioned above. Once mapped, then edit the space-time map as the example above and capture it with a virtual camera.

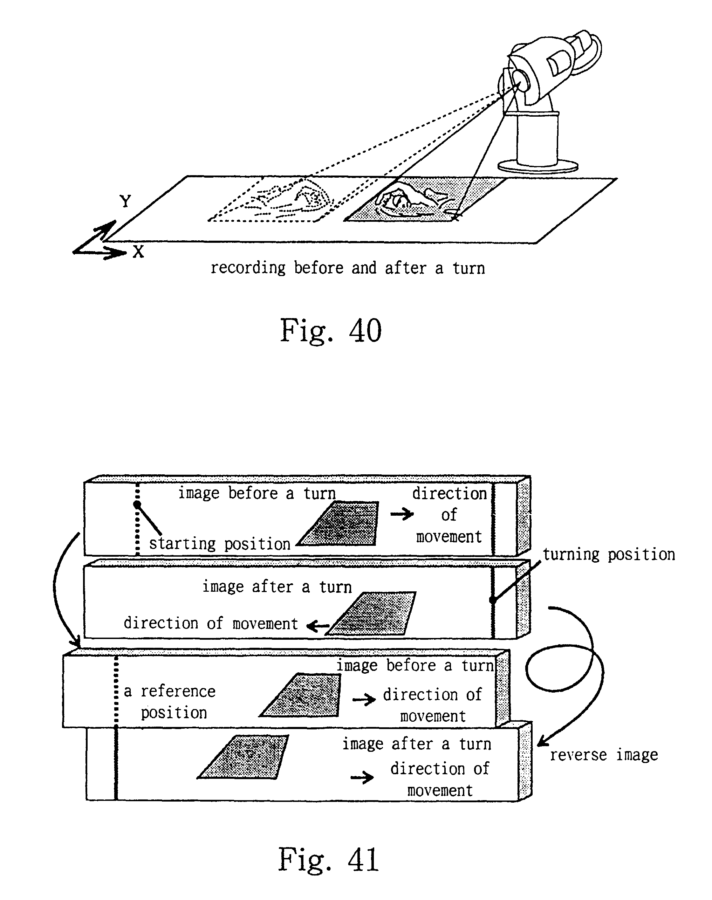

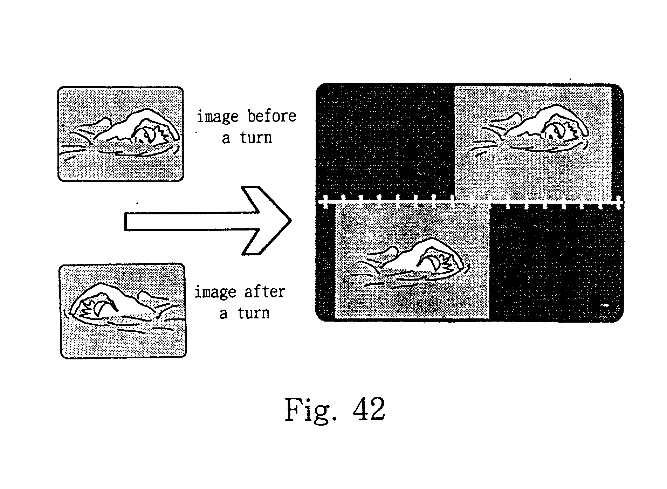

In swimming, because the size of the swimming pool is limited, it is necessary to repeat turns when long distance are swum. In this case, edit as follows. When capturing, as illustrated in Fig.40, the direction of movement is also reversed on the space-time map after a turn. In the edit operation, as illustrated in Fig.41, reverse the space-time map of after-turning horizontally in order to reverse the direction of movement after the turn and position them with that of before-turn. When matching the positions and the time in this case, it is necessary to pay attention as described above. By this operation, as illustrated in Fig.42, it is possible to obtain the image that is as if the athlete of before-turn and after-turn is competing in the adjacent lanes starting at the same time. In both editing operations above, the relationship of the position of compared images is displayed based on the actual coordinates of the three-dimensional space, so it is possible to measure the position or the distance by using the relation of the position on the image.

The operation mentioned above is expressed by the expression 15. That is, at first, the captured image is projected on the space-time map with matrix A. Then edited with matrix E in the space-time map. Finally it is transformed with matrix B, which is equivalent to capturing with a virtual camera.

$$\begin{pmatrix} \dot{u} \\ \dot{v} \\ 1 \end{pmatrix} = B \begin{pmatrix} \dot{x} \\ \dot{z} \\ 1 \end{pmatrix} = B \cdot E \begin{pmatrix} x \\ z \\ 1 \end{pmatrix} = B \cdot E \cdot A \begin{pmatrix} u \\ v \\ 1 \end{pmatrix} \qquad (15)$$

Fig.15 shows an example of the hardware configuration of the moving image editing segment 203 where this editing is done. In the moving image editing segment 203, three-dimensional data and time data as well as image data are inputted from input 1(231) and input 2(232) that is from the camera head 201 or data recording segment 202. Two matrix coefficient arithmetic circuits 233, 234 where the three-dimensional data and time data from the input 1 and the input 2 are respectively inputted, frame memory(FM1, FM2)235,236 that corresponds to input 1 and input 2, write address counter 237, 238 that gives the write address of the frame memory 235, 236, virtual camera controller 239, the matrix coefficient arithmetic circuit 240 that calculates the matrix coefficient by the output of the virtual camera controller 239, edit controller 241, the output of edit controller 241 and matrix coefficient arithmetic circuit 233, 234, matrix arithmetic circuit 242, 244 that calculates the matrix by the output of 240, read address counter 244, matrix arithmetic circuit 245 that calculates the matrix by the output of matrix coefficient arithmetic circuit 240 of the read address counter 244 and the virtual camera and outputs to edit controller 241, address calculation circuits 246, 247 that calculates the address for each image, address manager circuit 248 that outputs the read address and the frame memory selection signal by the output of the two circuits 246, 247, data select circuit 249 that selectively outputs the output of frame memory 235, 236 based on this selection signal, background data table 251 that gives background data, background data controller 250 are provided.

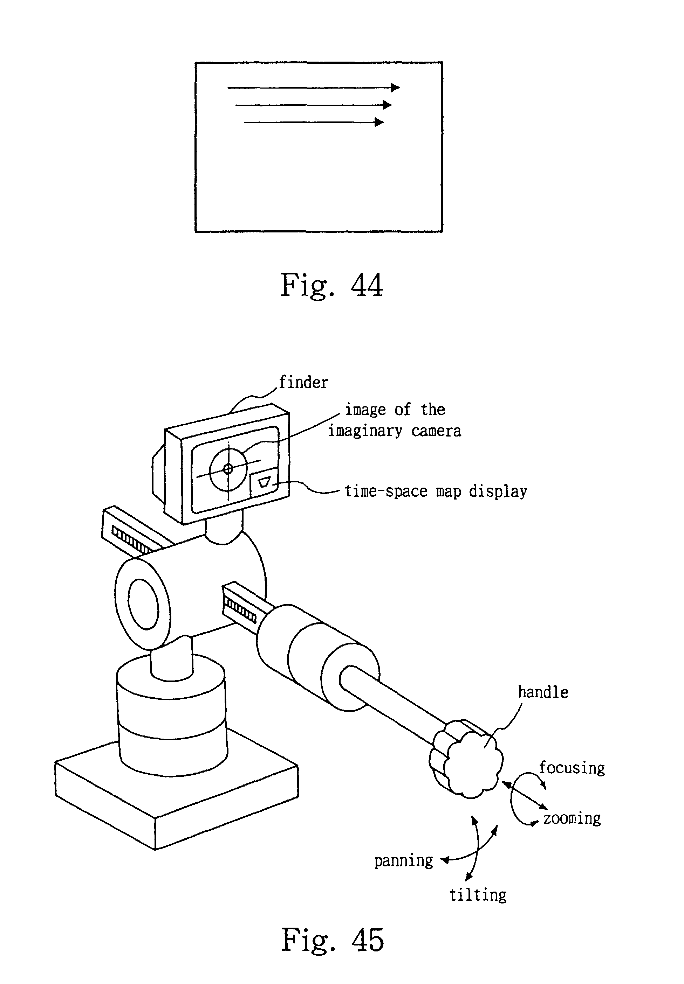

The operation is explained here. Output images are given by raster scanning as illustrated in Fig.44 so any points ( u', v') in the output image are calculated on this hardware The expression 15 gives the following expression 16 reversely.

$$\begin{pmatrix} u \\ v \\ 1 \end{pmatrix} = A^{-1} \cdot E^{-1} \cdot B^{-1} \begin{pmatrix} \dot{u} \\ \dot{v} \\ 1 \end{pmatrix} \qquad (16)$$

With this expression, the input image that corresponds to the point of the output image can be obtained. The input 1(231), input 2(232) can be either the output of the above mentioned data recording segment 202 or the camera head 201. In the input data, three-dimensional data and time data are used for calculating the matrix A1-1 for projecting on the space-time map. The inputs have different parameters so the matrix A1-1 is necessary for each of them. On the other hand, image data that was inputted is written into frame memory(FM) 235, 236 respectively. At the time, the address corresponds to ( u, v). This frame memory has two segments and writing and reading are done alternatively. Virtual camera controller 239 creates the three-dimensional parameter of a virtual camera. With auto-tracking, it is calculated based on the three-dimensional data of the input. This data gives the matrix B-1 with the matrix coefficient calculation circuit 240. Corresponding to the raster scanning of the output, read address ( u', v') are created in the read address counter 244. Based on this, the address ( x, z) on the space-time map is obtained in the matrix calculation circuit 245. Using this, edit controller 241 creates edit matrix E1-1, E2-1. Then, using read address and its matrix, write address( u, v) is calculated that corresponds to the read address( u', v') by using the expression 16. As mentioned above, there are two parts in the space-time map: the part that has an image and the part that has no images, and it is decided by investigating the write address value that was calculated. That is, in a read address, if the write address that corresponds to it has the value that actually exists, then it is a part that has an image. This comparison is done on each input in the address manager circuit 248 that is composed by the comparator and the selector and calculates the input and its address. The above mentioned frame memories 235, 235 are read at the calculated read address, and the images of a virtual camera can be obtained by selecting from the data selector circuit 249. In this example, the input has two parts but the input that has parts more than that can be calculated in the same way.

(The seventh embodiment)

In the sixth embodiment, only one virtual camera is treated for the output image, but it is sometimes better to output multiple images simultaneously by using multiple virtual cameras. In soccer, the relation of the position of each player is important so it is equivalent to view from the upper right. It is possible to output the image of each field on the space-time map. In this case, it is necessary to use the standard of HDTV or the standard of computer display because the resolution of normal TV is not sufficient. Also, it is possible to display tracks of a player by writing dots on the position of the player using coordinates values instead of outputting the image of the space-time map as it is.

(The eighth embodiment)

In the sixth embodiment, the auto-tracking method was used for an operation of a virtual camera, however, this operation can be done by human help. In this operation, instead of a mouse, a data input device that has a camera-like operation is desirable. For example, it is camera parameter input device as shown in Fig.45.
In this device, a tilting motion that corresponds to a vertical motion of a camera can be controlled by moving a handle vertically. Similarly, horizontal motion of a handle corresponds to the panning of a camera, and zooming that corresponds to the angle of view is controlled by pushing or pulling a handle, and focusing can be controlled by revolving a handle. Focusing can be used to make stage effects by generating images of a virtual camera out of focus intentionally. Also, to get the feeling of the operation of an actual camera, it has a finder in which the image of a virtual camera is displayed. Also, if the image has a lot of no-image areas, it is likely that you have lost sight looking anywhere, it is necessary to make an operation easy by displaying the visual field of a camera as well as the space-time map as in Fig.45.
Also, it is possible not only to track a virtual camera to the targeted object but also to move it in pre-defined motion. In the example of swimming, for example, by controlling a virtual camera and adjusting the center of screen to the pace of a record in Japan, it is possible to know at a glance if the new record can be established by looking at the position of the displayed athlete and how the pace distribution is.
Moreover, because the position of a virtual camera can be moved freely, for example, it is possible to control it as if it was always on the ceiling above the athlete. Also, as it is used for making films for TV programs or movies, it is possible to move a virtual camera like it is capturing on a cart moving on the constructed rail.

(The ninth embodiment)

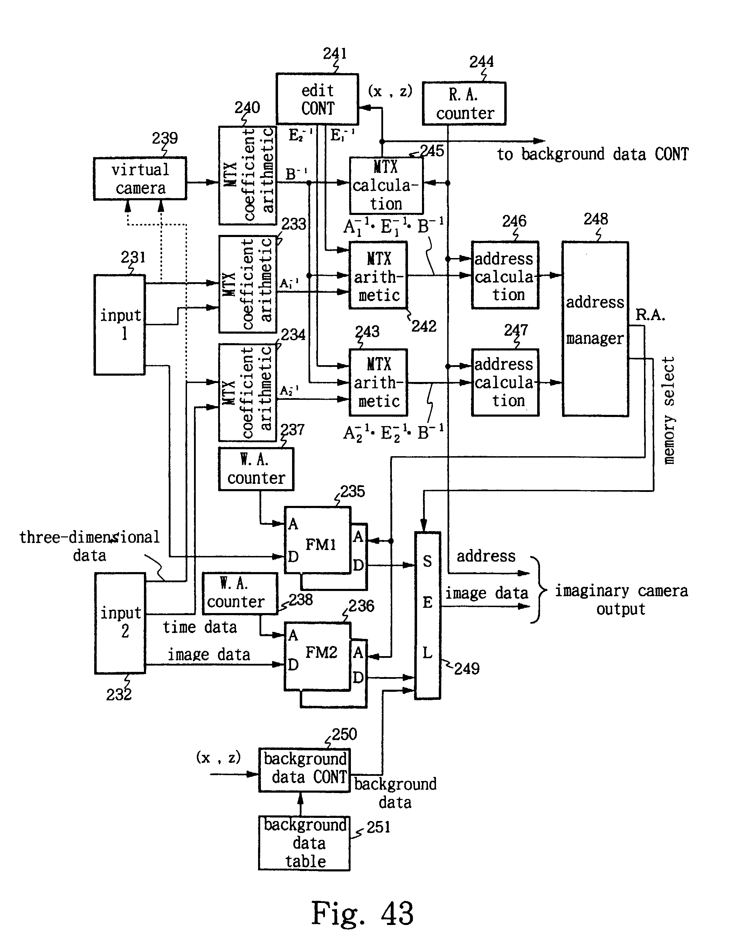

When capturing the space-time map with a virtual camera, it does not matter if it is smaller than the image obtained with a camera head, but usually the visual field of a virtual camera is larger than the mapped image as in Fig. 35. Therefore, no-image part 221 is visible in the visual field of a virtual camera. It does not matter if it is intended for measurement purpose, but if it is used for a picture to broadcast, the no-image part 221 seems unnatural. Thus, background image is put on the entire space-time map in this example. Because the space-time map is updated in field units, the background can be a moving image. But to generate moving images for the entire range it is necessary to always capture the entire range which is not efficient. And what is needed is not the background but the targeted object, so the background should be a still image. As shown in Fig.43, background data controller 250 in the moving image edit segment does this process. Because the background is a still image, it is not modified basically once it is pictured. High resolution cameras like HDTV can be used for picturing but in the case where the space-time map range is too large, the resolution may not be sufficient. Because of this, it is better to scan the entire range by using an auto-tracking head and picture the image. Like the normal operation, the image from the head is transformed using three-dimensional coordinates and is mapped and becomes a still image for the background. This still image is saved in the background data table 251.

When editing the space-time map, the map is cut and pasted, but the background processing at this time should have some choices apart from the targeted object map. For example, in the swimming example, when bringing the athlete from one lane to another lane, by leaving the background map as it is and editing only the map that has the image of the athlete, it is possible to get the image where one athlete was moved from some lane to another. Also, when a turn is concerned in the edition and transforming the map, by turning over the background and indicating that it was turned over, confusion can be prevented. To capture the background, the entire region is scanned and is usually scanned before measurement. By making use of this, it is possible to create a map of white-balance value or a map of brightness. It is not necessary to modify the setting of white-balance if the lighting is uniform. But sometimes color temperature may be different if outside lighting from a window is mixed or the lighting has different lamps.

Also, as for brightness, though it is possible to get the data of brightness from an image when picturing it, it is sometimes difficult to get the data of brightness from only one image when tracking a moving targeted object because it may cause picturing-the-lighting-directly or reverse-lighting in some camera angles. Also, it is possible to calibrate when capturing the background.

However, before this calibration, it is necessary to have finished the minimum calibration because three-dimensional coordinates is necessary for mapping. The calibration when capturing background is important in that it makes sure that there is no gap in the camera after the calibration when installing, etc., and in that it increases accuracy by the statistical process of repeating calibration.

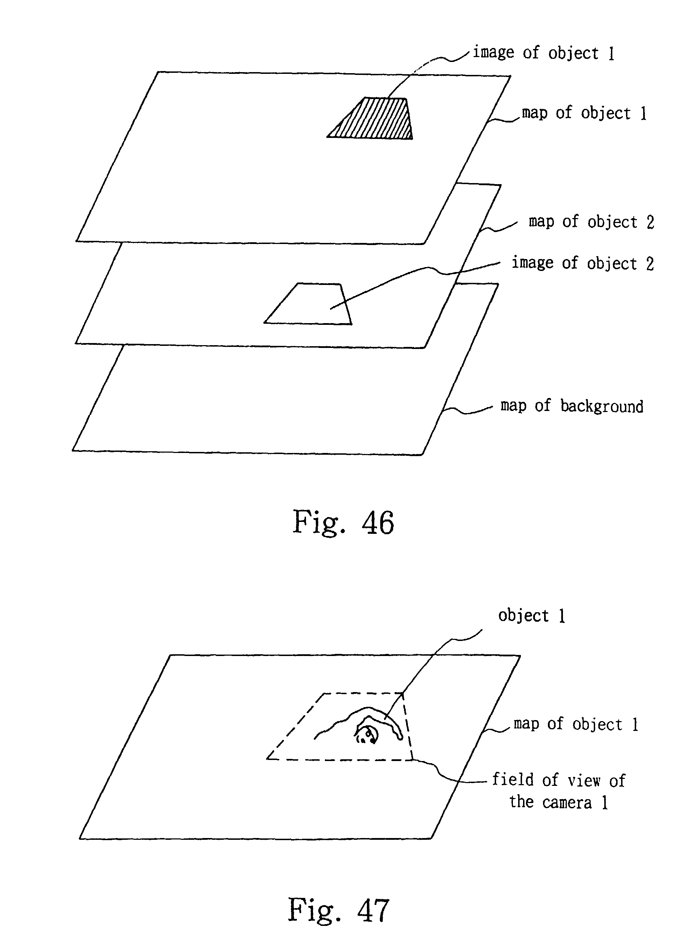

In this example, each targeted object has its own map and the captured background is mapped on the map for background only. These are displayed in front-back order when they are displayed. As shown in Fig.46, the targeted object 1 is in front of the targeted object 2 and when they are overlapped, the targeted object 1 is seen. Also, the background is in the back for all objects and it is displayed only when there is no targeted object in front of it.

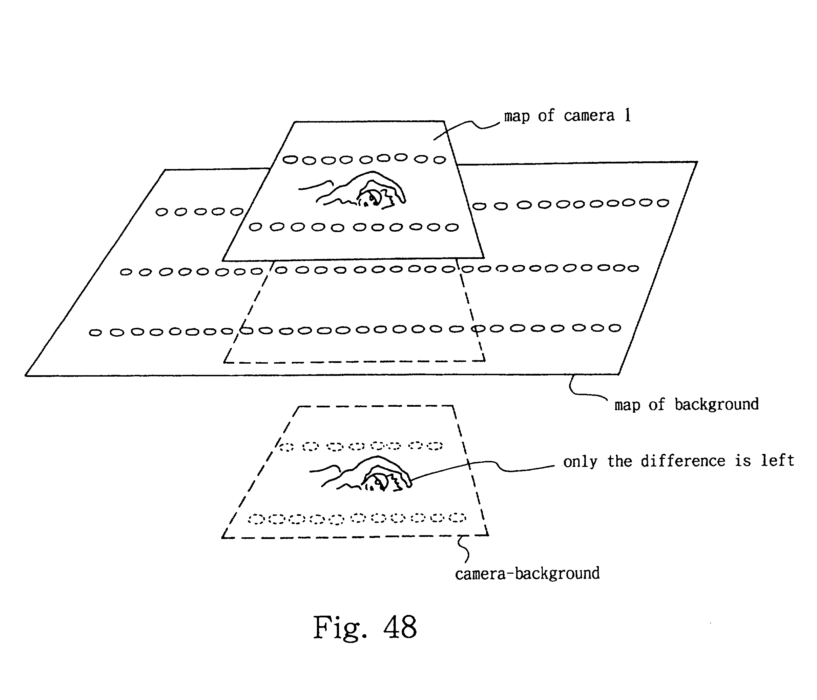

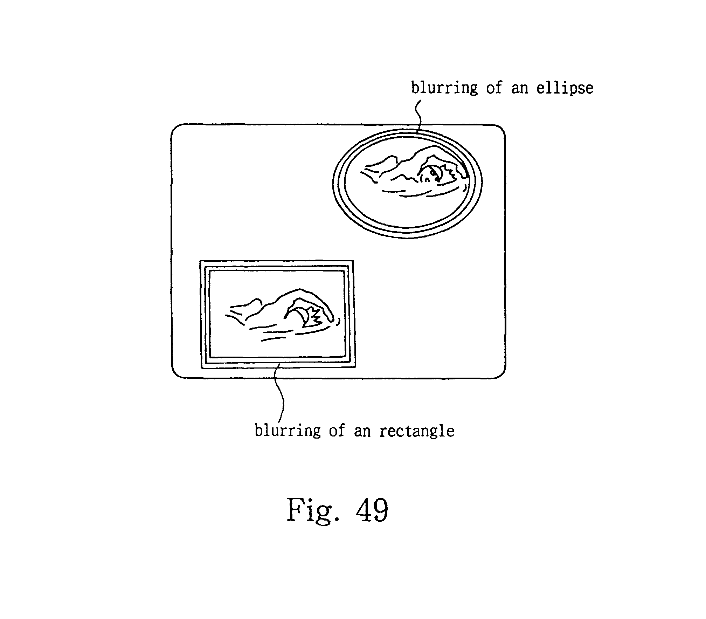

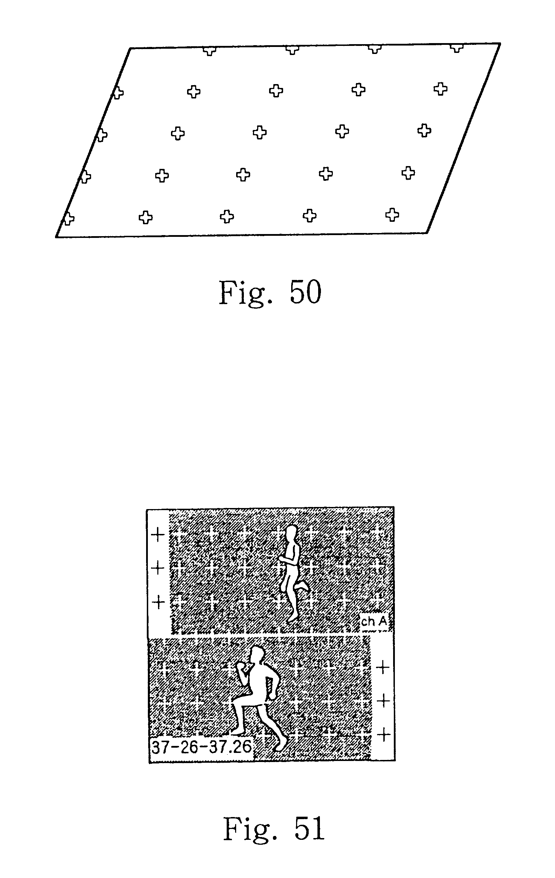

Next, the boundary of the background and the image, which was obtained with a camera head, are explained. In the example mentioned above, the image from a camera head is displayed entirely in the image to be output. It does not matter in the boundary because the image is originally unnatural if the background has no image. But like in this example, when the image quality is ensured by attaching the background, the boundary of the still image background and the moving image looks dirty if it is left as it is. Because of this, the following three methods are chosen according to the characteristic of the target. The first method is, as shown in Fig.47, extracts the targeted object and makes the boundary of the targeted object the boundary to the background. In this case, the image seems natural but it is assumed that the targeted object can be extracted. If the background image is relatively uniform such as a lawn and different in color from the targeted object, it is possible to extract using the difference of color based on the chromakey. If it is impossible to extract the targeted object by using the difference of color or the difference of luminance, as with the second method, the background data can be used to extract the targeted object. Both the image from a camera head and the background captured before it, the difference is small enough if they are captured on the same position because they are mapped based on the three-dimensional position. By erasing the background from the image of a camera head, it is possible to extract only the targeted object as the difference, as shown in Fig.48. However, in this case, it is important to make the condition of capturing the background and the condition of capturing the targeted object as similar as possible. A changing background such as a swimming pool is not suitable for it. Also, it is necessary to do the same operation by making pairs of the map of the targeted object and the map of the background when editing them. When captured in the different places and with no possibility to extract the targeted object using the above two methods, then as the third method, the means of blurring the boundary is employed as in Fig.49. Blurring can be achieved by averaging the data of two images changing their ratio. The shape of blurring is chosen based on the target such as a rectangle or an ellipse which is matching the edge of a screen. Though it is impossible to get high-quality image with this method, it is possible to employ the means in the case where above two methods can not be employed. For the background, it is possible to use the calculated image such as computer graphics as well as the image that is actually captured with a camera as mentioned above. The movement of the athlete will be clear as shown in Fig.51 by adding a grid as a mark that does not actually exist as shown in Fig.50, to the background captured with a camera. Further, it is possible to compose the background of a famous place to enhance the image-effect.

(The tenth embodiment)

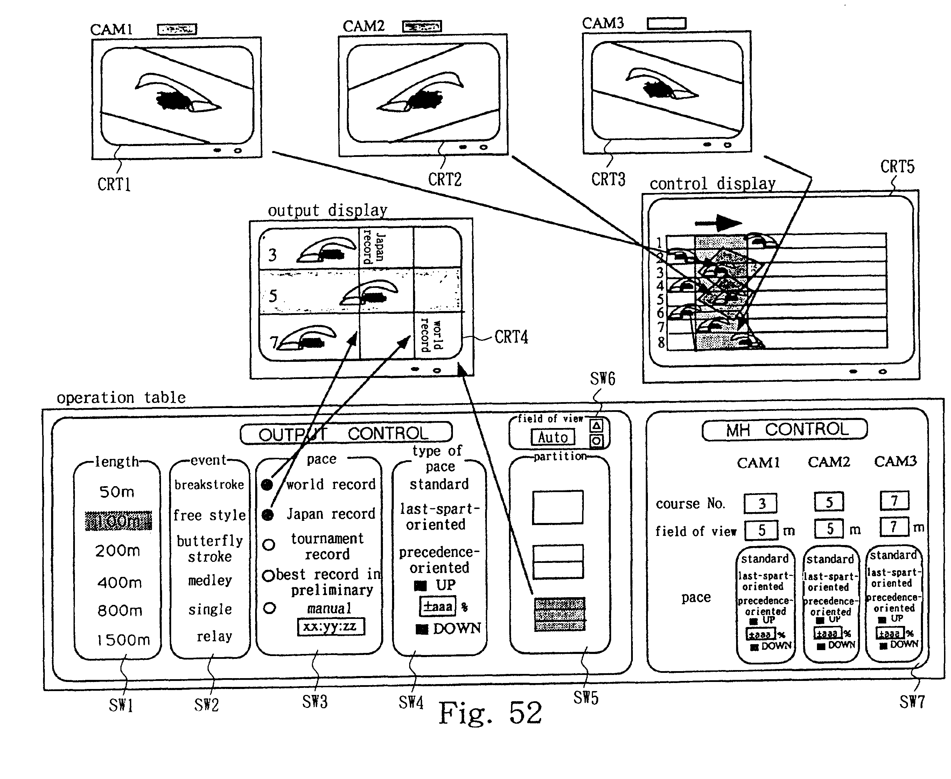

It is possible to utilize computer graphics used in the ninth embodiment for not only background but also the targeted object. A targeted object generated from computer graphics can be processed for editing by mapping it on the space-time map of the targeted object in the same way as the targeted object from a camera head. It enables to let the athlete who is actually captured compete with the athlete whose data alone is at hand by moving the virtual targeted object generated from computer graphics. If only the total time is on the record, it is possible to predict the time by the pace distribution of the athlete such as last-spurt-oriented or precedence-oriented. Fig.52 shows an example of the edition system for a swimming competition that utilizes this prediction. From CRT1 to CRT3 are the image monitors from camera heads. Camera heads are controlled in the operation table SW7. This device enables to adjust the movement to the predicted pace as well as auto-tracking. CRT5 is a control display which corresponds to the space-time map. In this case, in order to know the status of other athletes, the moving image that is captured with a wide-view lens is used for the background. This edition device can display lines that indicate the virtual targeted object and has toggle switches on the control table for the movement of virtual targeted objects. In this figure, the position of the athlete who has the pace distribution that matches the record of Japan is displayed as lines for the virtual targeted object. Multiple virtual targeted objects can be displayed simultaneously for world record. Edited images can be monitored in CRT4.

(The eleventh embodiment)

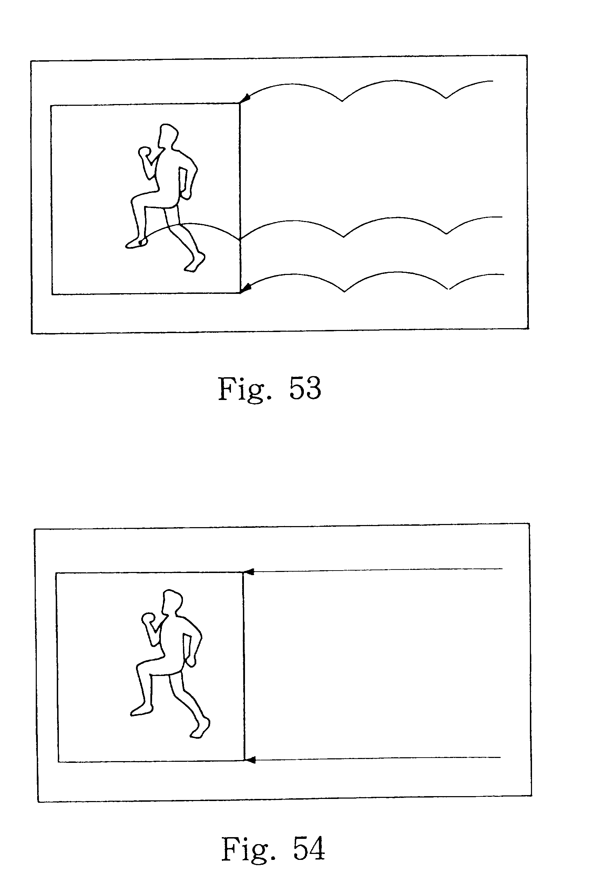

With auto-tracking, the object that can be clearly extracted from the image is often selected for the targeted object. For example, when tracking a runner for motion analysis and selecting his shoes as the targeted object, the obtained image moves too much as shown in Fig.53. The desirable image has a smooth motion like the operation of a camera by a man as in Fig.54. However it is possible to obtain the smooth motion by modifying the auto-tracking algorithm, it is necessary to consider the characteristic of a camera head for tracking, so a special program is needed. In this case, by making a constrained plane a plane that is vertical to the ground and that is along the line passing on the constrained plane, and by restricting the movement of the virtual camera to the horizontal direction and filtering the movement it is possible to obtain the image that has smooth camera-work as operated by a man. Also, it is easy to determine the movement of the virtual camera in this case because, unlike a camera head, it is not necessary to consider the actual physical quantity such as the characteristic of inertia-motor of a camera. And the head-tracking is not necessarily smooth and it is possible to use a general head because the targeted object is intently tracked. It is also possible to maximize the tuning for designing a head because it is necessary to pursuit the tracking performance.
Also, it is easy to modify the camera-work after recording once.

(The twelfth embodiment)

When usually using image recording device usually and editing the output of the image recording device, it is possible to play in stop-motion or in reverse-play as well as the normal play of moving images. Similarly to the normal editing device, it is possible to search for the desired frame or reverse-play by manipulating a jog-dial or a shuttle-dial. As mentioned above, in the present invention, it is possible to get the still image in units of fields or reverse-play because the images are mapped on the space-time map in units of fields. In this case, it is possible to obtain the still image by stopping writing image into the field memory and repeating the replay of the same data. It is also possible to read out the image and the accompanying data of the required field by specifying the time or the field-number toward the recording device. Also it does not cause any problem for mapping on the space-time map if the arbitrary field is specified because the accompanied data such as the three-dimensional data is accompanying to each field of the image. In the normal moving image, fields are sequentially mapped or read out, but by changing the sequence freely it is possible to reverse-play by reversing the sequence, or to play in slow-motion or in fast-forward by changing the interval.
Moreover, in the present invention, because the mapping of images on the space-time map and the calculation of the transformation matrix with the virtual camera can be controlled independently, for example, it is possible to move the virtual camera alone and displaying the still image at the same time. Because of this, it is possible to get a stage effect for so-called highlight scenes by moving the image in slow-motion and emphasizing the positional relationship by changing the position or the direction or the zoom of the virtual camera. For example, in the swimming competition mentioned above, if the target is the-last moment of touching, it is possible to display the transformed image by transforming the image projected on the space-time map to the image captured by moving the position of the virtual camera, or from a different position, or by changing the zoom setting.
As described above, in the present invention, by employing the concept of the virtual camera for the image projected on the space-time map, it is possible to transform the moving image projected on the space-time in arbitrary spatial location or in arbitrary time base.

Thus, the sixth and the eleventh embodiments have the following effects:

It facilitates the analysis of the moving object which is the target for motion analysis because it is possible to obtain the moving image at the arbitrary selection desired by an observer.

Also, it facilitates the comparison of multiple moving objects.

Also, it enables to compare the moving objects at the same time that is in a different time or on a different spatial location.

Also, it facilitates the recognition of the position of the current targeted object compared to the pace distribution of the comparison target such as Japan record or world record.

Also, by using the background, it enables to utilize the moving image for broadcast that is captured with the virtual camera as a natural image.

Next, applying these image transformation technique, the embodiments of the image display device which display the images of the virtual objects for the observer based on the three-dimensional information of the moving observer are described.

(The thirteenth embodiment)

Fig.55 illustrates the principle of the present invention, and Fig.56 shows the positional relation when Fig.55 is viewed from above.

Code 301 is an observer, and in front of the virtual object 303 which is seen from the observer 301, screen 302 is positioned, and the projection image 305 is projected on the screen 302 from the projection center 306 of the projector. By doing this, seen from the observer 301, it is possible to recognize the virtual object 303 by the virtual object's projection image 304 which was projected on screen 302.

The transformation parameters of the projected image can be defined if the three-dimensional data of the observer 301, the location of screen 302, the location of the projection center 306 of the projector, and the three-dimensional data of the virtual object are known.

The characteristics of the present invention's first viewpoint is that, in an image display device providing a screen and a projector as the image display means to display the image that corresponds to the observer's viewpoint, it provides a measurement means to measure the three-dimensional data of the observer 301, and an image generation means to generate the image equivalent to the image seen from the viewpoint of this observer based on the three-dimensional data of the measured observer 301, and an image transformation means to transform to the image seen from said observer's viewpoint when the generated image is displayed with said image display means which is in the different location from said observer.

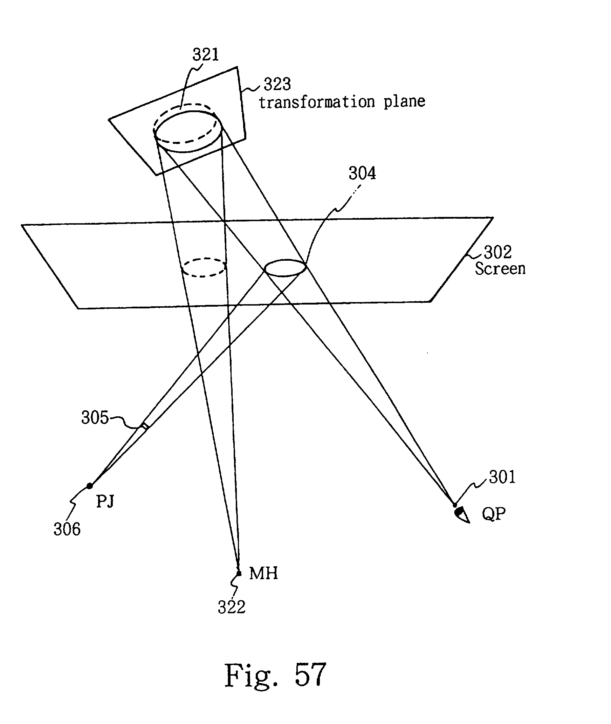

Fig.57 illustrates the principle of this projected image transformation. First, when the virtual object is captured in another space-time, the virtual object (moving targeted object) is captured in addition to the three-dimensional data with a camera head(MH) 322. Then image transformation is performed while assuming the observer 301's viewpoint to be a virtual camera. This image transformation is described in the Japanese Patent Application No. 221363 (1993) (published 23/06/1995 under JP-A-07-079382) and the Japanese Patent Application No. 309473 (1993) (published 23/06/1995 under JP-A-07-162744) which were applied earlier. The spatial location of the virtual camera applied earlier is set up arbitrarily, however, in this embodiment, it depends on the observer 301's movement and the observer 301's viewpoint is treated as the viewpoint of the virtual camera. In such a case, three-dimensional data measurement device is used separately in order to define the viewpoint for the observer 301, and, for example, the three-dimensional data is measured with the high-precision universal head and the camera head with a zoom lens which were used in capturing the virtual object.

Assuming the observer 301 as a virtual camera, the image capturing the targeted object 321 with a camera head 322 is transformed using the transformation plane 323 in order to obtain the image seen from the observer 301. This image transformation is described in the embodiments described earlier. By this transformation, it is possible to get the image of the targeted object 321 which is seen from the observer. Next, by projecting the obtained image on the screen 302 with its center on the observer 301, it is possible to get the image 304 on the screen 302. Next, the obtained image is transformed to the projection image 305 by using the projection center 306 of the projector. In such a case, the screen 302 is the second transformation plane which transforms the image captured at the observer 301 to the projection image 305 of the projector.

Thus, transforming the image in three stages, it is possible to get the projection image 305 which is to be projected with a projector. The actual transformation is the repeated transformation of projection from a plane to another plane, and the image transformation is a coordinates transformation by a transformation matrix, of which principle is explained in detail in the first embodiments. By performing this image transformation in every field, it is possible to project on the screen 302 as a moving image.

Furthermore, if the virtual object 303 was generated by computer graphics, the image 304 on the screen, when the observer 301 sees the virtual object 303, can be obtained very precisely by calculation, therefore, the projection image 305 which generates such an image and the three-dimensional data of the projector (direction and angle of view) are obtained by one transformation where the screen is the transformation plane.

On the other hand, the projector is loaded on the universal head which can be controlled of its direction with the precision high enough for the measurement of the three-dimensional data. Moreover, the angle of view can also be controlled precisely. The projection image can be updated in units of fields like a camera by using the projection means of CRT, such as a video projector, or using the liquid-crystal projector. If such a projector is used, it is possible to project on the screen 302 as a moving image by calculating the three-dimensional data and its transformation parameters in units of fields.

The location of an observer (an athlete) can be calculated with a camera head which captures the athlete. Also, the virtual object is always accompanied with the three-dimensional data with the image, even if it was composed with the computer graphics, and even if the image captured with the camera head that measures the three-dimensional data is used. Therefore, if the location and the direction in three-dimensional space of the screen 302 and the parameters such as the location of the projector are known, the transformation calculation for the image to be projected can be performed. The method for calculating the location of the screen 302 and the projector's parameters are described later.

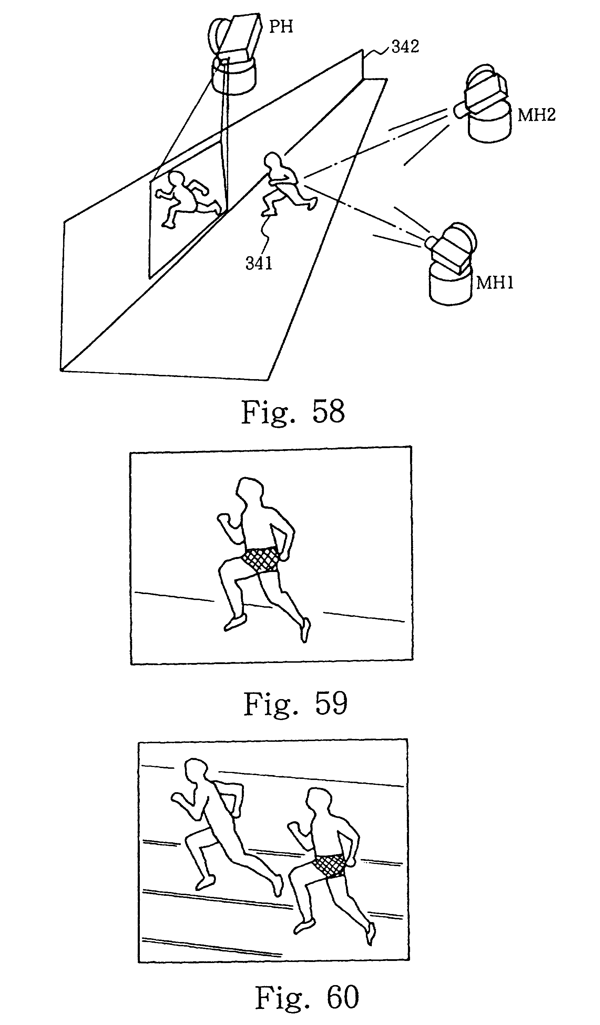

An athlete as an observer is also a subject. The image obtained by capturing an athlete with a measurement camera head is edited similarly to the moving image processing device proposed above. In such a case, data of the virtual object is also added. This is illustrated in Fig.58, Fig.59, and Fig.60.

Fig.58 and Fig.60 shows that a screen 342 is set in the linear lane, and an athlete 341, who is an observer, is running, and the image of the virtual athlete, who is the targeted object seen from the athlete, is projected with a projector, and this athlete is captured with the camera heads MH1 and MH2. Fig.58 shows how the capturing is performed. The athlete 341 runs along the screen 342. Simultaneously, the athlete is tracked with two measurement camera heads MH1 and MH2, and their three-dimensional location is measured, and their image is captured. On the other hand, an another athlete, who is a virtual object, is projected on the screen 342 from the projector head PH. The location of projection of this image, and the size of the image, and the image itself are calculated depending on the location of the athlete 341 who is measured, and the virtual object is projected on where it should be if it is seen from the athlete 341. The image of the athlete captured with the measurement camera head basically contains only the athlete as the targeted object as shown in Fig.59. But not only the athlete, but also the image of another athlete, who is a virtual object, is added to the edited image as shown in Fig.60. Moreover it is possible to add background if necessary. This edit operations are also performed based on the three-dimensional data of the athlete and the three-dimensional data of the virtual object. Because the image of another athlete, as a virtual object, on the screen is calculated based on the location of the athlete, the location and the figure of the projected image will change if the observer athlete moves, even if the virtual object doesn't move. Because of this, if the athlete sees it, he feels that the location of the virtual object is not on the location of the screen but on the location where the virtual object is put on, though it is projected on the screen. Therefore, the positional relation of the screen and the athlete can be any place where the athlete can see the projected image on the screen.

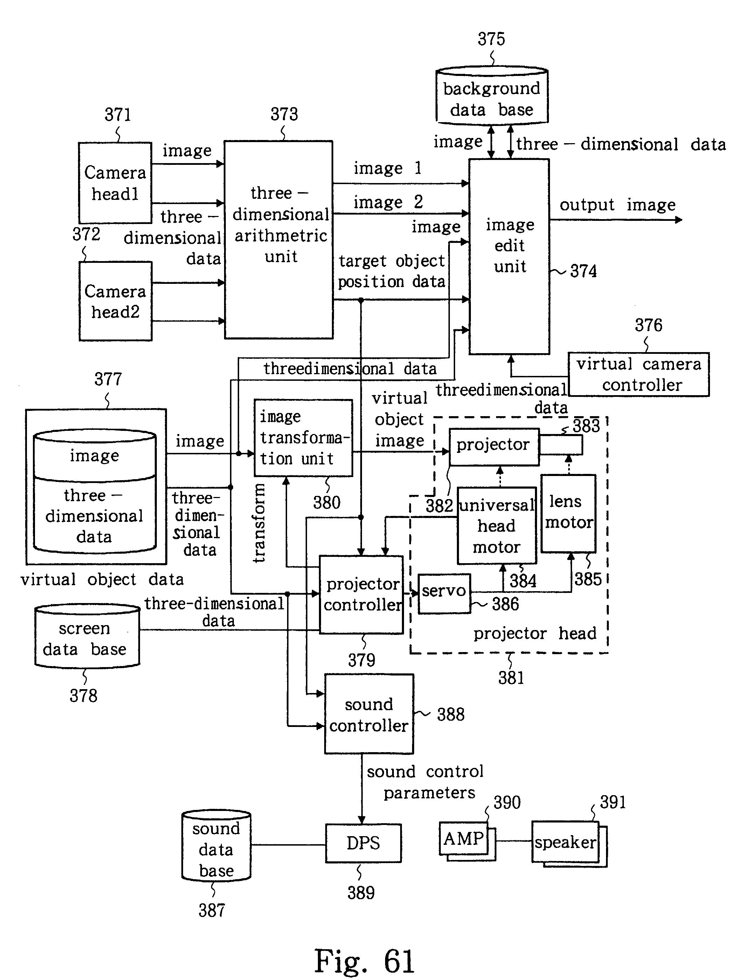

Fig.61 shows a block diagram of the image display device which projects the virtual object on the screen 342 corresponding to the movement of the athlete 341 shown in Fig.38.

In this block diagram of the image display device, the composition of the camera head 371, 372, the three-dimensional arithmetic unit 373, the image edit unit 374, and the configuration of the background data base which has the background image which is given to the image edit unit 374, and the virtual camera controller 376 which gives virtual camera's data is the same as the composition of the moving image processing device in the first embodiment.

The feature in Fig.61 is that it provides the virtual object data base 377 which has the image of the virtual object and its three-dimensional data for projecting the virtual object shown at the bottom side of the figure, the screen data base 378 which has the three-dimensional data of the screen, the image transformation unit 380 which transforms the image of the virtual object with the transformation parameters of the projector, the projector controller 379 which controls the projector head based on the three-dimensional data of the observer and the virtual object, the projector head 381 which projects the image of the virtual object, which was transformed with the control-output of the projector controller 379, on the screen.

The projector head 381 includes: the projector 382, the lens 383, the motor of the universal head 384 which controls the universal head on which the projector 382 is loaded, the lens motor 385 which controls the lens 383 with high-precision zooming, the servo circuit 386 which controls the servo of the motor of the universal head 384 and the lens motor 385.

Also, the image display device can give sound effects and provides the sound data base 387, sound controller 388 which outputs the sound control parameters which control the output sound with the three-dimensional data of the observer and the three-dimensional data of the virtual object, digital signal processor(DSP) 389 which generates the sound effect for output based on the sound control parameters, the amplifier 390 which amplifies the output of the DSP 389 and the speaker 391.

These operations are described below.

The three-dimensional location of the athlete 341 is calculated with the measurement camera head 371, 732 and the three-dimensional arithmetic unit 373. In this example, two measurement heads are used for measuring the three-dimensional location of the athlete, but the number of heads can be only 1 by using a constraint plane, or it can be more than 3, depending on the characteristics of the targeted object. Along with the measurement of the three-dimensional data, the image is also captured. The captured image and the three-dimensional data are edited with the image edit unit 74. This edit operation is described in the image transformation for the image editing in the image editing unit of the first embodiment described earlier.

Moreover, the three-dimensional data of the athlete 341 is also used for calculating the virtual object. The image and the three-dimensional data of the virtual object can be obtained by accessing the virtual object data base 377. This data can be made with the appropriate physical models and computer graphics, however, in this example, the measurement data of an another athlete is used. This virtual object data base 377 can extract the image with the three-dimensional data of the virtual object by specifying the elapsed time from starting signal, for example. Also, the three-dimensional data of the screen on which the virtual object is projected is measured beforehand and is recorded in the screen data base 378 as the screen data. When the screen is fixed, the data is the table of constant values. But when the screen moves, it is possible to obtain the three-dimensional data of the screen based on the elapsed time from the starting signal, for example, in the same way as the virtual object data base.

The projector controller 379 controls the projector head 81 by calculating the location to project based on these data. It obtains the transformation parameters of the image, and controls the image transformation unit 380, and transforms the image from the virtual object data base 737, and projects with the projector 382. The problem in this calculation is the time lag. The three-dimensional location of the athlete can be obtained with the delay of several fields usually. Also, accessing the data base of the image to project and image transformation and projection cause several fields delay. Though the time lag does not cause any problems in the slow movements, it can be recognized in the normal human movement. Therefore, feed-forward is necessary for control. First, the accessing of the data base of the virtual object can precede the actual starting signal because it is done after the starting signal. Moreover, the three-dimensional data of the athlete can be calculated beforehand by predicting the movement of the athlete. The movement of the athlete can be predicted easily when the athlete is simply running as in the example of Fig.58, but it is sometimes necessary to devise the physical models in the complicated movements. Also, it is possible to decrease the time lag by shortening the cycle of a field by using a special camera and a special video projector. In such a case, the data of the virtual object can be calculated without any difficulties even if the cycle of a field is different because the three-dimensional data is managed in absolute time basically, however, it is desirable that the data of the virtual object has fast cycle of a field in terms of images.

The projector head 381 is basically a video projector which replaced a camera of a measurement camera head. The video projector (projector 382) which projects the image includes the one with very-high-brightness CRT or the one with liquid crystal shutter, and basically it can be anything as long as it can update the projection image in units of fields and has enough brightness. But considering the dynamic characteristics, it should be light-weighted and durable to vibration.

The image of the video projector is projected on a screen with the lens 383. The angle of view of this lens should be controlled precisely. The angle of view of the lens can be fixed to maximum as required if the resolution of the video projector is high enough and also the brightness is high enough. Even in that case, the angle of view must be calculated precisely and it is convenient if it can be remote-controlled. When projecting color images, it is possible to combine multiple video projectors and multiple lenses. In such a case, it is necessary to adjust the characteristics of the lenses to prevent color divergence. In this example, one projection lens is used by using a liquid crystal projector where colors are mixed in the optical system in the internal projector. Lenses are controlled of its focus as well as its angle of view, and its distance to the screen can be calculated because the three-dimensional data of the screen and the three-dimensional data of the projector head are known.

Based on these values, the lens 383 is driven with lens motor 385. If the screen and the projector have an angle, the distance becomes different in the image, therefore the optical system should have a large depth of field.

These projector 382 and lens 383 are loaded on the universal head of which angles can be controlled precisely. If the image transformation is used to rotate a image, the universal head must have at least 2 degrees of freedom and is appropriated by the measurement head. In this example, considering the dynamic characteristics and the precision, the universal head with two direct drive motors is used. The servo system, which adjusts the direction specified by the projector controller 379, is embedded in this universal head and the projector. If it has enough dynamic characteristics, there is no gap between the location that controller 379 specifies and the actual location, but normally, there is a gap. Taking account of this, in order to increase the precision, it is necessary to use the value of the actual location of the projector head 381 instead of the value specified by the controller 379 when calculating the parameters for image transformation. Also, if the resolution of the projector 382 is high enough, by making the angle of view wider than it is required, it is possible to substitute the movement in the projected image in addition to the movement of the projector head, for the movement of the image of the virtual object on the screen. By doing as described above, the characteristics required for projector head 381 can be relaxed.

By using the system described above, it enables the subject athlete to recognize the virtual object. Furthermore, to increase the presence, sound effects are added in this example. Sound effects not only increase the presence but also are important for the athlete as the starting signal, such as starter's voice and the pistol's sound. Besides, it gives the presence in this example. The sounds, which is used for sound effects sampled or synthesized electronically, are saved in the sound data base 387. It contains the sound such as the starter's voice and a cheer in the stadium. Also, it contains the data peculiar to an athlete such as the cheering voice for the athlete. It is possible to control the sound, such as increasing the cheering as the athlete approaches a goal because the three-dimensional location of the athlete is known. This control is conducted by the sound controller 388. It is possible to know if the athlete gets ahead of or is left behind, based on the three-dimensional data of the athlete and the three-dimensional data of another athlete as the virtual object, so the cheering voice can be added or the volume of cheering can be changed. These operations are conducted by the digital signal processor (DSP) 389. The DSP 389 is connected to multiple amps 390 and multiple speakers 391, and can control the sound field as well as volume and tone quality by using multiple speakers. By controlling sound field, it is possible to control the direction of sound independently to the speakers' positions. It can realize the passing in front of the cheering party or the breathing of another athlete as the athlete moves, by controlling the direction of the sound. Also, there are screens near the athlete, and by controlling the sound field, it is possible to decrease the reflection of sound by a screen and decrease the existence of a screen a little.

In this system, the location of the athlete as an observer is a subject and is measured at all times. Therefore, the surroundings can be changed according to its location. Therefore, in addition to images and sounds, it is possible to increase the presence by stimulation such as blowing wind or tilting a floor for changing acceleration, or changing temperature and lighting according to the location of the observer.

(The fourteenth embodiment)

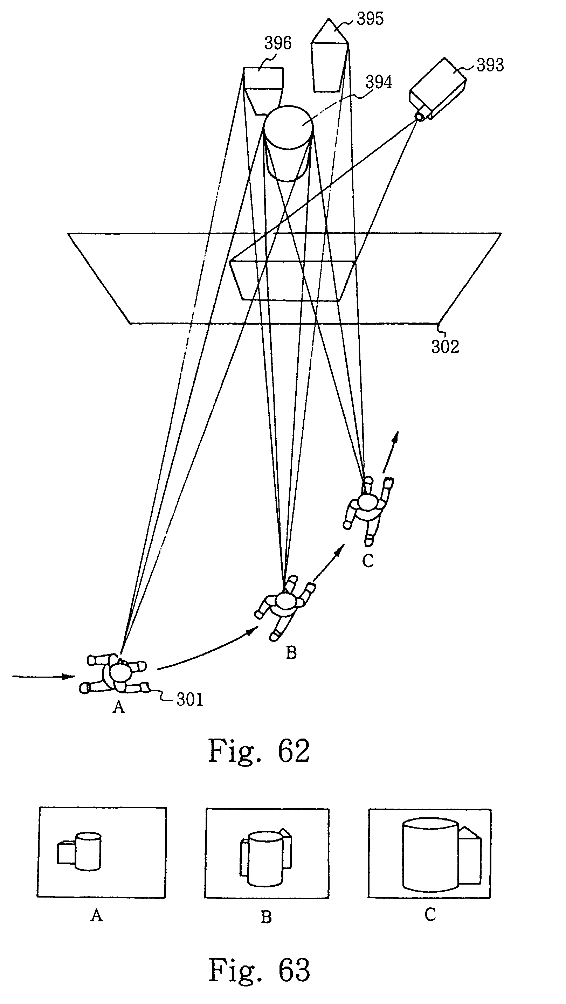

When there are many virtual objects, the virtual objects, of which the observer can see in the same direction, can be added by the transformation of image projected with the projector head, though it is possible to set out as many projector heads as the number of virtual objects. Each virtual object is transformed of its image based on the three-dimensional data. Also, simultaneously, it is possible to calculate the positional relation if it is seen from the observer because the three-dimensional data of each virtual object is known. It is possible to make one projector image from multiple targeted objects by overlapping the images transformed based on the calculated positional relation. When there are multiple virtual objects, the overlapping will change as an observer moves, even if the virtual object is standing still as shown in Fig.62. In Fig.62, three virtual objects are projected. The screen 302 and the projector head 393 are standing still in this figure. The virtual objects 394, 395, 396 are projected on the screen 302 assuming they have the positional relation as shown in this figure. The three-dimensional data of the observer 301 is measured with a measurement head, though the observer 301 is not shown in the figure. And it is needless to say that the projected image is composed based on the three-dimensional data of the observer 301. If the observer 301 is on the location A, the image projected on the screen will become as shown in A in Fig.63. The virtual object 395, which is hiding behind the virtual object 394, can not be seen. Also, entire virtual objects have small view because the virtual objects are far from the observer. If the observer moves to the location B, the image on the screen will become as shown in B in Fig.63. Then the virtual object 395, which is not seen from the location A, becomes visible.

Furthermore, if the observer moves to the location C, the image will become as shown in C in Fig.63. Then the virtual object 396 is invisible and they become larger because the distance to the observer is shortening. These images seem like planes because the image of the virtual objects are generated on the screen based on the observer's location. But the observer feels stereoscopic effect because the view will change if the observer moves. It is just like the outside view seen from the window is changing when walking around the room.

The projected image is only a part of the screen in Fig.62, however, it is possible to project on larger area by projecting in wider angle of view with a projector which has enough resolution, or by using multiple projectors. Thus it is possible to locate many virtual objects. Both the moving object and the still object such as scenery can be used for virtual objects. Thus it is possible to change the image on entire screen based on the observer's location. Moreover, all the surroundings of the observer can be composed as a image by surrounding the observer's moving range.

Also, it is possible to obtain the three-dimensional data of the observer's posture, the direction of fingers and the direction of a head simultaneously, in addition to the location of the observer, by adjusting the field of view of the measurement camera head in order to capture the entire body of the observer, who is attached with markers on his joints of arms and legs, or on his head, etc. In some cases, it is necessary to capture from multiple directions with measurement camera heads because the observer can become invisible. Thus, by measuring the observer's location and posture, etc. in real-time, the virtual reality can be realized without putting on special devices such as goggles or the data-suit.

(The fifteenth embodiment)

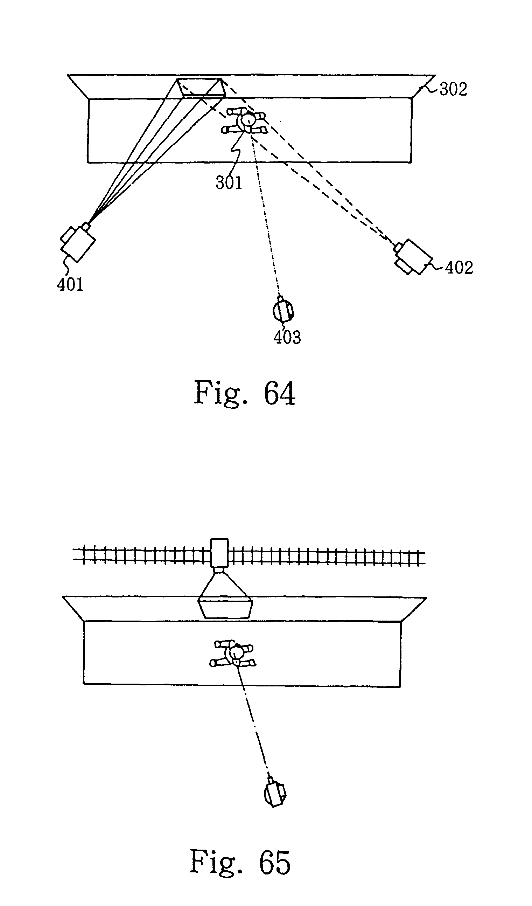

When the virtual object's image projected on the screen is moved as the observer moves, shade may be generated depending on the relation of the observer and the screen and the projector head. In the arrangement shown in Fig.64, the observer 301's shade may be generated on the projection image if the projector head 402 projects. Shade may not be generated if projected from behind the screen 302 as shown in Fig.58 or Fig.62, but larger space is needed. Also, as shown in Fig.65, large space is not necessary if the projector head is carried with parallel displacement, but the mechanism for parallel displacement will be large-scale and complicated in order to get the location with enough precision required for image transformation. And the location of the observer 301 must be measured with one or more measurement camera heads 403. Therefore, to utilize the space effectively, it is necessary to locate the measurement camera head and the projector head on the same side of the screen.

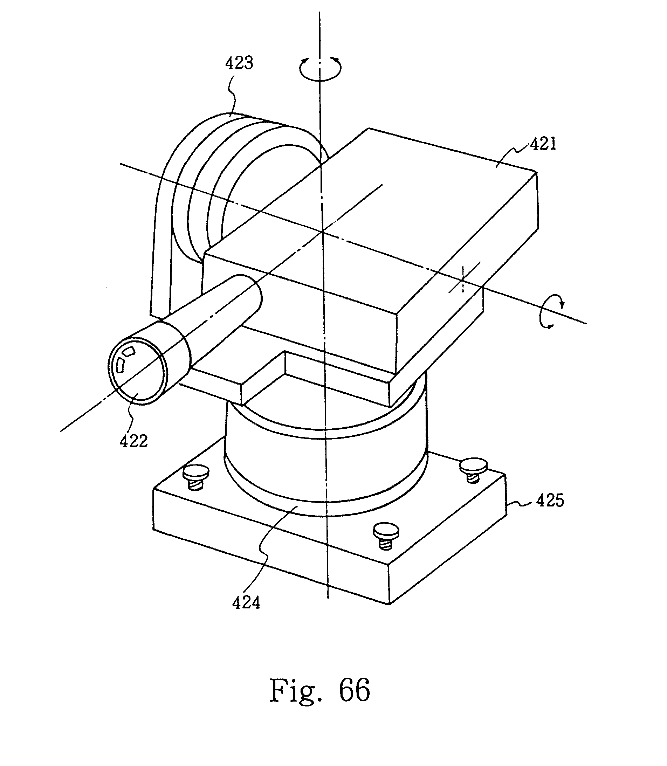

In this embodiment, multiple projector heads are used and one screen image is projected. If the projector head is moved, it is necessary to get the location and the direction with precision high enough to transform the image in the field period. Though it is possible to use the parallel displacement as shown in Fig.65 if the location and the direction are known, the scale of the device will be large. In this example, polar-coordinates-type projector head with two rotation axes is used as shown in Fig.66. The direction of the video projector 421 can be changed with two motors: tilt-axis motor 423 and pan-axis motor 424. Compared with the measurement camera head, the video projector is heavy, so the basement 425 must be fixed firmly.

In this example, the video projector itself is rotated, however, the rotating part can be lighter in weight if mirrors are used. And in this example, optical axis of the projection lens 422 is on the intersection point of the two rotation axes. And if there is a gap and the gap does not change in rotation, it is possible to correct it by considering the gap in the calculation of the image transformation.

In Fig.64, two polar-coordinates-type projector heads 401, 402 like mentioned above are used. If projected from the projector head 402, shade of the observer may be generated, however, the projector head 401 can project the image without generating shade. Thus, by using multiple projector heads, it is always possible to project the image of the virtual object not depending on the observer's location.

If multiple projector heads are used, it is necessary to switch them. It is possible to know the status that can cause the interference because all the three-dimensional data required for projection such as the observer's location are measured. In this example, it is necessary to switch the projector head based on the positional relation of the observer and the projection point because the observer generates the shade. If a pillar of a building gets in the way, it is possible to switch the projector head based on the direction of the projector head. The most simple way is to switch from the image of one projector head to the image of another projector head in units of fields when the switching condition is satisfied. Each projector, which is a video projector, can play and stop the image in units of fields, so it can be switched easily. On the contrary, the location of projection and the angle of view are changed with mechanical component, so there is constraint in its movement. Therefore, even the projector not projecting the image have to move its mechanics for a while before and after the switching in order to match the location of projection and the angle of view at the moment of switching. If the switching condition is defined based on the three-dimensional data of the targeted object, influence of error and noise is inevitable. If the targeted object moves slowly or there is much noise in the three-dimensional measurement, it may not give a good view because images are switched repeatedly. In that case, it is suggested to have hysterisis in the switching condition. For example, the repeating switching can be prevented by having a width in the condition that switches from the image of one projector head to another and in the reverse condition.

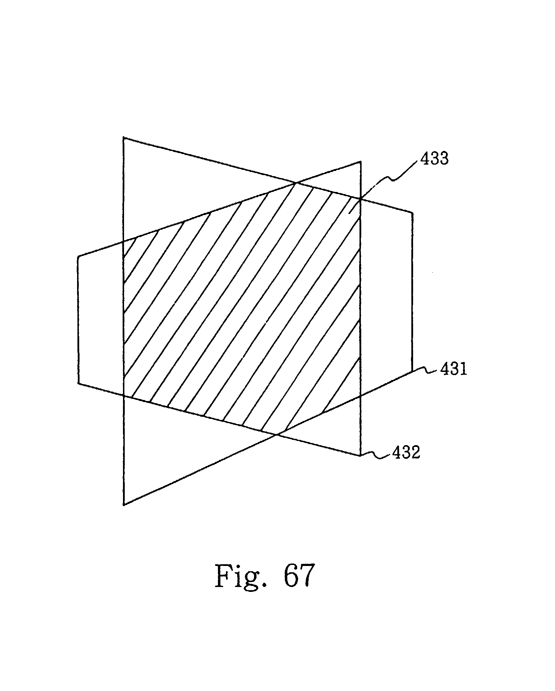

If the projector heads for switching is separate, the projection area is quite different as shown in Fig.67. Even if the location of projection are the same, the projection area will be like 431 if projected from right, and it will be like 432 if projected from left. If the image is displayed on entire projector display, the projection area changes greatly when it is switched, and it becomes unnatural. Therefore, if switching is occurred, the area which can be used for the virtual object's image is the area 433, the common area of these areas. Incidentally, if the change in image by switching is allowed, the area is not limited as described above.

If there is little error in the location of projection and the angle of view, and if the projected image is in the common area and the resolution is high enough and colors are well-balanced, it is not unnatural because the change in image is small even if it is switched completely in units of fields. But it is difficult to match the location of projection and the angle of view exactly because of the delay of servo which moves mechanically. Moreover, the resolution is seldom high enough and colors are often varied, so the projected images may be different. In such a case it may be unnatural if the image is switched completely. In that case, before switching the image completely, it is desirable to change the image gradually by using the intermediate image composed from two images. For example, it is like cross-fading which is widely used in image editing. That is, during the switching, mixed image from multiple projectors are projected temporarily. Then it is switched smoothly by changing the brightness of each projector.

Incidentally, there is no problem when the condition that overlaps the switching condition is passed in a short period, but when it takes long time to pass the intermediate-valued part, considering the direction of switching, it is necessary to finish switching within a fixed period, even if it is in the middle of switching in the spatial location. When the observer athlete is running as shown in Fig.64, in the middle of running, it is not noticeable even if the quality of projected image is not so high. Contrary to this, high quality image is needed for the projected image near the goal or at the starting position where the athlete stands still. Thus, the quality required for the image for observer's location, movement, or posture of the virtual object is different. In Fig.64, for this reason, two projector heads are positioned in order to get the highest image quality at the goal and starting position by setting the optical axis of the screen and the projector almost perpendicular near the goal and starting position. Also, they are positioned so that it is possible to switch while the athlete is in the middle of running.

(The sixteenth embodiment)

In the examples described so far, only a fixed plane at the side of an observer is treated. But it is not necessarily to be a plane, nor to be fixed. It can be translucent where the observer can see behind it, and is not necessarily solid, but it can be water, smoke, or bubbles in water, etc., as long as the observer can see the projected image.

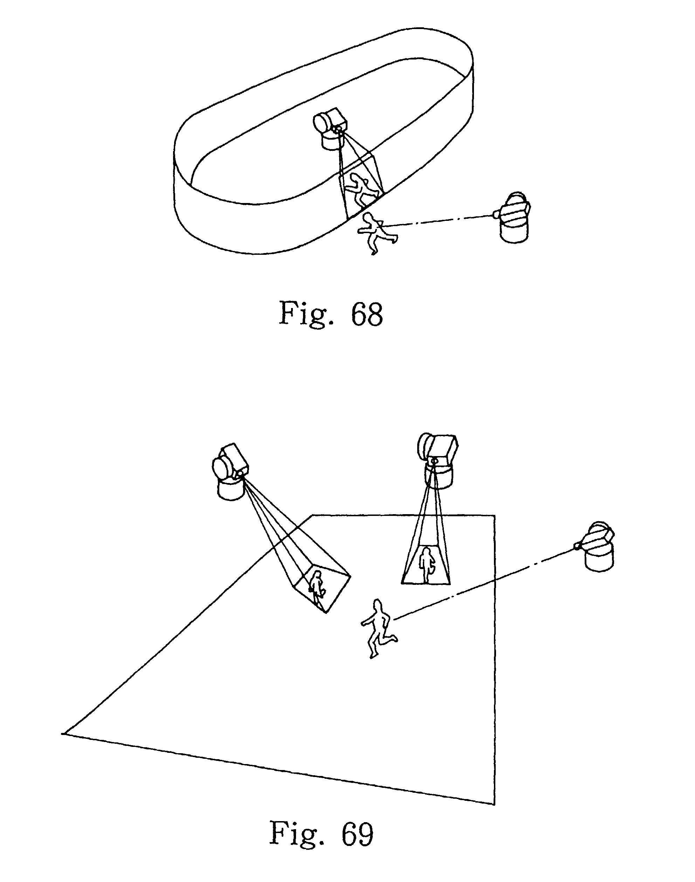

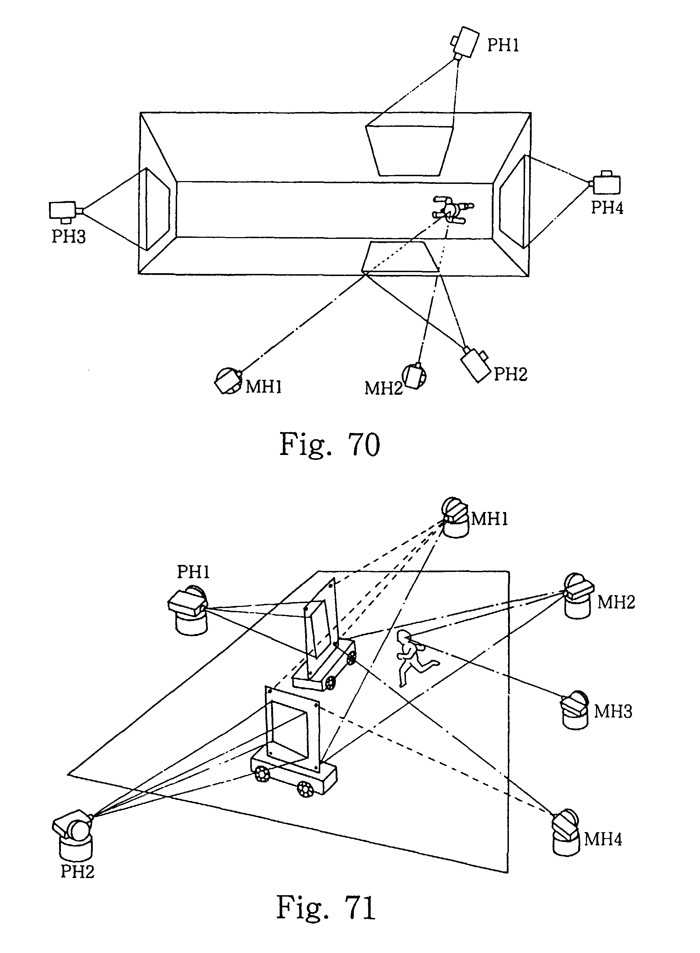

Fig.68 illustrates the situation where the athlete is running on ellipse track, and the screen is a translucent curved surface. Fig.69 illustrates the example where floor is used as the screen. In swimming, by using the bottom of the swimming pool for a screen, it is possible to project underwater. Also, it is possible to project on bubbles if high image quality is not required, for example, in the case where only paces are to be grasped. As in Fig.70, if the observer is surrounded with screens made of normal material, it is impossible to capture the observer with the measurement camera head. However, it is not needed to use the visible ray measurement camera head, but can use the measurement camera head using near infrared rays.

If a near infrared ray can penetrate the screen and a visible ray causes irregular reflection, it is possible to measure the observer even if the screen is positioned like this.

If the location and the direction of the screen is measured, it is possible to transform the image even if the screen is moved. It is difficult to move the screen to the specified location with high-precision because it is too large. However, what is needed is not to move it to the location but is to get the three-dimensional data of the screen. So the mechanism for movements do not need to have so much precision. Fig.71 shows such an example. It is not possible to get high-precision because the screen is on the mobile car, but the screen itself as well as the observer is measured of its three-dimensional data with the measurement camera head MH1~MH4. Markers are attached to the corners of the screen and their location and direction are measured. Thus it is possible to get enough precision for transforming image. Furthermore, if such a screen is to be moved, it should be mesh-like because plane screen have much air resistance. In such a case, the fineness and the rate of aperture may be selected depending on the required image quality.

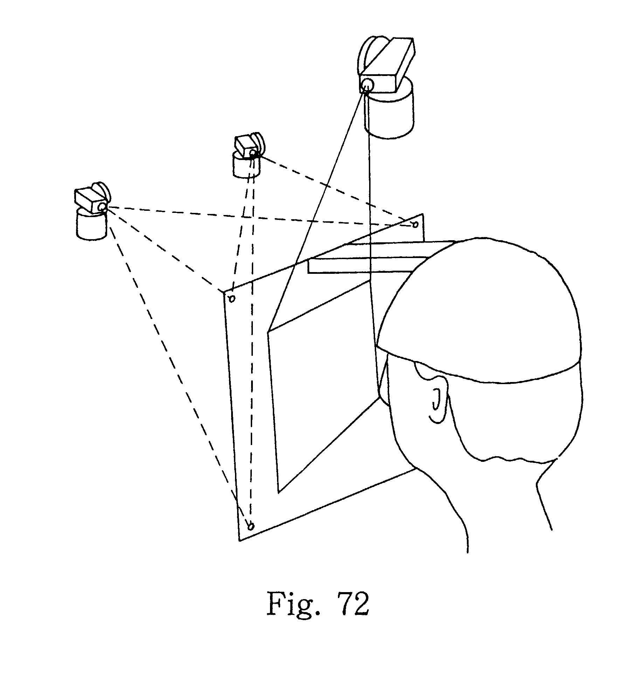

Fig.72 is an example where the screen is moved with the observer. Markers are attached on the screen in order to get its direction. In this figure, the direction of the screen and the direction of the observer is matched, but it is not necessary to match the direction of the screen and the direction of the observer. It is not necessary to fix the screen firmly but can be dangling because it is possible to measure independently. But in such a case, the direction of the screen and the observer's face moves very rapidly, therefore the special camera may be needed because 1/60 second for the normal TV camera is too slow for the field period of the measurement camera which measures the three-dimensional data.

(The seventeenth embodiment)

In the examples described so far, it is assumed that the location, the rotation axis, and lens parameters of the measurement camera head and the projector are known, but these parameters deeply influence the precision for the transformation of image and for the measurement of the three-dimensional data. Of course when newly installing the measurement camera head and the projector head, and also when the location is slipped by mere chance, these parameters must be examined. It is necessary to obtain the parameters for each head and positional relation of each head when installing the head in site even if it was possible to measure them in the factory. Then, the method to obtain them is explained briefly. In order to obtain the parameters, operate it actually and perform calibration by comparing with the references installed in advance.

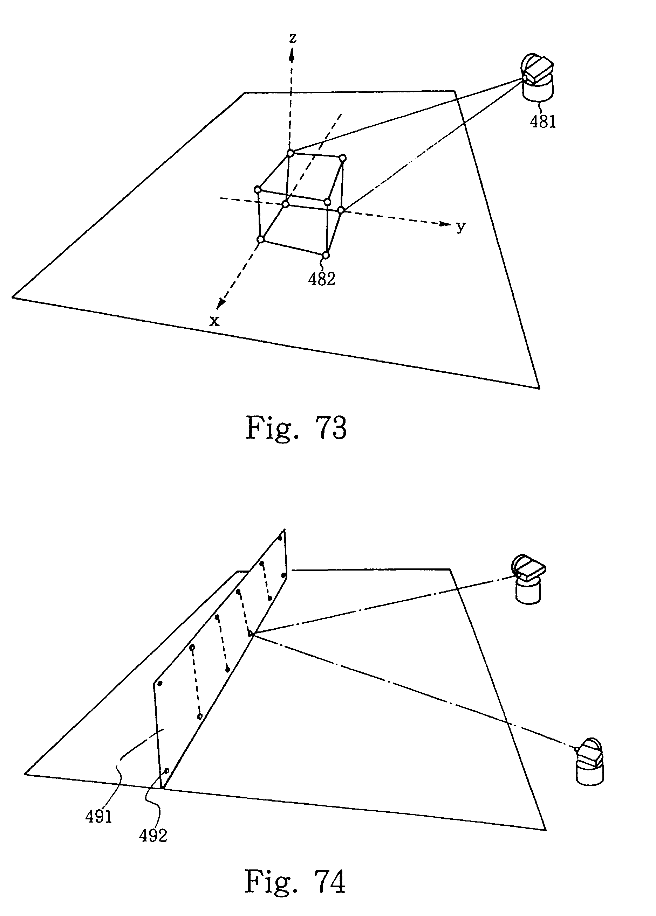

First, the parameters of measurement camera head should be obtained. The data such as the angle of view, the focus, and the iris should be measured using jig in advance. As in Fig.73, put down a solid object with known figure and size, then considering the observer's movement area and measurement range of the measurement camera head, input the location and the direction of the solid object to the measurement camera head controller in the coordinates defined in space. At the beginning, the operator may operate the measurement camera head 481 manually and put the solid object in the visual field of the measurement camera. In such a case, it is difficult to operate the focus manually, however, it is possible to control the focus automatically, for example, by the algorithm that maximize the highfrequency band of the central part of the image captured with the camera. This can reduce the burden of the operator and gives data of distance though it is very approximate. The precision of the spatial coordinates used for calibration can be enhanced by increasing the number of points more than required theoretically and applying the statistical calculation. Next, each axis of the measurement camera head is rotated automatically with the lens parameters fixed. The solid object for calibration seems to be moving in the image as the head rotates, though it is standing still actually. Based on this, it is possible to obtain the spatial location of the rotation axis of the head. It is not necessary to calibrate the angle of rotation because the encoder attached on the rotation axis have enough repeatability. These operations can be done simultaneously if multiple measurement camera heads are used. In order to increase the precision, the rotation axis is defined by changing the angle of view of the lens, or by changing the location of the solid object for calibration, or if multiple measurement camera heads are used, by the movement of markers by capturing the measurement camera heads each other.

Next, the three-dimensional data of the screen, which is fixed in this case, is measured. If the screen is fixed as shown in Fig.74, the screen inevitably becomes too large and it differs from the supposed spatial solid such as a plane. In Fig.74, the screen 491 should be a plane but it is distorted. Thus, to identify the figure, a lot of measurement points 492 are measured with the measurement camera head. In this example, 12 points are measured and approximated to five planes. Markers should be attached on the measurement points to measure precisely. In such a case, markers can be attached on all points in advance as in Fig.74. In such a case, it is possible to distinguish the markers automatically if the markers have different colors. Or, it is possible to measure continuous three-dimensional data with auto-tracking feature by walking with a marker and attaching to the point to be measured.

Next, parameters of the projector head are obtained. In addition to the measurement camera head, lens parameters such as the angle of view and the focus should be measured in advance.

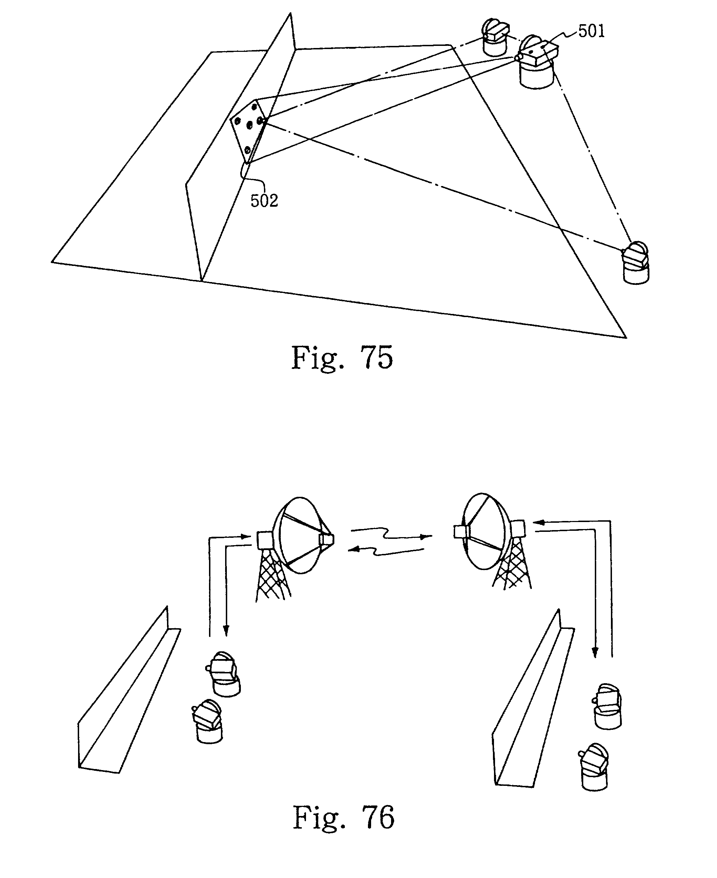

As shown in Fig.75, if the projector head is in the location where it can be measured with the measurement camera head, it is possible to obtain the spatial location and rotation axis of the projector head based on the location and the movement of markers 501 attached on it. If it is impossible to capture the projector head, or it is impossible to measure precisely even if it can be captured, the location of the projector head can be calculated by measuring the image projected from the projector head on the screen. In such a case, the focus can be set up by adjusting the focus of the projected image or by measuring the distance between the projector head and the screen with a range finder. It is also possible to adjust the focus with a remote controller while observing the image by a man, and it is also possible to control the focus of the projector head by observing if the focus is adjusted correctly by processing the image captured by the measurement camera head. The projected image should have a pattern suitable for image processing.

After the focus is defined, a known pattern is projected. For example, Fig.75 shows five marks (502) positioned like a dice. Each mark has different color, which is distinguishable automatically by capturing with the measuring camera head. It is also possible to distinguish them by capturing with synchronized while shifting time. Because the spatial location (the location on the screen) of the projected image and the angle of view of the projector head at that time and the figure of the projected pattern are known, it is possible to calculate the location of the projector head. However, it is not precise because it is indirect, unlike the way using the measurement camera head. Thus, it is necessary to collect a lot of data and process them statistically by changing the pattern to project or by changing the angle of view. Next, as in the measurement camera head, repeat the similar operation while rotating the rotation axis. It is not necessary to measure the rotation axis because the encoder has enough precision. When defining the parameters of the projector head, statistical processing is essential for increasing the precision. Thus it is necessary to alleviate the burden of the operator by automating the operation of the measurement camera head.

(The eighteenth embodiment)

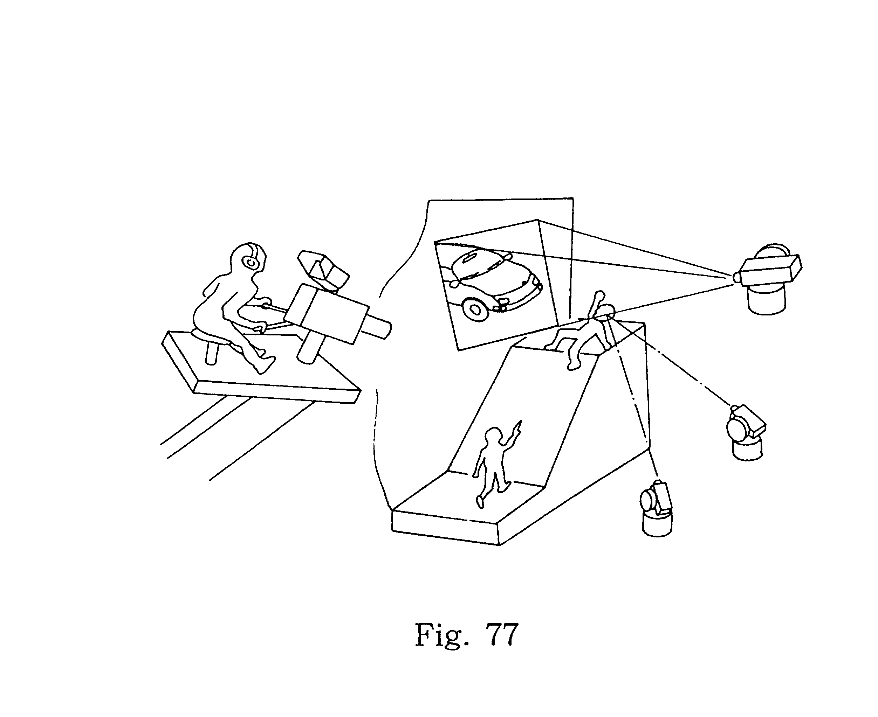

By preparing multiple systems described above and connecting them with the communication line as shown in Fig.76, athletes can compete each other without moving, like the television-meeting.

What matters most in such a case is the time lag. It must be minimized including the delay of the communication line. Especially, satellite communication inevitably has long delay, therefore ground communication is better. In some events where the motion is relatively slow like swimming, the delay of data on the athlete's location is inconspicuous, however, the delay of the image is conspicuous because the motion of images itself is not slow.

Though the observer who is actually running does not notice a small delay, it is necessary to process the image while considering the delay, such as recording the image once, when editing the image for the virtual camera.

(The nineteenth embodiment)

As shown in Fig.77, when making films with special effects in movies or TV programs, the actor must play a role with something that does not exist. However, by using the system above, he can play a role more accurately because he can recognize the virtual object.

In such a case, because the projected image is basically the target for the actor to play, the screen may be on the back or may be the floor. Also, when editing the film using chromakey, it is necessary to project not to disturb the extraction of the actor from the image. For example, in chromakey, comparing with blue-back color, it is necessary to project monochrome images while changing only brightness but leaving hue and saturation nearly when viewed with the camera for photographing. Moreover, not projecting the image of the virtual object as it is, but by reducing the image to the minimum, such as the image of only outline, it is possible to decrease the influence on the image.

If multiple actors are playing, it is possible to switch the image for a certain actor based on the scene. Except for the case where the virtual object is on the screen's location, it is necessary to consider exactly for which actor the virtual object is, because the location and the figure to project changes depending on the observer's location. By simplifying the image to project and treating it as simply a target, the gap of the observer's location is only the gap of the location of projection, and by devising the screen or the substitution of it, only one projection is needed for multiple actors.

If multiple actors are separated and also are needed to play accurately, projection images are needed as much as the number of actors, irrelevant to the number of virtual objects. If the image is not affected by colors, each actor can distinguish the virtual object by painting it in different colors. Otherwise, it can be distinguished by putting a pattern on the projected image for a mark.

(The twentieth embodiment)

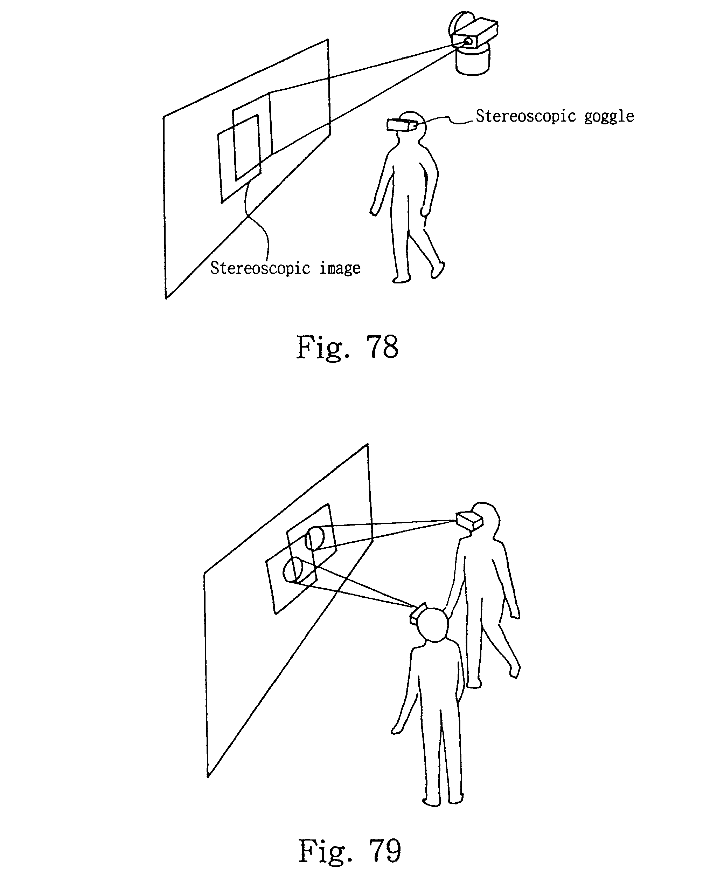

In the examples described so far, projected image seems like a flat plane for the observer. If the observer can take on special glasses or goggles, it is possible to increase the presence by making projected image stereoscopic as shown in Fig.78. Also, as shown in Fig.79, by employing a system which gives different images to the right and the left eye, and by providing different images to multiple observers, it is possible to make a system for multiple observers. The goggles can provide different images to each(right and left) eye by sharing time and separating images using a liquid crystal shutter, or by separating images using different colors. Thus, the observer can see virtual stereoscopic images while moving freely.

Similarly, it is possible to let multiple observers see the different images. If multiple observers are involved, naturally each observer's location must be measured, however, if it is possible to obtain each location as in the case where multiple observers are connected mechanically, such as when riding on a vehicle, it is possible to decrease the number of targets for measurement.

In the examples shown in Fig.78 and Fig.79, the measurement camera head which measures the observer with 3D-goggles is not illustrated, however, like the embodiment described above, the location and the direction of the observers are measured with the camera head which is not illustrated, and based on the measured three-dimensional data, stereoscopic image of the virtual object for projection is transformed.

(The twenty first embodiment)

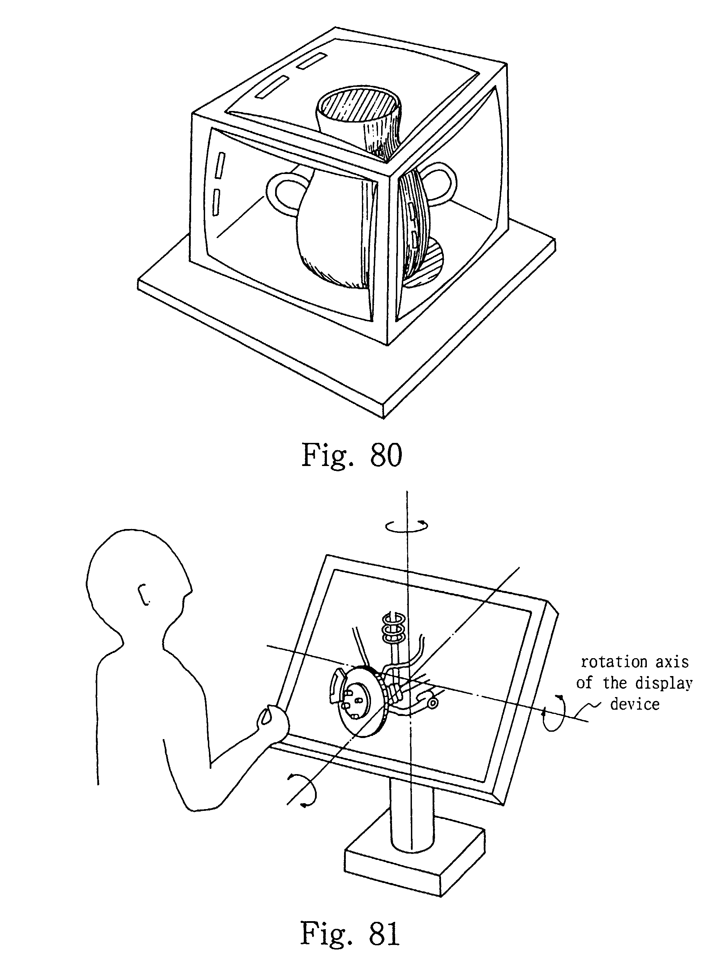

If the size of the screen which is provided for an observer is allowed to be relatively small, it is possible to get brighter and clearer image by displaying on such as CRT, liquid crystal display, or plasma display, instead of projecting on a screen. Moreover, by combining multiple display devices, it is possible to provide larger image, though it has seams. For example, Fig.80 shows the composition of a display device in which six CRTs are combined, and each CRT displays the image which is obtained by seeing from the observer's location. In Fig.80, the display shows the image which indicates that there is a pot on the table. The virtual objects include a pot and a table which has the same size and the same positional relation as the table on which the display device is placed.

Because the three-dimensional data of an observer is measured by another measurement device, and the image is displayed on the CRT which is transformed to the image which can be seen by seeing from the observer's location, it is possible to display the image which is seen from any observer's location if he moves around within the range of location measuring. Therefore it is possible to see the back of the pot if he moves behind the pot. Also, it is possible to see the bottom of the pot if he gets under the table. It is possible to give the feeling as if he is watching a pot in the display case if the seams of CRTs are treated well.

Fig.81 shows the case where a movable flat display is used. The direction of the display changes automatically depending on the observer's location to provide the best image quality for the observer. Naturally, the displayed image is transformed automatically to the image which is seen from the observer. This figure shows the display of the front-suspension of an automobile as a virtual object. Unless looking from various angles, it is difficult to see the entire object if the solid object is complicated like in this case, however, the observer can observe the virtual object while moving around to see the part he wants. If the movable range of the display device and the location-measurement range of the observer exist, it is possible to move behind or get under the object. Also, it is possible to change the magnification of the virtual object if necessary, and it is possible to express the image that holography can not express by displaying the moving image if the object is movable like in this case.

Also, because the three-dimensional data such as the location and the direction of the observer is measured, even if the observer is moving in front of the multi-display device where a lot of CRTs are arranged, it is possible to display the virtual image on the entire device of many CRTs by transforming the virtual image to the virtual image which the observer can see.

Also, in the case where the observer can take on a stereoscopic-goggle, or by using the display device which can display stereoscopic image, it is possible to display the stereoscopic image which can be seen by both (right and left) eyes.

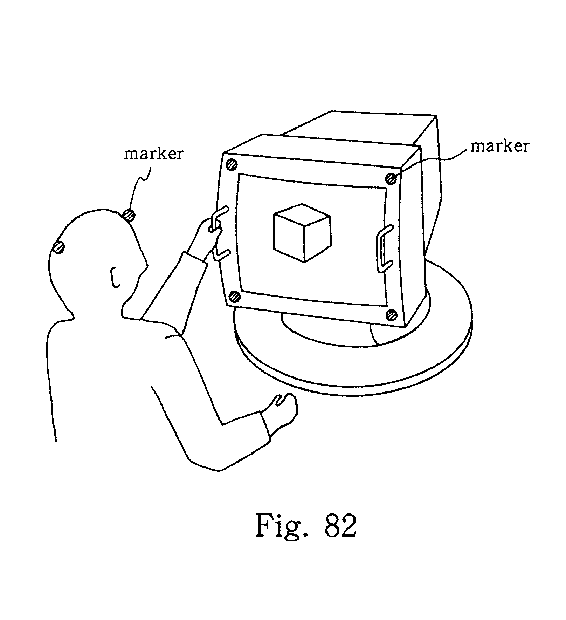

Even if the display device does not move automatically, it is possible to construct the similar system by attaching markers, for example, to obtain the direction and the location of the display device as shown in Fig.82, and also by attaching markers on the observer to obtain the location and the direction. This system can be used for the output of the three-dimensional CAD, for example. When a solid object is displayed and the observer wants to see the side or the back of the object, it is possible to see the side or the back of the object by revolving the display device with hands together with the observer. In the usual CAD, it is difficult to see the displayed object with the desired angle if the direction of the object must be changed using a keyboard unless accustomed to it. However, by doing as above, it is possible to see the image of the desired angle by moving to the direction you want and revolving the CRT to make the image visible. Thus it is possible to construct a system which require no training at all.

Because the present image display device is comprised as described above, it has the following effects.

First, because the observer can move while watching the movement of the targeted object seen from the observer, corresponding to the movement of the observer, in sports, an athlete can exercise naturally while recognizing his competitor.

Also, if the observer, who is the subject, is a performer, he can play a role naturally because he can exercise while watching the composed image.

Also, the observer can have presence because he has the feeling that he is actually there while watching the image of the actual object which was photographed actually.

Also, with the sound effects according to the location and the direction on the observer, it is possible to enhance the presence.

Also, the athlete can feel like he is playing with the competitor who is playing in the competition at the distant place which is held simultaneously.

Also, it is possible to give an athlete the feeling that he is playing with the competitor to compare who is playing in the different occasion and in the different place.

Also, it is possible to generate the image based on the observer's recognizability because it is possible to project the virtual image adjusted to the observer's movement.

Also, it is possible to display an object depending on the observing direction because it is possible to display the image, which is seen from the observer's location by measuring the observer's location, on the display device.

Also, it is possible to display the image depending on the observer's movement, even if the movement is complicated, because the screen on which the image is projected is movable.

Also, it is possible for the observer to exercise while recognizing the stereoscopic image by projecting or displaying the stereoscopic image with the observer equipped with the device which provide the stereoscopic image.

Also, it is possible to display the natural image for the observer because it is possible to switch the optimal image based on the observer's location.

Also, by generating the virtual image, which is displayed for the observer, with computer graphics, it is possible to obtain the image for display accurately by calculation, it is possible to generate the image and to transform the image, for transforming to the image to project with a projector, only by calculation.

**Claims**

1. A device for processing moving images comprising:

   a capturing means (11-13,15-16) which captures two-dimensional images of one or more moving objects, which generates three-dimensional real-world spatial data of said moving objects, and which outputs the captured two-dimensional images together with the three-dimensional spatial data; and,
   an image edit means (14) which processes the captured two-dimensional images using said three-dimensional spatial data, characterized in that said image edit means comprises:
   primary transform means which generate a respective transformed image for each captured two-dimensional image, the transformed image having the appearance of the respective captured two-dimensional image when projected from said capturing means on to a virtual projection plane (34) defined in the space where said objects are moving and defined in accordance with the three-dimensional spatial data; and,

secondary transform means which generate a further transformed image from each transformed image, the further transformed image having the appearance of a virtual image of the one or more moving objects that would have been captured by a virtual capturing means (33) located in a spatial location or a time base different from that of the capturing means.

2. The moving images processing device as claimed in claim 1, wherein said transform means include:

a means for defining subsequent ones of said projection plane in accordance with the motion of said moving objects, the motion being defined by subsequent three-dimensional spatial data, wherein the primary transform means uses said subsequent projection planes for subsequent respective captured two-dimensional images.

3. The moving images processing device according to claim 1 or claim 2, wherein the capturing means includes a plurality of capturing devices (11,12;31,32) each of which is capable of capturing respective two-dimensional images within a respective field of view, and wherein said image edit means includes a means which defines the projection plane as a flat plane or curved surface in a three-dimensional space defined by the intersection of the fields of view of said capturing devices.

4. The moving images processing device according to any of claims 1 to 3, wherein the projection plane is a flat plane, the plane being perpendicular to an optical axis of one of the capturing devices or to an optical axis of said virtual capturing means.

5. The moving images processing device according to claim 3, wherein the projection plane is a flat plane, the plane intersecting an optical axis of one of the capturing devices and an optical axis of the virtual capturing means, wherein the angle between the plane and at least one of said optical axes is less than the angle between the optical axes of said capturing device and said virtual capturing means.

6. The moving images processing device according to either claim 2 or claim 5, wherein the projection plane is a flat plane passing on the captured moving object.

7. The moving images processing device according to claim 2, wherein the projection plane includes a curved surface.

8. The moving images processing device according to claim 7, which includes a means to transform the image of a moving object projected on a curved surface to an image on a flat plane.

9. The moving images processing device according to claim 2, wherein the projection plane is a pre-defined solid surface in the three-dimensional space where the captured moving object is moving.

10. The moving images processing device according to claim 2, wherein said image edit means includes:

a background image recording means (161,162) which records the background image along with respective three-dimensional data, apart from said moving object, and

a background composition means which generates the background image which depends on the spatial or time base parameters of said virtual capturing means based on said background image and composes with the image of moving object equivalent to the image captured with said virtual capturing means.

11. The moving images processing device according to claim 10, wherein:

the background image recording means includes a means to record the track of moving objects as the background image, and

the background composition means includes means to compose this recorded track with the moving image of other moving objects as the background image of other moving objects.

12. The moving images processing device according to claim 10, wherein:

the background image recording means includes a means to record the image of moving object at a certain time as the background image, and

the background composition means includes a means to compose this recorded image at a certain time with the image of said moving object as the background image of other moving objects.

13. The moving images processing device according to claim 3, wherein:

wherein each capturing device captures two-dimensional images of respective moving objects, and wherein said image edit means includes means to compose the image of the captured moving objects based on the positional relation when seen from the location of said virtual capturing means.

14. The moving images processing device according to claim 13, wherein:

the means to compose based on the positional relation provides:
a table which specifies the positional relation of the targeted objects for said virtual capturing means in one image unit, and
a means to output the image in the front and to mask the image in the back by referring to this table.

15. The moving images processing device according to claim 13 or claim 14, wherein:
the image edit means includes means to extract a moving object, which is the capturing target, from the background in the image captured with the capturing means.

16. The moving image processing device according to claim 3, wherein:
each capturing device captures respective two-dimensional images of the same moving object and wherein said primary transform means includes means to select the respective two-dimensional images output by one of said capturing devices which are most suitable for said virtual capturing means and transforms the respective two-dimensional images while switching the image outputted by the capturing means based on the change of capturing condition.

17. The moving images processing device according to claim 16, which selects the images of those respective capturing devices which have a capturing condition most close to the condition of the virtual capturing means.

18. The moving images processing device according to claim 16 or claim 17, which includes means to switch between the output two-dimensional images of respective capturing devices, based on the angle made by the optical axis of the virtual capturing means with the moving object.

19. The moving images processing device according to any of claims 16 to 18, which captures a certain space where the capturing targeted moving object exists with one of said capturing devices, and uses at least one image from a respective capturing device capturing the space where the moving object exists even if it is of a location distant from the virtual capturing means location.

20. The moving images processing device according to either claim 16 or claim 19, wherein hysteresis is used for switching images.

21. The moving images processing device according to claim 3, wherein the image edit means includes
a means to transform an image averaging a plurality of two-dimensional images respectively outputted from said plurality of said capturing means as the image on the projection plane, to produce therefrom an image equivalent to an image that would have been captured with the virtual capturing means.

22. The moving images processing device according to any of the preceding claims, wherein said transform means include:
a means to use one flat plane that corresponds to a plane in which said moving object is moving, as said projection plane.

23. The moving images processing device according to claim 22, that includes a means for transforming images expressed by a space-time map for multiple moving objects within the space defined by the same space-time map, to an image as would be captured by said virtual capturing means located at a spatial location distant from said moving objects, after moving the spatial location of said space-time map.

24. The moving images processing device according to claim 22 or claim 23, that includes a means for transforming multiple space-time map images of the same or the separate moving objects captured at the different time to an image that is virtually captured, by synchronizing the time base and by positioning on the space-time map in a different spatial location.

**25.** The moving images processing device according to claim 24, that includes a means for capturing or composing the background image of a moving object separately from the moving object, and composing this background image with the transformed image corresponding to the transform of the image of the space-time map of said moving object.

**26.** The moving images processing device according to claim 25 having means to display the movement of an object with known motion characteristics in a captured background image.

**27.** The moving images processing device according to any of claims 22 to 26 that includes a means for composing the image of a virtual moving object of which the data of movement characteristic is known, with the transformed image of a captured moving object.

**28.** The moving images processing device according to any of claims 22 to 27, wherein said transform means include a means for transforming the image of a moving object on the space-time map to an image as would be captured by moving a camera toward one direction smoothly.

**29.** The moving images processing device according to claim 28

that provides a means for recording images that records the image of moving objects captured by a means of capturing in addition to the three-dimensional spatial data of the moving objects and the time data that is related to said image,
wherein said image edit means includes a means for processing and editing the image of captured moving objects.

**30.** The moving images processing device according to claim 29, wherein said image transform means include means to project an image which was captured in a time interval different from a present time interval, or an image which has been read in a reverse read-out sequence for images recorded in the image recording means, to the projection plane, and to transform the thus projected image to an image as would be captured by said virtual capturing means at a time interval or spatial position different from the time interval or spatial position of capturing.

**31.** The moving images processing device according to claim 29 or claim 30, wherein said transform means include means to transform one image of a moving object projected on said projection plane to an image as would be captured while moving the spatial location of said moving object.

**32.** The moving images processing device according to claim 31, wherein at least one of said primary or secondary transform means provides memory on which the captured images of the moving object is written in units of one image, and includes the means to perform coordinate transformation by reading the image data in said memory by using a read-out address which obtains the coordinate location of the capturing means, the coordinate location of the projection plane, and the coordinate location of the virtual capturing means.

**Patentansprüche**

**1.** Vorrichtung zum Verarbeiten sich bewegender Bilder mit:

einem Aufnahmemittel (11-13, 15-16), das zweidimensionale Bilder eines oder mehrerer sich bewegender Objekte aufnimmt, das dreidimensionale räumliche Echtweltdaten der sich bewegenden Objekte erzeugt und das die aufgenommenen zweidimensionalen Bilder zusammen mit den dreidimensionalen räumlichen Daten ausgibt; und
einem Bildaufbereitungsmittel (14), das die aufgenommenen zweidimensionalen Bilder unter Verwendung der dreidimensionalen räumlichen Daten verarbeitet, **dadurch gekennzeichnet**, daß das Bildaufbereitungsmittel aufweist:
primäre Transformationsmittel, die jeweils ein transformiertes Bild für jedes aufgenommene zweidimensionale Bild erzeugen, wobei das transformierte Bild jeweils wie das aufgenommene zweidimensionale Bild aussieht, wenn es aus dem Aufnahmemittel auf eine virtuelle Projektionsebene (34) projiziert wird, die im Raum begrenzt ist, in dem sich die Objekte bewegen und in Übereinstimmung mit den dreidimensionalen räumlichen Daten begrenzt sind; und

sekundäre Transformationsmittel, die ein weiteres transformiertes Bild aus jedem transformierten Bild erzeugen, wobei das weitere transformierte Bild wie ein virtuelles Bild eines oder mehrerer der sich bewegenden Objekte aussieht, das durch ein virtuelles Aufnahmemittel (33) aufgenommen würde, das sich an einer räumlichen Stelle oder in einer Zeitbasis befindet, die von der des Aufnahmemittels abweicht.

2. Vorrichtung zum Verarbeiten sich bewegender Bilder nach Anspruch 1, bei dem die Transformationsmittel aufweisen:

ein Mittel zum Begrenzen auf die erwähnte Projektions ebene folgender Projektionsebenen in Abhängigkeit von der Bewegung der sich bewegenden Objekte, wobei die Bewegung durch nachfolgende dreidimensionale räumliche Daten bestimmt wird und das primäre Transformationsmittel die nachfolgenden Projektionsebenen jeweils für nachfolgende aufgenommene zweidimensionale Bilder benutzt.

3. Vorrichtung zum Verarbeiten sich bewegender Bilder nach Anspruch 1 oder Anspruch 2, bei der das Aufnahmemittel eine Vielzahl von Aufnahmevorrichtungen (11, 12; 31, 32) aufweist, von denen jede in der Lage ist, jeweils zweidimensionale Bilder in jeweils einem Blickfeld aufzunehmen, und bei der das Bildaufbereitungsmittel ein Mittel aufweist, das die Projektionsebene als eine flache Ebene oder eine gekrümmte Fläche in einem dreidimensionalen Raum begrenzt, der durch die Kreuzung der Blickfelder der Aufnahmevorrichtungen begrenzt ist.

4. Vorrichtung zum Verarbeiten sich bewegender Bilder nach einem der Ansprüch 1 bis 3, bei der die Projektionsebene eine flache Ebene ist, die senkrecht zu einer optischen Achse einer der Aufnahmevorrichtungen oder ein zu einer optischen Achse des virtuellen Aufnahmemittels steht.

5. Vorrichtung zum Verarbeiten sich bewegender Bilder nach Anspruch 3, bei der die Projektionsebene eine flache Ebene ist, die eine optische Achse einer der Aufnahmemittel und eine optische Achse des virtuellen Aufnahmemittels schneidet, wobei der Winkel zwischen der Ebene und wenigstens einer der optischen Achsen kleiner als der Winkel zwischen den optischen Achsen der Aufnahmevorrichtung und des virtuellen Aufnahmemittels ist.

6. Vorrichtung zum Verarbeiten sich bewegender Bilder nach Anspuch 2 oder Anspruch 5, bei der die Projektionsebene eine flache Ebene ist, die das aufgenommene sich bewegende Objekt weitergibt.

7. Vorrichtung zum Verarbeiten sich bewegender Bilder nach Anspruch 2, bei dem die Projektionsebene eine gekrümmte Fläche aufweist.

8. Vorrichtung zum Verarbeiten sich bewegender Bilder nach Anspruch 7, die ein Mittel zum Transformieren des Bildes eines sich bewegenden Objekts, das auf eine gekrümmte Fläche projiziert wird, in ein Bild auf einer flachen Ebene aufweist.

9. Vorrichtung zum Verarbeiten sich bewegender Bilder nach Anspruch 2, bei der die Projektionsebene eine vorbestimmte massive Fläche in dem dreidimensionalen Raum ist, in dem sich das aufgenommene bewegliche Objekt bewegt.

10. Vorrichtung zum Verarbeiten sich bewegender Bilder nach Anspruch 2, bei dem das Bildaufbereitungsmittel aufweist:

ein Hintergrundbildaufzeichnungsmittel (161, 162), das das Hintergrundbild zusammen mit zugehörigen dreidimensionalen Daten, getrennt von dem sich bewegenden Objekt, aufzeichnet, und
ein Hintergrundzusammensetzungsmittel, das das Hintergrundbild erzeugt, das von den räumlichen oder zeitlichen Parametern des virtuellen Aufnahmemittels, die auf dem Hintergrundbild basieren, abhängt und es mit dem Bild des sich bewegenden Objekts zusammensetzt, das dem Bild gleicht, das mit dem virtuellen Aufnahmemittel aufgenommen wurde.

11. Vorrichtung zum Verarbeiten sich bewegender Bilder nach Anspruch 10, bei der:

das Hintergrundbildaufzeichnungsmittel ein Mittel zum Aufzeichnen der Bahn sich bewegender Objekte als Hintengrundbild und
das Hintergrundzusammensetzungsmittel Mittel zum Zusammensetzen dieser aufgezeichneten Bahn mit dem sich bewegenden Bild anderer sich bewegender Objekte als Hintengrundbild anderer sich bewegender Objekte aufweist.

12. Vorrichtung zum Verarbeiten sich bewegender Bilder nach Anspruch 10, bei der:

das Hintergrundbildaufzeichnungsmittel ein Mittel zum Aufzeichnen des Bildes des sich bewegenden Objekts zu einer bestimmten Zeit als das Hintergrundbild und
das Hintergrundzusammensetzungsmittel ein Mittel zum Zusammensetzen dieses aufgezeichneten Bildes zu einer bestimmten Zeit mit dem Bild des sich bewegenden Objekts als das Hintergrundbild anderer sich bewegender Objekte aufweist.

13. Vorrichtung zum Aufzeichnen sich bewegender Bilder nach Anspruch 3, bei der:

jede Aufnahmevorrichtung zweidimensionale Bilder jeweiliger sich bewegender Objekte einfängt und
das Bildaufbereitungsmittel Mittel zum Zusammensetzen des Bildes der aufgenommenen sich bewegenden Objekte in Abhängigkeit von der relativen Position, gesehen vom Ort des virtuellen Aufnahmemittels, aufweist.

14. Vorrichtung zum Verarbeiten sich bewegender Bilder nach Anspruch 13, bei der:

das Mittel zum Zusammensetzen in Abhängigkeit von der relativen Position aufweist:
eine Tabelle, die die relative Position der anvisierten Objekte für das virtuelle Aufnahmemittel in einer Bildeinheit vorschreibt, und
ein Mittel zum Ausgeben des Bildes an der Vorderseite und zum Abdecken des Bildes an der Rückseite durch Bezugnahme auf diese Tabelle.

15. Vorrichtung zum Verarbeiten sich bewegender Bilder nach Anspruch 13 oder Anspruch 14, bei der:
das Bildaufbereitungsmittel Mittel zum Extrahieren eines sich bewegenden Objekts, bei dem es sich um das Aufnahmeziel handelt, aus dem Hintergrund in dem mittels des Aufnahmemittels aufgenommenen Bild aufweist.

16. Vorrichtung zum Verarbeiten sich bewegender Bilder nach Anspruch 3, bei der:
jede Aufnahmevorrichtung jeweils zweidimensionale Bilder desselben sich bewegenden Objekts aufnimmt und bei der das primäre Transformationsmittel Mittel zum Auswählen der jeweiligen zweidimensionalen Bilder aufweist, die durch eine der Aufnahmevorrichtungen ausgegeben werden, die für das virtuelle Aufnahmemittel am geeignetsten sind, und das die jeweiligen zweidimensionalen Bilder transformiert, während es das durch das Aufnahmemittel ausgegebene Bild in Abhängigkeit von einer Änderung der Aufnahmebedingung umschaltet.

17. Vorrichtung zum Verarbeiten sich bewegender Bilder nach Anspruch 16, die die Bilder derjenigen jeweiligen Aufnahmevorrichtungen auswählt, deren Aufnahmebedingung am dichtesten bei der Bedingung des virtuellen Aufnahmemittels liegt.

18. Vorrichtung zum Verarbeiten sich bewegender Bilder nach Anspruch 16 oder Anspruch 17, die Mittel zum Umschalten zwischen den ausgegebenen zweidimensionalen Bildern der jeweiligen Aufnahmevorrichtungen in Abhängigkeit von dem Winkel zwischen der optischen Achse des virtuellen Aufnahmemittels und dem sich bewegenden Objekt aufweist.

19. Vorrichtung zum Verarbeiten sich bewegender Bilder nach einem der Ansprüche 16 bis 18, die einen bestimmten Raum, in dem sich das aufzunehmende anvisierte bewegliche Objekt befindet, mit einer der Aufnahmevorrichtungen aufnimmt und wenigstens ein Bild aus der betreffenden Aufnahmevorrich tung benutzt, die den Raum aufnimmt, in dem sich das beweg liche Objekt befindet, und zwar selbst dann, wenn es sich an einer Stelle befindet, die von dem Ort des virtuellen Aufnahmemittels entfernt liegt.

20. Vorrichtung zum Verarbeiten sich bewegender Bilder nach Anspruch 16 oder Anspruch 19, bei der eine Hysterese zum Umschalten von Bildern benutzt wird.

21. Vorrichtung zum Verarbeiten sich bewegender Bilder nach Anspruch 3, bei der das Bildaufbereitungsmittel aufweist:
ein Mittel zum Transformieren eines Bildes, das aus einer Vielzahl zweidimensionaler Bilder, die jeweils von der Vielzahl der Aufnahmemittel ausgegeben werden, ein gemitteltes Bild als das Bild auf der Projektionsebene bildet, um daraus ein Bild zu erzeugen, das einem Bild äquivalent ist, das mittels des virtuellen Aufnahmemittels aufgenommen worden wäre.

22. Vorrichtung zum Verarbeiten sich bewegender Bilder nach einem der vorstehenden Ansprüche, bei der die Transformationsmittel ein Mittel zur Benutzung einer flachen Ebene, die einer Ebene entspricht, in der sich das Objekt bewegt, als die Projektionsebene aufweist.

23. Vorrichtung zum Verarbeiten sich bewegender Bilder nach Anspruch 22, die ein Mittel zum Transformieren von Bildern, die durch eine Raum-Zeit-Karte für mehrere sich bewegende Objekte in dem Raum ausgedrückt werden, der durch die gleiche Raum-Zeit-Karte begrenzt ist, in ein Bild, wie es durch das virtuelle Aufnahmemittel aufgenommen würde, das an einer Stelle im Raum angeordnet ist, die von den sich bewegenden Objekten entfernt liegt, nach dem Bewegen der räumlichen Stelle der Raum-Zeit-Karte aufweist.

24. Vorrichtung zum Verarbeiten sich bewegender Bilder nach Anspruch 22 oder Anspruch 23, die aufweist: ein Mittel zum Transformieren mehrerer Raum-Zeit-Karten-Bilder des gleichen oder der separaten sich bewegenden Objekte, die zu verschiedenen Zeiten aufgenommen wurden, in ein Bild, das virtuell aufgenommen wurde, durch Synchronisation der Zeitbasis und durch Positionierung auf der Raum-Zeit-Karte an einer anderen räumlichen Stelle.

25. Vorrichtung zum Verarbeiten sich bewegender Bilder nach Anspruch 24, mit einem Mittel zum Aufnehmen oder Zusammensetzen des Hintergrundbildes eines sich bewegenden Objekts getrennt von dem sich bewegenden Objekt und zum Zusammensetzen dieses Hintergrundbildes mit dem transformierten Bild, das der Transformation des Bildes der Raum-Zeit-Karte des sich bewegenden Objekts entspricht.

26. Vorrichtung zum Verarbeiten sich bewegender Bilder nach Anspruch 25, mit Mitteln zum Wiedergeben der Bewegung eines Objekts mit bekannter Bewegungscharakteristik in einem aufgenommenen Hintergrundbild.

27. Vorrichtung zum Verarbeiten sich bewegender Bilder nach einem der Ansprüche 22 bis 26, mit einem Mittel zum Zusammensetzen des Bildes eines virtuellen sich bewegenden Objekts, von dem die Daten der Bewegungscharakteristik bekannt sind, mit dem transformierten Bild eines aufgenommenen sich bewegenden Objekts.

28. Vorrichtung zum Verarbeiten sich bewegender Bilder nach einem der Ansprüche 22 bis 27, bei der die Transformationsmittel ein Mittel zum Transformieren des Bildes eines sich bewegenden Objekts auf der Raum-Zeit-Karte in ein Bild aufweist, wie es durch stetige Bewegung einer Kamera in der einen Richtung aufgenommen würde.

29. Vorrichtung zum Verarbeiten sich bewegender Bilder nach Anspruch 28, die ein Mittel zum Aufzeichnen von Bildern bildet, das das Bild sich bewegender Objekte, die durch ein Mittel zum Aufnehmen aufgenommen wurden, zusätzlich zu den dreidimensionalen räumlichen Daten der sich bewegenden Objekte und der zeitlichen Daten, die zu dem Bild gehören aufzeichnet,
wobei das Bildaufbereitungsmittel ein Mittel zum Verarbeiten und Aufbereiten des Bildes aufgenommener sich bewegender Objekte enthält.

30. Vorrichtung zum Verarbeiten sich bewegender Bilder nach Anspruch 29, bei der die Bildtransformationsmittel ein Mittel zum Projizieren eines Bildes, das in einer Zeitspanne, die von einer vorliegenden Zeitspanne abweicht, aufgenommen wurde, oder eines Bildes, das in einer umgekehrten Auslesesequenz für Bilder, die in dem Bildaufzeichnungsmittel aufgezeichnet wurden, ausgelesen wurde, auf die Projektionsebene und zum Transformieren des auf diese Weise projizierten Bildes in ein Bild, wie es durch das virtuelle Aufnahmemittel in einer Zeitspanne oder räumlichen Position aufgenommen würde, die von der Zeitspanne oder räumlichen Aufnahmeposition abweicht, aufweisen.

31. Vorrichtung zum Verarbeiten sich bewegender Bilder nach Anspruch 29 oder Anspruch 30, bei der die Transformationsmittel ein Mittel zum Transformieren eines Bildes eines sich bewegenden Objekts, das auf die Projektionsebene projiziert wurde, in ein Bild, wie es aufgenommen würde, während die räumliche Stelle des sich bewegenden Objekts bewegt wird, aufweisen.

32. Vorrichtung zum Verarbeiten sich bewegender Bilder nach Anspruch 31, bei der die primären und/oder sekundären Transformationsmittel einen Speicher bilden, in den die aufgenommenen Bilder des sich bewegenden Objekts in Ein-Bild-Einheiten eingeschrieben werden, und ein Mittel zur Durchführung einer Koordinatentransformation durch

**EP 0 669 758 B1**

Auslesen der Bilddaten aus dem Speicher mittels einer Ausleseadresse, die den Koordinatenort des Aufnahmemittels, den Koordinatenort der Projektionsebene und den Koordinatenort des virtuellen Aufnahmemittels darstellt, aufweisen.

**Revendications**

1. Dispositif de traitement d'images mobiles, comprenant:

   un moyen de saisie (11-13, 15-16), qui saisit des images bidimensionnelles d'un ou de plusieurs objets mobiles, qui génère des données spatiales tridimensionnelles du monde réel des dits objets mobiles et qui délivre les images bidimensionnelles saisies en même temps que les données spatiales tridimensionnelles; et
   un moyen (14) de mise en forme d'images, qui traite les images bidimensionnelles saisies en utilisant les dites données spatiales tridimensionnelles, caractérisé en ce que le dit moyen de mise en forme d'images comprend:
   un moyen de transformation primaire qui génère une image transformée respective pour chaque image bidimensionnelle saisie, l'image transformée ayant l'aspect de l'image bidimensionnelle saisie respective lorsqu'elle est projetée par le dit moyen de saisie sur un plan de projection virtuel (34) défini dans l'espace dans lequel les dits objets se déplacent, et défini en accord avec les données spatiales tridimensionnelles; et
   un moyen de transformation secondaire qui génère une autre image transformée à partir de chaque image transformée, l'autre image transformée ayant l'aspect d'une image virtuelle de l'un ou de plusieurs objets mobiles qui auraient été saisis par un moyen de saisie virtuel (33) situé dans une position spatiale, ou dans une base de temps différentes de ceux du moyen de saisie.

2. Dispositif de traitement d'images mobiles selon la revendication 1, dans lequel les dits moyens de transformation comprennent:
   un moyen pour définir des plans suivants pour le dit plan de projection en accord avec le déplacement des dits objets mobiles, le déplacement étant défini par des données spatiales tridimensionnelles suivantes, dans lequel le moyen de transformation primaire utilise les dits plans de projection suivants pour des images bidimensionnelles saisies respectives suivantes.

3. Dispositif de traitement d'images mobiles selon la revendication 1 ou la revendication 2, dans lequel le moyen de saisie comprend une pluralité de dispositifs de saisie (11, 12; 31, 32), dont chacun est capable de saisir des images bidimensionnelles respectives à l'intérieur d'un champ de vision respectif, et dans lequel le dit moyen de mise en forme d'images comprend un moyen qui définit le plan de projection en tant que plan plat ou en tant que surface courbe dans un espace tridimensionnel défini par l'intersection des champs de vision des dits dispositifs de saisie.

4. Dispositif de traitement d'images mobiles selon l'une quelconque des revendications 1 à 3, dans lequel le plan de projection est un plan plat, le plan étant perpendiculaire à un axe optique de l'un des dispositifs de saisie ou à un axe optique du dit moyen de saisie virtuel.

5. Dispositif de traitement d'images mobiles selon la revendication 3, dans lequel le plan de projection est un plan plat, le plan coupant un axe optique de l'un des dispositifs de saisie et un axe optique du moyen de saisie virtuel, dans lequel l'angle entre le plan et l'un au moins des dits axes optiques est inférieur à l'angle entre les axes optiques du dit dispositif de saisie et du dit moyen de saisie virtuel.

6. Dispositif de traitement d'images mobiles selon la revendication 2 ou la revendication 5, dans lequel le plan de projection est un plan plat passant par l'objet mobile saisi.

7. Dispositif de traitement d'images mobiles selon la revendication 2, dans lequel le plan de projection comprend une surface courbe.

8. Dispositif de traitement d'images mobiles selon la revendication 7, qui comprend un moyen pour transformer l'image d'un objet mobile projeté sur une surface courbe en une image sur un plan plat.

9. Dispositif de traitement d'images mobiles selon la revendication 2, dans lequel le plan de projection est une surface pleine prédéfinie dans l'espace tridimensionnel dans lequel l'objet mobile saisi se déplace.

**10.** Dispositif de traitement d'images mobiles selon la revendication 2, dans lequel le dit moyen de mise en forme d'images comprend:

un moyen (161, 162) d'enregistrement d'images d'arrière-plan qui enregistre l'image d'arrière-plan en même temps que les données tridimensionnelles respectives, séparément par rapport au dit objet mobile, et un moyen de composition d'arrière-plan qui génère l'image d'arrière-plan qui dépend des paramètres spatiaux ou de base temporelle du dit moyen de saisie virtuel sur base de la dite image d'arrière-plan, et effectue une composition avec l'image de l'objet mobile équivalant à l'image saisie par le dit moyen de saisie virtuel.

**11.** Dispositif de traitement d'images mobiles selon la revendication 10, dans lequel:

le moyen d'enregistrement d'images d'arrière-plan comprend un moyen pour enregistrer la trace d'objets mobiles en tant qu'image d'arrière-plan, et le moyen de composition d'arrière-plan comprend un moyen pour composer cette trace enregistrée avec l'image mobile d'autres objets mobiles en tant qu'image d'arrière-plan d'autres objets mobiles.

**12.** Dispositif de traitement d'images mobiles selon la revendication 10, dans lequel:

le moyen d'enregistrement d'images d'arrière-plan comprend un moyen pour enregistrer l'image d'un objet mobile à un certain instant en tant qu'image d'arrière-plan, et le moyen de composition d'arrière-plan comprend un moyen pour composer cette image enregistrée à un certain instant avec l'image du dit objet mobile en tant qu'image d'arrière-plan d'autres objets mobiles.

**13.** Dispositif de traitement d'images mobiles selon la revendication 3, dans lequel:

chaque dispositif de saisie saisit des images bidimensionnelles d'objets mobiles respectifs, et dans lequel le dit moyen de mise ne forme d'images comprend un moyen pour composer l'image des objets mobiles saisis sur base de la relation de position lorsqu'ils sont vus depuis la position du dit moyen de saisie virtuel.

**14.** Dispositif de traitement d'images mobiles selon la revendication 13, dans lequel:

le moyen de composition basé sur la relation de position délivre:
un tableau qui spécifie la relation de position des objets visés par le dit moyen de saisie virtuel dans une unité d'image, et
un moyen pour délivrer l'image à l'avant-plan et pour masquer l'image à l'arrière-plan par référence à ce tableau.

**15.** Dispositif de traitement d'images mobiles selon la revendication 13 ou la revendication 14, dans lequel:
le moyen de mise en forme d'images comprend un moyen pour extraire un objet mobile, qui est l'objet de la saisie, de l'arrière-plan de l'image saisie par le moyen de saisie.

**16.** Dispositif de traitement d'images mobiles selon la revendication 3, dans lequel:
chaque dispositif de saisie saisit des images bidimensionnelles respectives du même objet mobile, et dans lequel le dit moyen de transformation primaire comprend un moyen pour sélectionner les images bidimensionnelles respectives délivrées par l'un des dispositifs de saisie, qui conviennent le mieux pour le dit moyen de saisie virtuel, et transforme les images bidimensionnelles respectives tout en changeant l'image délivrée par le moyen de saisie sur base du changement des conditions de saisie.

**17.** Dispositif de traitement d'images mobiles selon la revendication 16, qui sélectionne les images des dispositifs de saisie respectifs qui sont dans les conditions de saisie les plus proches des conditions du moyen de saisie virtuel.

**18.** Dispositif de traitement d'images mobiles selon la revendication 16 ou la revendication 17, qui comprend un moyen pour passer de l'une à l'autre des images bidimensionnelles délivrées par les dispositifs de saisie respectifs sur base de l'angle formé par l'axe optique du moyen de saisie virtuel avec l'objet mobile.

**19.** Dispositif de traitement d'images mobiles selon l'une quelconque des revendications 16 à 18, qui saisit à l'aide d'un des dits dispositifs de saisie un certain espace dans lequel l'objet mobile visé saisi existe, et qui utilise au moins une image d'un dispositif de saisie respectif saisissant l'espace dans lequel l'objet mobile existe, même s'il se trouve à un emplacement distant de la position du moyen de saisie virtuel.

**20.** Dispositif de traitement d'images mobiles selon la revendication 16 ou la revendication 19, dans lequel une hystérésis est utilisée pour le passage d'une image à une autre.

**21.** Dispositif de traitement d'images mobiles selon la revendication 3, dans lequel le dit moyen de mise en forme d'images comprend:

un moyen pour transformer une image constituant la moyenne d'une pluralité d'images bidimensionnelles délivrées respectivement par la dite pluralité des dits moyens de saisie en tant qu'image sur le plan de projection, pour produire à partir de là une image équivalant à une image qui aurait été saisie par le moyen de saisie virtuel.

**22.** Dispositif de traitement d'images mobiles selon l'une quelconque des revendications précédentes, dans lequel le dit moyen de transformation comprend:

un moyen pour utiliser pour le dit plan de projection un plan plat qui correspond à un plan dans lequel le dit objet mobile se déplace.

**23.** Dispositif de traitement d'images mobiles selon la revendication 22, qui comprend un moyen pour transformer des images exprimées par une carte espace-temps pour de multiples objets mobiles à l'intérieur de l'espace défini par la même carte espace-temps, en une image telle que celle qui aurait été capturée par le dit moyen de saisie virtuel situé dans une position spatiale distante des dits objets mobiles, après avoir déplacé la position spatiale de la dite carte espace-temps.

**24.** Dispositif de traitement d'images mobiles selon la revendication 22 ou la revendication 23, qui comprend un moyen pour transformer de multiples images de carte espace-temps du même objet mobile ou d'objets mobiles séparés saisis en des instants différents, en une image saisie virtuellement, en synchronisant la base de temps et en se positionnant dans la carte espace-temps dans une autre position spatiale.

**25.** Dispositif de traitement d'images mobiles selon la revendication 24, qui comprend un moyen pour saisir ou composer l'image d'arrière-plan d'un objet mobile séparément par rapport à l'objet mobile, et pour composer cette image d'arrière-plan avec l'image transformée correspondant à la transformée de l'image de la carte espace-temps du dit objet mobile.

**26.** Dispositif de traitement d'images mobiles selon la revendication 25, présentant des moyens pour afficher le déplacement d'un objet présentant des caractéristiques de déplacement connues dans une image d'arrière-plan saisie.

**27.** Dispositif de traitement d'images mobiles selon l'une quelconque des revendications 22 à 26, qui comprend un moyen pour composer l'image d'un objet mobile virtuel dont les données de la caractéristique de déplacement sont connues, avec l'image transformée d'un objet mobile saisi.

**28.** Dispositif de traitement d'images mobiles selon l'une quelconque des revendications 22 à 27, dans lequel le dit moyen de transformation comprend un moyen pour transformer l'image d'un objet mobile dans la carte espace-temps en une image qui aurait été capturée en déplaçant une caméra sans à-coups dans une direction.

**29.** Dispositif de traitement d'images mobiles selon la revendication 28,

qui fournit un moyen pour enregistrer des images qui enregistre l'image d'objets mobiles saisis par un moyen de saisie en plus des données spatiales tridimensionnelles des objets mobiles et des données temporelles qui concernent la dite image,
dans lequel le dit moyen de mise en forme d'images comprend un moyen pour traiter et mettre en forme l'image d'objets mobiles saisis.

**30.** Dispositif de traitement d'images mobiles selon la revendication 29, dans lequel le dit moyen de transformation d'image comprend un moyen pour projeter sur le plan de projection une image qui a été saisie sur un intervalle de temps différent d'un intervalle de temps actuel ou une image qui a été lue selon une séquence de lecture inverse pour des images enregistrées dans le moyen d'enregistrement d'images, et pour transformer l'image ainsi projetée en une image telle que celle qui aurait été saisie par le dit moyen de saisie virtuel sur un intervalle de temps ou dans une position spatiale qui diffère de l'intervalle de temps ou de la position spatiale de saisie.

**31.** Dispositif de traitement d'images mobiles selon la revendication 29 ou la revendication 30, dans lequel le dit moyen de transformation comprend un moyen pour transformer une image d'un objet mobile projetée sur le dit plan de projection en une image telle que celle qui aurait été saisie en déplaçant la position spatiale du dit objet mobile.

**32.** Dispositif de traitement d'images mobiles selon la revendication 31, dans lequel au moins l'un parmi le dit moyen de transformation primaire ou le dit moyen de transformation secondaire fournit une mémoire dans laquelle les images saisies de l'objet mobile sont écrites en unités d'une image, et comprend le moyen pour effectuer une transformation de coordonnées par lecture des données d'image dans la dite mémoire en utilisant une adresse de lecture qui fournit les coordonnées de position du moyen de saisie, les coordonnées de position du plan de projection et les coordonnées de position du moyen de saisie virtuel.

Fig. 1

Fig. 2

Fig. 3

Fig. 4

Fig. 5

Fig. 6

Fig. 7

the space where the
field of view is
intersecting

R2

R1

virtual field
of head 2
camera

head 1

head 2

Fig. 8a

Fig. 8b

a plane perpendicular to the
optical axis

the main position on the
target object

capturing camera

virtual camera

Fig. 9a

capturing camera

virtual camera

Fig. 9b

transformation plane

capturing camera

virtual camera

(a)The transformation plane which is parallel to
the half degree made by the two cameras

Fig. 10a

(b)The transformation plane which is perpendicular to
the half degree made by the two cameras

Fig. 10b

Fig. 11

displaying with two athletes overlapped

Fig. 12

Fig. 13

Fig. 14

Fig. 15

Fig. 16

head 1    A

head 2    B

head 3    C

181   182   183   A′

181   182   183   B′

181   182   183   C′

Fig. 17

background C head 3 B head 2 A head 1

virtual camera's location

Fig. 18

181 182

183

Fig. 19

input          output

| head 1 | head 2 | head 3 | selector | output image |
|:---:|:---:|:---:|:---:|:---:|
| 0 | 0 | 0 | 0 | background |
| 1 | 0 | 0 | 1 | player A |
| 0 | 1 | 0 | 2 | player B |
| 1 | 1 | 0 | 1 | player A |
| 0 | 0 | 1 | 3 | player C |
| 1 | 0 | 1 | 1 | player A |
| 0 | 1 | 1 | 2 | player B |
| 1 | 1 | 1 | 1 | player A |

priority table

# Fig. 20

curved surface along
the track

Fig. 21

Fig. 22

goal

starting line

starting line

Fig. 23

Fig. 24

goal

start

VC′

H2

VC

H1

# Fig. 25a

VC′

VC

goal

start

H1

H2

# Fig. 25b

Fig. 26

Fig. 27a

Fig. 27b

virtual camera

## Fig. 28a

area A    area B

## Fig. 28b

201     moving image    202     moving image    203

```
camera head  →  data          →  moving image
                 recording         editing
                 segment           segment     →  moving image
```

three-dimensional data     three-dimensional data

time base
unit    204

stopwatch    205

# Fig. 29

camera head
201

cam2                                      cam1

207

206

Recording the image with the three – dimensional information

Fig. 30

the space which has the image of cam 1

the space which has the
image of cam 2

Z

X

time − space map (for one field)

## Fig. 31

P (u, v)

u

v

P (x, z)

X

Z

## Fig. 32

Fig. 33

EP 0 669 758 B1

cutting and pasting the space

Z

X

imaginary camera's output range

Fig. 34

image of cam 1

image of cam 2

222

imaginary camera's image

221

Fig. 35

range of the image at a
time on the first day

range of the image at a
time on the second day

Z

X

T

time — space map

period for
one time

Fig. 36

cutting and pasting
of spaces between
different times

Z

T

X

the first day

the second day

Fig. 37

Fig. 38

camera 1
the position of image at +12mS

camera 2
predicted position at +12mS
( using the image at +4mS )

camera 2 the position at ⊢20.7mS

camera 2 the position at + 4mS

Fig. 39

EP 0 669 758 B1

recording before and after a turn

# Fig. 40

image before a turn

direction of movement

starting position

turning position

image after a turn

direction of movement

a reference position

image before a turn

direction of movement

image after a turn

direction of movement

reverse image

# Fig. 41

image before
a turn

image after
a turn

Fig. 42

Fig. 43

Fig. 44

Fig. 45

image of object 1

map of object 1

map of object 2

image of object 2

map of background

## Fig. 46

object 1

map of object 1

field of view of
the camera 1

## Fig. 47

map of camera 1

map of background

only the difference is left

camera-background

Fig. 48

blurring of an ellipse

blurring of an rectangle

Fig. 49

Fig. 50

Fig. 51

Fig. 52

Fig. 53

Fig. 54

Fig. 55

Fig. 56

Fig. 57

EP 0 669 758 B1

Fig. 58

Fig. 59

Fig. 60

Fig. 61

Fig. 62

Fig. 63

Fig. 64

Fig. 65

Fig. 66

433

431

432

Fig. 67

Fig. 68

Fig. 69

Fig. 70

Fig. 71

Fig. 72

z

y

x

481

482

Fig. 73

491

492

Fig. 74

Fig. 75

Fig. 76

Fig. 77

Stereoscopic goggle

Stereoscopic image

Fig. 78

Fig. 79

Fig. 80

rotation axis
of the display
device

Fig. 81

Fig. 82